# EUROPEAN PATENT APPLICATION

(11) **EP 4 583 144 A1**
(43) Date of publication of application: **09.07.2025**
(21) Application number: 23860196.7
(22) Date of filing: 25.08.2023
(51) Int. Cl.: H01H 85/055, H01H 37/76, H01H 85/06, H01H 85/10, H01H 85/12, H01H 85/147, H01H 85/165

(54) **PROTECTIVE ELEMENT**

(30) Priority: 02.09.2022 JP 2022140084; 02.02.2023 JP 2023014676; 25.05.2023 JP 2023086179
(71) Applicant: Dexerials Corporation, Shimotsuke-shi, Tochigi 323-0194 (JP)
(72) Inventor: WADA, Yutaka, Shimotsuke-shi, Tochigi 323-0194 (JP); YONEDA, Yoshihiro, Shimotsuke-shi, Tochigi 323-0194 (JP); SAITO, Manabu, Shimotsuke-shi, Tochigi 323-0194 (JP)
(74) Representative: Lavoix
(86) International application number: PCT/JP2023/030660
(87) International publication number: WO 2024/048434

(57) **Abstract**

This protective element includes a first terminal and a second terminal arranged apart from each other in a front-and-rear direction, a fuse element arranged between the first terminal and the second terminal to electrically connect the first terminal and the second terminal and configured to fuse when a predetermined electric current or more flows therethrough, an insulation member arranged to face the fuse element from both sides in an up-and-down direction orthogonal to the front-and-rear direction, a heat generation element arranged to overlap the fuse element in the up-and-down direction, a power supply member configured to supply the electric current to the heat generation element, and an insulation case configured to house a part of the first terminal, a part of the second terminal, the fuse element, the insulation member, the heat generation element, and a part of the power supply member. The heat generation element generates heat by receiving the electric current from the power supply member and melts and fuses at least a part of the fuse element.

## Description

### TECHNICAL FIELD

The present invention relates to a protective element.

Priority is claimed on Japanese Patent Application No. 2022-140084, filed September 2, 2022, Japanese Patent Application No. 2023-014676, filed February 2, 2023, and Japanese Patent Application No. 2023-086179, filed May 25, 2023, the content of which is incorporated herein by reference.

### BACKGROUND ART

Conventionally, a fuse element fusing due to heat generation to cut off an electric current path when an electric current, which exceeds a rated current, flows through the electric current path is known (e.g., Patent Document 1). Protective elements (fuse devices) including fuse elements are used in a wide range of fields from home appliances to electric vehicles.

For example, lithium-ion batteries are used in a wide range of applications, from mobile devices to electric vehicles (EVs), storage batteries, and the like and their capacity is increasing. When the capacity of lithium-ion batteries increases, high-voltage specifications of several hundred volts and large-current specifications of several hundred amperes to several thousand amperes are required.

### Citation List

### Patent Document

Patent Document 1: Japanese Patent No. 6057413

### SUMMARY OF INVENTION

### Technical Problem

In a protective element installed on an electric current path of a high voltage and a large current, when a fuse element fuses, an arc discharge is likely to occur. When a large-scale arc discharge occurs, an insulation case in which the fuse element is housed may be destroyed.

Moreover, conventional electric current fuses for a high voltage and large current (100 V/100 A or more) are only capable of cutting off an overcurrent. Any conventional electric current fuse cannot simultaneously provide an overcurrent cutoff function and a cutoff function according to a cutoff signal.

An objective of the present invention is to provide a protective element that can suppress the occurrence of a large-scale arc discharge when a fuse element fuses and that achieves both an overcurrent cutoff function and a cutoff function according to a cutoff signal.

### Solution to Problem

The present invention provides the following means to solve the above-described problems.

### [Aspect 1 of present invention]

A protective element including: a first terminal and a second terminal arranged apart from each other in a front-and-rear direction; a fuse element arranged between the first terminal and the second terminal to electrically connect the first terminal and the second terminal and configured to fuse when a predetermined electric current or more flows therethrough; an insulation member arranged to face the fuse element from both sides in an up-and-down direction orthogonal to the front-and-rear direction; a heat generation element arranged to overlap the fuse element in the up-and-down direction; a power supply member configured to supply the electric current to the heat generation element; and an insulation case configured to house a part of the first terminal, a part of the second terminal, the fuse element, the insulation member, the heat generation element, and a part of the power supply member, wherein the heat generation element generates heat by receiving the electric current from the power supply member and melts and fuses at least a part of the fuse element.

### [Aspect 2 of present invention]

The protective element according to aspect 1, wherein the fuse element includes a fusible conductor laminated with the heat generation element; and a metallic conductor configured to connect the first terminal or the second terminal and the fusible conductor, and wherein the fusible conductor has a lower melting temperature than the metallic conductor.

### [Aspect 3 of present invention]

The protective element according to aspect 2, wherein the fusible conductor has a higher electrical resistivity than the metallic conductor.

### [Aspect 4 of present invention]

The protective element according to aspect 2, wherein the metallic conductor includes a cutoff part having a higher electrical resistance than the fusible conductor.

### [Aspect 5 of present invention]

The protective element according to aspect 4, wherein a cross-sectional area of a cross-section of the cutoff part perpendicular to a current-carrying direction in which the electric current flows is smaller than a cross-sectional area of a part of the metallic conductor excluding the cutoff part.

### [Aspect 6 of present invention]

The protective element according to any one of aspects 2 to 5, wherein the fusible conductor is composed of a monolayer body of a low-melting-point metallic layer containing Sn.

### [Aspect 7 of present invention]

The protective element according to any one of aspects 2 to 5, wherein the fusible conductor has a laminate in which a low-melting-point metallic layer containing Sn and a high-melting-point metallic layer containing Ag or Cu are laminated.

### [Aspect 8 of present invention]

The protective element according to aspect 7, wherein the laminate has one or more low-melting-point metallic layers and two or more high-melting-point metallic layers, and wherein the low-melting-point metallic layer is arranged between the high-melting-point metallic layers.

### [Aspect 9 of present invention]

The protective element according to any one of aspects 1 to 8, wherein a dimension between the insulation member and the fuse element in the up-and-down direction is 2 mm or less.

### [Aspect 10 of present invention]

The protective element according to any one of aspects 1 to 9, wherein the insulation member has a concave heat generation element housing part recessed from a surface of the insulation member facing the fuse element, and wherein the heat generation element is arranged in the concave heat generation element housing part.

### [Aspect 11 of present invention]

The protective element according to any one of aspects 2 to 8, wherein the insulation member has a concave conductor-facing recess recessed from a surface of the insulation member facing the fuse element, and wherein at least a part of the fusible conductor melted by heat generated by the heat generation element is arranged in the concave conductor-facing recess.

### [Aspect 12 of present invention]

The protective element according to any one of aspects 1 to 11, wherein the insulation member has a slit recessed from a surface of the insulation member facing the fuse element and penetrating the insulation member or a groove-shaped recess recessed from the surface, and wherein the slit or the recess extends in a direction perpendicular to a current-carrying direction in which the electric current flows through the fuse element.

### [Aspect 13 of present invention]

The protective element according to any one of aspects 1 to 12, wherein at least two insulation members are provided on an upper side and a lower side of the fuse element.

### [Aspect 14 of present invention]

The protective element according to aspect 13, wherein at least one of the insulation members is formed integrally with a part of the insulation case.

### [Aspect 15 of present invention]

The protective element according to any one of aspects 1 to 14, wherein the heat generation element is provided on both sides of the fuse element in the up-and-down direction.

### [Aspect 16 of present invention]

The protective element according to any one of aspects 1 to 15, wherein the insulation case has an internal pressure buffering space formed inside the insulation case and communicating with a space where the fuse element is arranged.

### [Aspect 17 of present invention]

The protective element according to any one of aspects 2 to 8, wherein the heat generation element includes a substrate; a resistive layer laminated on the substrate; and a metallic layer laminated on the substrate and facing the fuse element in the up-and-down direction, and wherein a part of the fusible conductor is arranged in a part of a gap in the up-and-down direction formed between the metallic conductor and the metallic layer and is sandwiched between the metallic conductor and the metallic layer in the up-and-down direction.

### [Aspect 18 of present invention]

The protective element according to aspect 17, wherein a molten material of the fusible conductor melted due to heat generated by the heat generation element flows while penetrating the gap due to capillary action and the fusible conductor fuses.

### [Aspect 19 of present invention]

The protective element according to aspect 17, wherein a plurality of metallic conductors are provided on the fuse element, and each of the plurality of metallic conductors is the metallic conductor, wherein the plurality of metallic conductors include a first metallic conductor configured to connect the first terminal and a first end of the fusible conductor; and a second metallic conductor configured to connect the second terminal and a second end of the fusible conductor, wherein the first metallic conductor, the fusible conductor, and the second metallic conductor are connected in series in that order to form a current-carrying path of the fuse element, wherein a plurality of metallic layers are provided on the heat generation element, and each of the plurality of metallic layers is the metallic layer, wherein the plurality of metallic layers include a first metallic layer arranged with a first gap from the first metallic conductor in the up-and-down direction, and a second metallic layer arranged with a second gap from the second metallic conductor in the up-and-down direction, wherein the first end of the fusible conductor is arranged in a part of the first gap and is sandwiched between the first metallic conductor and the first metallic layer in the up-and-down direction, and wherein the second end of the fusible conductor is arranged in a part of the second gap and is sandwiched between the second metallic conductor and the second metallic layer in the up-and-down direction.

### [Aspect 20 of present invention]

The protective element according to aspect 19, wherein a molten material near the first end of the fusible conductor melted by heat generated by the heat generation element flows while penetrating the first gap by capillary action, a molten material near the second end of the fusible conductor flows while penetrating the second gap by capillary action, and the fusible conductor fuses.

### [Aspect 21 of present invention]

The protective element according to any one of aspects 17 to 20, wherein the metallic layer is arranged on one of a pair of plate surfaces of the substrate, and wherein the resistive layer is arranged on the other of the pair of plate surfaces.

### [Aspect 22 of present invention]

The protective element according to aspect 19 or 20, wherein the plurality of metallic layers further include an intermediate metallic layer arranged between the first metallic layer and the second metallic layer, and wherein an intermediate part of the fusible conductor located between the first end and the second end is connected to the intermediate metallic layer.

### [Aspect 23 of present invention]

The protective element according to any one of aspects 17 to 22, wherein the metallic layer, the fusible conductor, and the metallic conductor are connected to each other by solder.

### [Aspect 24 of present invention]

The protective element according to any one of aspects 2 to 8, wherein at least a part of the fusible conductor, or at least a part of the fusible conductor and at least a part of the metallic conductor fuse, when the electric current equal to or greater than a predetermined value flows through the fuse element.

### [Aspect 25 of present invention]

The protective element according to any one of aspects 1 to 24, wherein the fuse element includes a first bent part arranged between the first terminal and the insulation member in the front-and-rear direction; and a second bent part arranged between the second terminal and the insulation member in the front-and-rear direction, wherein a distance between the first terminal and the first bent part in the front-and-rear direction is greater than a thickness dimension of the first terminal in the up-and-down direction, and wherein a distance between the second terminal and the second bent part in the front-and-rear direction is greater than a thickness dimension of the second terminal in the up-and-down direction.

### [Aspect 26 of present invention]

The protective element according to aspect 25, wherein at least one of the first bent part and the second bent part has a crank shape.

### [Aspect 27 of present invention]

The protective element according to any one of aspects 1 to 26, wherein the insulation case includes at least two holding members arranged on both sides of the fuse element in the up-and-down direction, and wherein a part of the first terminal, a part of the second terminal, and the fuse element are arranged between the two holding members.

### [Aspect 28 of present invention]

The protective element according to aspect 27, wherein one or both of the two holding members are formed integrally with the insulation member.

### [Aspect 29 of present invention]

The protective element according to aspect 27 of 28, wherein the insulation case has a cover configured to house at least the two holding members, and wherein the cover holds at least the two holding members in a fixed state.

### [Aspect 30 of present invention]

The protective element according to any one of aspects 1 to 29, wherein the insulation member is made of a resin having a tracking resistance index (CTI) of 500 V or more.

### [Aspect 31 of present invention]

The protective element according to aspect 30, wherein the insulation member is made of a polyamide-based resin material or a fluorine-based resin material.

### [Aspect 32 of present invention]

The protective element according to aspect 1, wherein the fuse element is made of Cu or Ag or contains Cu or Ag as a main component.

### [Aspect 33 of present invention]

The protective element according to any one of aspects 2 to 8, wherein the fusible conductor is a laminate including a low-melting-point metallic layer and a high-melting-point metallic layer, wherein a pair of metallic conductors are connected to both ends of the fusible conductor in a current-carrying direction in which the electric current flows through the fuse element, and wherein each of the metallic conductors is made of Cu or Ag or contains Cu or Ag as a main component.

### [Aspect 34 of present invention]

The protective element according to aspect 33, wherein the low-melting-point metallic layer is made of Sn or contains Sn as a main component, and wherein the high-melting-point metallic layer is made of Cu or Ag or contains Cu or Ag as a main component.

### [Aspect 35 of present invention]

The protective element according to aspect 1, wherein the fuse element includes a fusible conductor laminated with the heat generation element; and a cutoff part having a higher electrical resistance than the fusible conductor.

### [Aspect 36 of present invention]

The protective element according to any one of aspects 1 to 35, wherein the heat generation element includes a substrate; a resistive layer laminated on the substrate; and a metallic layer laminated on the substrate and facing a part of the fuse element, and wherein the resistive layer extends in a direction intersecting a current-carrying direction in which the electric current flows through the fuse element and is arranged on a part of the substrate in the front-and-rear direction.

### [Aspect 37 of present invention]

The protective element according to aspect 36, wherein the resistive layer is arranged on an end of the substrate in the front-and-rear direction.

### [Aspect 38 of present invention]

The protective element according to aspect 36 or 37, wherein a dimension of the resistive layer in the front-and-rear direction is equal to or less than half a dimension of the substrate in the front-and-rear direction.

### [Aspect 39 of present invention]

The protective element according to any one of aspects 36 to 38, wherein a plurality of resistive layers are provided on the substrate at intervals from each other in the front-and-rear direction, and each of the plurality of resistive layers is the resistive layer.

### [Aspect 40 of present invention]

The protective element according to any one of aspects 36 to 39, wherein the heat generation element has a holding metallic layer laminated on the substrate and facing a fuse element side in the up-and-down direction, wherein the metallic layer extends in a direction intersecting the current-carrying direction on the substrate, and wherein the holding metallic layer is connected to an end of the metallic layer in a direction intersecting the current-carrying direction and is capable of holding the molten material of the fuse element.

### [Aspect 41 of present invention]

The protective element according to aspect 40, wherein the insulation member facing the fuse element from a lower side has a housing recess capable of housing a molten material of the fuse element held by the holding metallic layer.

### [Aspect 42 of present invention]

The protective element according to aspect 40 or 41, wherein a plurality of metallic layers are provided on the substrate at intervals from each other in the front-and-rear direction, and each of the plurality of metallic layers is the metallic layer, wherein the plurality of metallic layers include a first metallic layer arranged on one end of the substrate in the front-and-rear direction; and a second metallic layer arranged on the other end of the substrate in the front-and-rear direction, and wherein the holding metallic layer is connected to the first metallic layer or the second metallic layer.

### [Aspect 43 of present invention]

The protective element according to aspect 40 or 41, wherein a plurality of metallic layers are provided on the substrate at intervals from each other in the front-and-rear direction, and each of the plurality of metallic layers is the metallic layer, wherein the plurality of metallic layers include a first metallic layer arranged on one end of the substrate in the front-and-rear direction; a second metallic layer arranged on the other end of the substrate in the front-and-rear direction; and an intermediate metallic layer arranged between the first metallic layer and the second metallic layer in the front-and-rear direction, and wherein the holding metallic layer is connected to any one of the intermediate metallic layer, the first metallic layer, and the second metallic layer.

### [Aspect 44 of present invention]

The protective element according to aspect 43, wherein the intermediate metallic layer, the first metallic layer, and the second metallic layer are electrically isolated from the resistive layer.

### [Aspect 45 of present invention]

A protective element including: an insulation substrate having a resistive layer; a fusible conductor mounted on the insulation substrate; a first electrode and a second electrode connected to the resistive layer; a third electrode arranged on the insulation substrate; a fifth electrode connected between the first electrode and the third electrode; and a first metal formed on the third electrode and the fifth electrode, wherein a thickness of the fifth electrode is thinner than a thickness of the third electrode, and wherein the fusible conductor is cut off due to heat generated by the resistive layer and a resistance value between the third electrode and the second electrode increases by 10 times or more due to dissolution of the fifth electrode caused by melting of the first metal.

### [Aspect 46 of present invention]

A protective element including: an insulation substrate having a resistive layer; a fusible conductor mounted on the insulation substrate; a first electrode and a second electrode connected to the resistive layer; a third electrode and a fourth electrode arranged on the insulation substrate; a fifth electrode connected between the first electrode and the third electrode; a sixth electrode connected between the second electrode and the fourth electrode; a first metal formed on the third electrode and the fifth electrode; and a second metal formed on the fourth electrode and the sixth electrode, wherein a thickness of the fifth electrode is thinner than a thickness of the third electrode, wherein a thickness of the sixth electrode is thinner than a thickness of the fourth electrode, and wherein the fusible conductor is cut off due to heat generated by the resistive layer and a resistance value between the third electrode and the fourth electrode increases by 10 times or more due to at least one of dissolution of the fifth electrode caused by melting of the first metal and dissolution of the sixth electrode caused by melting of the second metal.

### [Aspect 47 of present invention]

The protective element according to aspect 45 or 46, wherein the first metal is tin or an alloy containing tin as a main component, and wherein the fifth electrode is a metal made of silver or copper or an alloy containing silver or copper as a main component.

### [Aspect 48 of present invention]

The protective element according to aspect 46, wherein a current-carrying member for the resistive layer is connected to the third electrode and the fourth electrode.

### [Aspect 49 of present invention]

A protective element including: a first terminal and a second terminal arranged apart from each other in a first direction; a fuse element arranged between the first terminal and the second terminal to electrically connect the first terminal and the second terminal and configured to fuse when a predetermined electric current or more flows; an insulation member arranged to face the fuse element from both sides in a second direction perpendicular to the first direction; an insulation case configured to house a part of the first terminal, a part of the second terminal, the fuse element, and the insulation member, wherein an internal pressure buffering space communicating with a space where the fuse element is arranged is formed inside the insulation case; and a filler arranged in at least a part of the internal pressure buffering space and configured to be in contact with a surface of at least one insulation member opposite a surface facing the fuse element.

### [Aspect 50 of present invention]

The protective element according to aspect 49, further including a heat generation element arranged to overlap the fuse element in the second direction.

### [Aspect 51 of present invention]

The protective element according to aspect 50, wherein the fuse element includes a fusible conductor laminated with the heat generation element; and a metallic conductor configured to connect the first terminal or the second terminal and the fusible conductor, and wherein the fusible conductor has a lower melting temperature than the metallic conductor.

### [Aspect 52 of present invention]

The protective element according to any one of aspects 49 to 51, further including: a heat generation element arranged to overlap the fuse element in the second direction; and a power supply member configured to supply an electric current to the heat generation element, wherein the insulation case houses a part of the power supply member and the heat generation element.

### [Aspect 53 of present invention]

The protective element according to aspect 52, wherein the heat generation element generates heat by receiving the electric current from the power supply member and melts and fuses at least a part of the fuse element.

### [Aspect 54 of present invention]

The protective element according to any one of aspects 49 to 53, wherein a through hole penetrating the insulation member in the second direction is formed in the insulation member, and wherein the filler penetrating the through hole is in contact with a part of the fuse element.

### [Aspect 55 of present invention]

A protective element including: a first terminal and a second terminal arranged apart from each other in a first direction; a fuse element arranged between the first terminal and the second terminal to electrically connect the first terminal and the second terminal and configured to fuse when a predetermined electric current or more flows; an insulation member arranged to face the fuse element from both sides in a second direction perpendicular to the first direction; an insulation case configured to house a part of the first terminal, a part of the second terminal, the fuse element, and the insulation member, wherein an internal pressure buffering space communicating with a space where the fuse element is arranged is formed inside the insulation case; and a filter arranged in at least a part of the internal pressure buffering space and configured to be in contact with a surface of at least one insulation member opposite a surface facing the fuse element.

### [Aspect 56 of present invention]

The protective element according to aspect 55, wherein the filter is made of a fiber material.

### [Aspect 57 of present invention]

The protective element according to aspect 55 of 56, wherein the filter is prevented from being in close contact with the fuse element.

### [Aspect 58 of present invention]

The protective element according to any one of aspects 55 to 57, wherein the fuse element is a fusible conductor and has a lower melting point than the first terminal and the second terminal.

### [Aspect 59 of present invention]

The protective element according to aspect 58, wherein the fusible conductor is a laminate including a low-melting-point metallic layer and a high-melting-point metallic layer.

### [Aspect 60 of present invention]

The protective element according to aspect 59, wherein the low-melting-point metallic layer is made of Sn or contains Sn as a main component, and wherein the high-melting-point metallic layer is made of Ag or Cu or contains Ag or Cu as a main component.

### [Aspect 61 of present invention]

The protective element according to any one of aspects 58 to 60, further including a metallic conductor configured to connect the first terminal or the second terminal and the fusible conductor, wherein a melting point of the metallic conductor is higher than a melting point of the fuse element.

### [Aspect 62 of present invention]

The protective element according to any one of aspects 58 to 61, wherein the fuse element has the fusible conductor laminated with a heat generation element.

### [Aspect 63 of present invention]

The protective element according to aspect 62, wherein the heat generation element generates heat by receiving the electric current from a power supply member, melts at least a part of the fuse element, and fuses the fuse element.

### [Aspect 64 of present invention]

A protective element including: a first terminal and a second terminal arranged apart from each other in a first direction; a fuse element arranged between the first terminal and the second terminal to electrically connect the first terminal and the second terminal and configured to fuse when a predetermined electric current or more flows; an insulation member arranged to face the fuse element from both sides in a second direction perpendicular to the first direction; and an insulation case configured to house a part of the first terminal, a part of the second terminal, the fuse element, and the insulation member, wherein an internal pressure buffering space communicating with a space where the fuse element is arranged is formed inside the insulation case, wherein at least one of the insulation member and the insulation case has a carbon material content of less than 0.1 wt%.

### [Aspect 65 of present invention]

The protective element according to aspect 64, wherein at least one of the insulation member and the insulation case has a glass fiber content of 10 wt% or more.

### [Aspect 66 of present invention]

A fuse element including: a first conductive material; and a second conductive material formed of a material different from that of the first conductive material, wherein the first conductive material and the second conductive material are connected in series to each other in a current-carrying direction, wherein the first conductive material has a higher electrical resistance than the second conductive material in the current-carrying direction, wherein, when viewed in a thickness direction perpendicular to the current-carrying direction, an overlapping part is provided in a part in which the first conductive material and the second conductive material are connected to each other, wherein the first conductive material has a shorter length in a width direction perpendicular to the current-carrying direction and the thickness direction in the overlapping part than the second conductive material, wherein the second conductive material has at least one corner on an outer side of the overlapping part in the width direction, and wherein, when viewed in the thickness direction, at least the one corner has an angle of 100° or less.

### [Aspect 67 of present invention]

The fuse element according to aspect 66, wherein each of the first conductive material and the second conductive material has a plate shape.

### [Aspect 68 of present invention]

The fuse element according to aspect 66 or 67, wherein a plurality of first conductive materials are arranged side by side in a width direction.

### [Aspect 69 of present invention]

The fuse element according to any one of aspects 66 to 68, further including a third conductive material, wherein the third conductive material, the first conductive material, and the second conductive material are connected in series in the current-carrying direction in that order.

### [Aspect 70 of present invention]

The fuse element according to aspect 69, wherein the third conductive material is formed of the same material as the second conductive material.

### [Aspect 71 of present invention]

The fuse element according to any one of aspects 66 to 70, wherein the first conductive material is a laminate including a low-melting-point metallic layer and a high-melting-point metallic layer.

### [Aspect 72 of present invention]

A protective element including: a first conductive material; and a second conductive material formed of a material different from that of the first conductive material, wherein the first conductive material and the second conductive material are connected in series to each other in a current-carrying direction, wherein the first conductive material has a higher electrical resistance than the second conductive material in the current-carrying direction, wherein, when viewed in a thickness direction perpendicular to the current-carrying direction, an overlapping part is provided in a part in which the first conductive material and the second conductive material are connected to each other, wherein the first conductive material has a shorter length in a width direction perpendicular to the current-carrying direction and the thickness direction in the overlapping part than the second conductive material, wherein the second conductive material has at least one corner on an outer side of the overlapping part in the width direction, and wherein, when viewed in the thickness direction, at least the one corner has an angle of 100° or less.

### [Aspect 73 of present invention]

A protective element according to aspect 72, wherein each of the first conductive material and the second conductive material has a plate shape.

### [Aspect 74 of present invention]

The protective element according to aspect 72 or 73, wherein a plurality of first conductive materials are arranged in the width direction.

### [Aspect 75 of present invention]

The protective element according to any one of aspects 72 to 74, further including a third conductive material, wherein the third conductive material, the first conductive material, and the second conductive material are connected in series in the current-carrying direction in that order.

### [Aspect 76 of present invention]

The protective element according to aspect 75, wherein the third conductive material is formed of the same material as the second conductive material.

### [Aspect 77 of present invention]

The protective element according to any one of aspects 72 to 76, wherein the first conductive material is a laminate including a low-melting-point metallic layer and a high-melting-point metallic layer.

### Advantageous Effects of Invention

According to the above aspect of the present invention, it is possible to provide a protective element that can suppress the occurrence of a large-scale arc discharge when a fuse element fuses and that can achieve both an overcurrent cutoff function and a cutoff function according to a cutoff signal.

### BRIEF DESCRIPTION OF DRAWINGS

[FIG. 1] FIG. 1 is a perspective view (cross-sectional perspective view) showing the appearance and cross-section of a protective element of the present embodiment.
[FIG. 2] FIG. 2 is an exploded perspective view showing the protective element of the present embodiment.
[FIG. 3] FIG. 3 is an exploded perspective view showing a part of the protective element of FIG. 2.
[FIG. 4] FIG. 4 is a cross-sectional view showing an enlarged view of an area near part IV of FIG. 1.
[FIG. 5] FIG. 5 is a cross-sectional view showing an enlarged view of part V of FIG. 4.
[FIG. 6A] FIG. 6A is a perspective view showing a heat generation element.
[FIG. 6B] FIG. 6B is a top view showing an example of the heat generation element.
[FIG. 6C] FIG. 6C is a top view showing another example of the heat generation element.
[FIG. 7] FIG. 7 is a cross-sectional view corresponding to FIG. 5 and showing a state in which a part of the fuse element has fused due to heat generated by the heat generation element according to a cutoff signal.
[FIG. 8] FIG. 8 is a cross-sectional view corresponding to FIG. 5 and showing a state in which a part of the fuse element has fused (or has been lost) due to an overcurrent.
[FIG. 9] FIG. 9 is a perspective view (a cross-sectional perspective view) showing an appearance and cross-section of a protective element of a first modified example of the present embodiment.
[FIG. 10] FIG. 10 is a perspective view (a cross-sectional perspective view) showing an appearance and cross-section of a protective element of a second modified example of the present embodiment.
[FIG. 11] FIG. 11 is a cross-sectional view showing a part of a protective element of a third modified example of the present embodiment.
[FIG. 12] FIG. 12 is a cross-sectional view showing a part of a protective element of a fourth modified example of the present embodiment.
[FIG. 13] FIG. 13 is a cross-sectional view showing a part of a protective element of a fourth modified example of the present embodiment and showing a state in which a part of a fuse element has fused.
[FIG. 14] FIG. 14 is a cross-sectional view showing a part of a protective element of a fifth modified example of the present embodiment.
[FIG. 15] FIG. 15 is a top view showing a part (a fuse element) of a protective element of a sixth modified example of the present embodiment.
[FIG. 16] FIG. 16 is a top view showing a part (a fuse element) of a protective element of a seventh modified example of the present embodiment.
[FIG. 17] FIG. 17 is a cross-sectional view showing a part of a protective element of an eighth modified example of the present embodiment.
[FIG. 18] FIG. 18 is a top view showing a part (a heat generation element) of a protective element of a ninth modified example of the present embodiment.
[FIG. 19] FIG. 19 is a top view showing a part (a heat generation element) of a protective element of a tenth modified example of the present embodiment.
[FIG. 20] FIG. 20 is a perspective view showing a part (a heat generation element) of a protective element of an eleventh modified example of the present embodiment.
[FIG. 21] FIG. 21 is a perspective view showing a part (a heat generation element) of a protective element of a twelfth modified example of the present embodiment.
[FIG. 22] FIG. 22 is a perspective view showing a part (a heat generation element) of a protective element of a thirteenth modified example of the present embodiment.
[FIG. 23] FIG. 23 is a cross-sectional view showing a part of a protective element of a fourteenth modified example of the present embodiment.
[FIG. 24] FIG. 24 is a top view showing an example of a heat generation element of a second embodiment.
[FIG. 25] FIG. 25 is a top view showing another example of a heat generation element of the second embodiment.
[FIG. 26] FIG. 26 is a side view of an insulation substrate before a current-carrying member is connected according to the second embodiment.
[FIG. 27] FIG. 27 is a side view of the insulation substrate before a current-carrying process after the current-carrying member is connected according to the second embodiment.
[FIG. 28] FIG. 28 is a side view of the insulation substrate showing a state in which a part of the fuse element has fused after the current-carrying process according to the second embodiment.
[FIG. 29] FIG. 29 is a side view of the insulation substrate showing a state in which a part of an electrode of the heat generation element has fused according to the second embodiment.
[FIG. 30] FIG. 30 is a perspective view of the insulation substrate before a current-carrying member is connected (wherein an insulation layer is indicated by a two-dot chain line) according to the second embodiment.
[FIG. 31] FIG. 31 is a perspective view of the insulation substrate before the current-carrying member is connected (wherein an insulation layer is indicated by a solid line) according to the second embodiment.
[FIG. 32] FIG. 32 is a perspective view of the insulation substrate after the current-carrying member is connected according to the second embodiment.
[FIG. 33] FIG. 33 is a perspective view of the insulation substrate showing a state in which a part of the electrode of the heat generation element has fused according to the second embodiment.
[FIG. 34] FIG. 34 is a perspective view of an insulation substrate before the current-carrying member is connected (wherein the insulation layer is indicated by a two-dot chain line) according to a modified example of the second embodiment.
[FIG. 35] FIG. 35 is a perspective view of an insulation substrate before a current-carrying member is connected (wherein an insulation layer is indicated by a solid line) according to a modified example of the second embodiment.
[FIG. 36] FIG. 36 is a cross-sectional view showing an example of a filler according to a third embodiment.
[FIG. 37] FIG. 37 is a cross-sectional view showing an example of an arrangement of fillers according to the third embodiment.
[FIG. 38] FIG. 38 is a cross-sectional view showing another example of the filler according to the third embodiment.
[FIG. 39] FIG. 39 is a cross-sectional view showing another example of the filler according to the third embodiment.
[FIG. 40] FIG. 40 is a cross-sectional view showing another example of the filler according to the third embodiment.
[FIG. 41] FIG. 41 is a cross-sectional view showing an example of a filter according to a fourth embodiment.
[FIG. 42] FIG. 42 is a cross-sectional view showing an example of an arrangement of filters according to the fourth embodiment.
[FIG. 43] FIG. 43 is a perspective view (a cross-sectional perspective view) showing an appearance and cross-section of a protective element according to a fifth embodiment.
[FIG. 44] FIG. 44 is a side view of an insulation member before a cutoff due to an overcurrent according to the fifth embodiment.
[FIG. 45] FIG. 45 is a side view of an insulation member showing a state in which a part of an insulation member has melted after a cutoff due to an overcurrent according to the fifth embodiment.
[FIG. 46] FIG. 46 is a top view showing a part (a fuse element) of a protective element of a sixth embodiment.
[FIG. 47] FIG. 47 is a side view showing the part (the fuse element) of the protective element of the sixth embodiment.
[FIG. 48] FIG. 48 is a top view showing an example of the part (the fuse element) of the protective element of the sixth embodiment.
[FIG. 49] FIG. 49 is a top view showing another example of the part (the fuse element) of the protective element of the sixth embodiment.
[FIG. 50] FIG. 50 is a top view showing another example of the part (the fuse element) of the protective element of the sixth embodiment.
[FIG. 51] FIG. 51 is a top view showing another example of the part (the fuse element) of the protective element of the sixth embodiment.
[FIG. 52] FIG. 52 is a top view showing another example of the part (the fuse element) of the protective element of the sixth embodiment.
[FIG. 53] FIG. 53 is a top view showing another example of the part (the fuse element) of the protective element of the sixth embodiment.
[FIG. 54] FIG. 54 is a top view showing a part (a fuse element) of a protective element of a comparative example.
[FIG. 55] FIG. 55 is a diagram showing results of a high-voltage/large-current cutoff test of the protective element of the comparative example.
[FIG. 56] FIG. 56 is a diagram showing results of a high-voltage/large-current cutoff test of a protective element of Inventive Example 1.
[FIG. 57] FIG. 57 is a diagram showing results of a high-voltage/large-current cutoff test of a protective element of Inventive Example 2.

### DESCRIPTION OF EMBODIMENTS

### (Protective element (present embodiment))

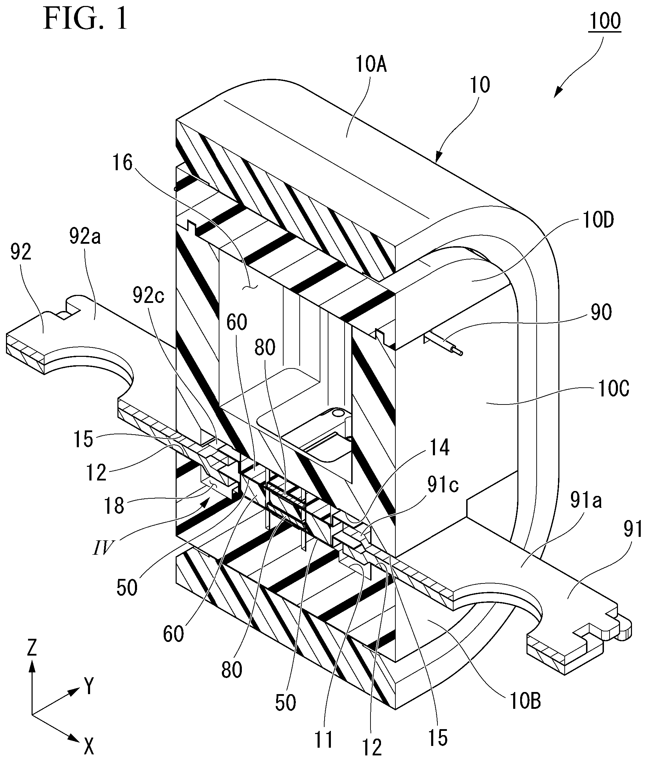

A protective element 100 according to an embodiment of the present invention will be described with reference to FIGS. 1 to 8. The protective element 100 according to the present embodiment is an electrical component constituting a part of a high-voltage/large-current (100 V/100 A or more) electrical circuit using, for example, a lithium-ion battery. The protective element 100 is mounted, for example, on an electric vehicle (EV) or the like.

As shown in FIGS. 1 to 3, the protective element 100 includes a first terminal 91 and a second terminal 92 arranged apart from each other in a predetermined direction, a fusible fuse element 50 arranged between the first terminal 91 and the second terminal 92 to electrically connect the first terminal 91 and the second terminal 92, an insulation member 60 arranged to face the fuse element 50, a heat generation element 80 arranged to overlap the fuse element 50, a power supply member 90 configured to supply an electric current to the heat generation element 80, and an insulation case 10 configured to house a part of the first terminal 91, a part of the second terminal 92, the fuse element 50, the insulation member 60, the heat generation element 80, and a part of the power supply member 90. Each of the first terminal 91 and the second terminal 92 has a plate shape.

The protective element 100 of the present embodiment has an overcurrent cutoff in which the fuse element 50 fuses to cut off the electric current path when an overcurrent (a predetermined electric current or more) exceeding a rated current flows through the fuse element 50 and an active cutoff in which the fuse element 50 fuses to cut off an electric current path by applying an electric current to the heat generation element 80 and generating heat when an abnormality other than an overcurrent occurs as a mechanism for cutting off the electric current path.

### (Definition of directions)

In the present embodiment, an XYZ orthogonal coordinate system (a three-dimensional orthogonal coordinate system) is appropriately set in each drawing and respective constituent elements will be described.

The above-described predetermined direction in which the first terminal 91 and the second terminal 92 are aligned is referred to as a front-and-rear direction. The front-and-rear direction corresponds to the X-axis direction in each drawing. In the X-axis direction, a direction from the first terminal 91 to the second terminal 92 (a -X side) is referred to as a front side and a direction from the second terminal 92 to the first terminal 91 (a +X side) is referred to as a rear side.

Because the front-and-rear direction is a direction in which the first terminal 91 and the second terminal 92 are connected and is also a direction in which electricity flows when the protective element 100 is in use, the direction may also be referred to as a current-carrying direction.

A direction in which the respective plate surfaces of the first terminal 91 and the second terminal 92 face is referred to as an up-and-down direction. The up-and-down direction is a direction perpendicular to the front-and-rear direction and corresponds to a Z-axis direction in each drawing. In the up-and-down direction, an upper side corresponds to a +Z side and a lower side corresponds to a -Z side.

A direction perpendicular to the front-and-rear direction and the up-and-down direction is referred to as a left-and-right direction. The left-and-right direction corresponds to a Y-axis direction in each drawing. In the left-and-right direction, a left side corresponds to a -Y side and a right side corresponds to a +Y side. Specifically, the -Y side is the left side when the protective element 100 is viewed from the rear (the +X side) and the +Y side is the right side when the protective element 100 is viewed from the rear. In addition, the left-and-right direction may also be referred to as a width direction. In this case, for example, one side in the width direction corresponds to the -Y side and the other side in the width direction corresponds to the +Y side.

In addition, in the present embodiment, the front, rear, upper, lower, left, and right sides are convenient names for easily describing a relative positional relationship between constituent elements and an actual arrangement relationship may be an arrangement relationship other than the arrangement relationship indicated by these names.

### (Insulation case)

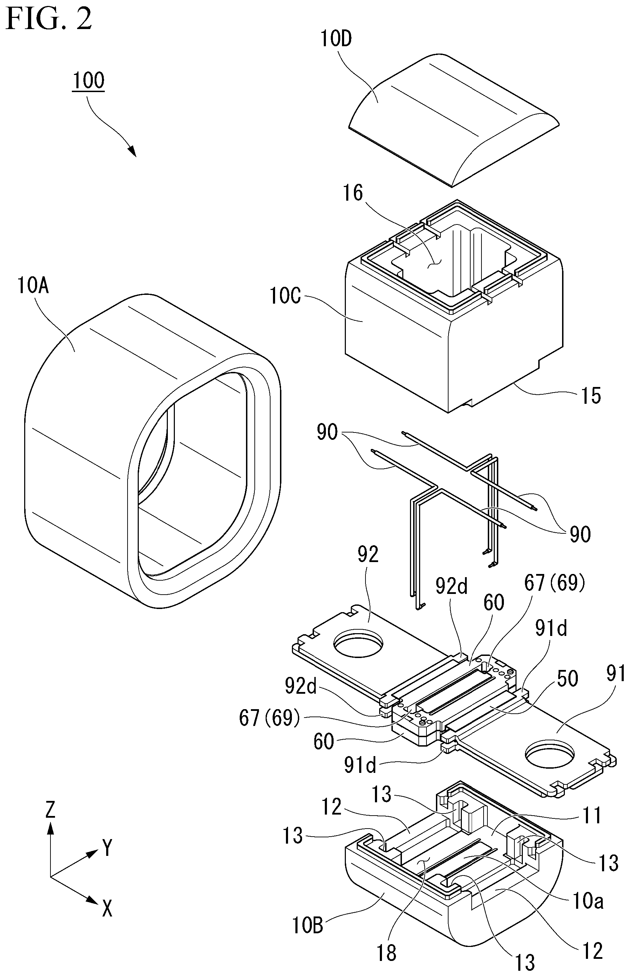

As shown in FIG. 1, an overall shape of the insulation case 10 is a columnar shape extending in the front-and-rear direction. As shown in FIGS. 1 and 2, the insulation case 10 has at least two (three in the present embodiment) holding members 10B, 10C, and 10D laminated in the up-and-down direction, and a tubular cover 10A configured to house these holding members 10B, 10C, and 10D. At least the two holding members 10B and 10C are arranged on both sides of the fuse element 50 in the up-and-down direction.

A plurality of holding members 10B, 10C, and 10D include a first holding member 10B, a second holding member 10C, and a third holding member 10D.

Among the three holding members 10B, 10C, and 10D, the first holding member 10B is located on a lowermost side. The first holding member 10B is located on the lower side of the first terminal 91, the second terminal 92, and the fuse element 50. The first holding member 10B has an approximately tubular shape with a bottom that opens upward.

The first holding member 10B has a first housing part 11, a terminal mounting surface 12, and terminal locking parts 13.

The first housing part 11 has a concave shape recessed downward from an upper surface of the first holding member 10B. The first housing part 11 is arranged in an intermediate part of the first holding member 10B located between both ends in the front-and-rear direction. The first housing part 11 has an approximately rectangular hole shape that opens upward.

The terminal mounting surface 12 has a concave shape recessed downward from the upper surface of the first holding member 10B. A bottom surface of the terminal mounting surface 12 has a flat shape that faces upward and extends in a plane direction (an X-Y plane direction) perpendicular to the up-and-down direction. A pair of terminal mounting surfaces 12 are provided on the first holding member 10B. The pair of terminal mounting surfaces 12 are arranged on both ends of the first holding member 10B in the front-and-rear direction.

The terminal locking parts 13 are arranged on side walls standing on the ends of the first holding member 10B in the left-and-right direction. The terminal locking part 13 is groove-shaped extending in the up-and-down direction and opens on an upper surface of the first holding member 10B and on a wall surface facing an inner side (a central side) of the side wall in the left-and-right direction. A pair of terminal locking parts 13 are provided in each of a front part and a rear part of the first holding member 10B (i.e., a total of four terminal locking parts 13 are provided). The pair of terminal locking parts 13 are arranged to face each other with an interval therebetween in the left-and-right direction.

The second holding member 10C is located at a center of the three holding members 10B, 10C, and 10D in the up-and-down direction. The second holding member 10C is arranged on an upper side of the first terminal 91, the second terminal 92, and the fuse element 50. The second holding member 10C has a tubular shape extending in the up-and-down direction. Specifically, the second holding member 10C has an approximately rectangular tubular shape that opens on the upper side and the lower side.

The second holding member 10C has a second housing part 14 and a terminal pressing surface 15.

The second housing part 14 is a concave shape recessed upward from the lower surface of the second holding member 10C. The second housing part 14 is arranged in an intermediate part located between both ends of the second holding member 10C in the front-and-rear direction. The second housing part 14 has an approximately rectangular hole shape that opens downward.

The terminal pressing surface 15 has a convex shape protruding downward from the lower surface of the second holding member 10C. An end surface facing a lower side of the terminal pressing surface 15 has a flat shape and extends in a plane direction (the X-Y plane direction) perpendicular to the up-and-down direction. A pair of terminal pressing surfaces 15 are provided on the second holding member 10C. The pair of terminal pressing surfaces 15 are arranged on both ends of the second holding member 10C in the front-and-rear direction.

Among the three holding members 10B, 10C, and 10D, the third holding member 10D is located on an uppermost side. The third holding member 10D has a plate shape extending in a plane direction perpendicular to the up-and-down direction.

The cover 10A has a tubular shape extending in the front-and-rear direction. Specifically, the cover 10A is an approximately rectangular tubular shape that opens on the front and rear sides. The three holding members 10B, 10C, and 10D are housed in the cover 10A in a state in which they are aligned and assembled in the up-and-down direction. The cover 10A holds at least two (three in the present embodiment) of the holding members 10B, 10C, and 10D in a fixed state by adhesive or the like.

In a state in which the first holding member 10B and the second holding member 10C are assembled, the first housing part 11 and the second housing part 14 face each other to form one chamber (space) 18. In this chamber 18, a part (a front end) of the first terminal 91, a part (a rear end) of the second terminal 92, the fuse element 50, the insulation member 60, and the heat generation element 80 are arranged. That is, a part (a front end) of the first terminal 91, a part (a rear end) of the second terminal 92, the fuse element 50, the insulation member 60, and the heat generation element 80 are arranged between the two holding members 10B and 10C.

Moreover, the insulation case 10 has an internal pressure buffering space 16 formed inside the insulation case 10. The internal pressure buffering space 16 is arranged inside the second holding member 10C. The internal pressure buffering space 16 is an approximately rectangular parallelepiped space and communicates with the chamber (space) 18. In the present embodiment, a dimension of the internal pressure buffering space 16 in the up-and-down direction is, for example, 1/3 or more and 1/2 or less of a dimension (an external height) of the entire protective element 100 in the up-and-down direction. The internal pressure buffering space 16 has the effect of suppressing a sudden increase in the internal pressure of the protective element 100 caused by a gas generated by an arc discharge that occurs when the fuse element 50 fuses.

The cover 10A and each of the holding members 10B to 10D are preferably made of a material with a tracking resistance index (comparative tracking index (CTI) (resistance to tracking (carbonized conductive path) breakdown) of 500 V or more. The tracking resistance index (CTI) can be obtained by testing based on the International Electrotechnical Commission (IEC) 60112.

A resin material can be used as materials for the cover 10A and each of the holding members 10B to 10D.

Resin materials have a smaller heat capacity and a lower melting point than ceramic materials. For this reason, it is preferable to use a resin material for the holding members 10B to 10D because the resin material has the property of weakening the arc discharge caused by gasification cooling (ablation) and the property of making the metallic particles sparse and making it difficult to form a conductive path as the surfaces of the holding members 10B to 10D deform or the adhesions aggregate when molten and scattered metallic particles adhere to the holding members 10B to 10D.

As the resin material, for example, polyamide resin or fluororesin can be used. The polyamide resin may be an aliphatic polyamide or a semi-aromatic polyamide. Examples of aliphatic polyamides can include nylon 4, nylon 6, nylon 46, and nylon 66. Examples of semi-aromatic polyamides can include nylon 6T, nylon 9T, and polyphthalamide (PPA) resin. An example of the fluororesin can include polytetrafluoroethylene. Moreover, polyamide resins and fluororesins are highly heat resistant and resistant to burning. In particular, it is difficult for aliphatic polyamides to produce graphite even when burned. For this reason, by forming the cover 10A and each of the holding members 10B to 10D using the aliphatic polyamide, it is possible to more reliably prevent the formation of a new electric current path by graphite produced by the arc discharge when the fuse element 50 fuses.

### (First terminal and second terminal)

The first terminal 91 and the second terminal 92 have a plate shape extending in a plane direction (the X-Y plane direction) perpendicular to the up-and-down direction and specifically have an approximately rectangular plate shape. The first terminal 91 and the second terminal 92 are arranged apart from each other in the front-and-rear direction.

As shown in FIG. 1, a front end of the first terminal 91 is connected to a rear end of the fuse element 50. A rear part of the first terminal 91 protrudes rearward from the insulation case 10 and is exposed outside of the insulation case 10. Moreover, a rear end of the second terminal 92 is connected to a front end of the fuse element 50. A front part of the second terminal 92 protrudes frontward from the insulation case 10 and is exposed outside of the insulation case 10.

The first terminal 91 and the second terminal 92 may have substantially the same shape as each other or may have shapes different from each other. Thickness dimensions of the first terminal 91 and the second terminal 92 (dimensions thereof in the up-and-down direction) are not particularly limited, and may be, for example, several hundred micrometers (µm) to several millimeters (mm). The thickness dimension of the first terminal 91 and the thickness dimension of the second terminal 92 may be the same as each other or may be different from each other.

As shown in FIGS. 1 to 4, the first terminal 91 includes a terminal body 91a, an external terminal hole 91b, a conductor connection part 91c, and a locking claw 91d.

The terminal body 91a has a rectangular plate shape longer in the front-and-rear direction. The terminal body 91a is sandwiched between the terminal mounting surface 12 of the first holding member 10B and the terminal pressing surface 15 of the second holding member 10C.

The external terminal hole 91b is a circular hole shape that penetrates the terminal body 91a in the up-and-down direction.

The conductor connection part 91c is arranged on the front end of the first terminal 91 and extends in the left-and-right direction. The conductor connection part 91c is arranged in a chamber (a space) 18 defined by the first housing part 11 and the second housing part 14. The conductor connection part 91c has a larger dimension than the terminal body 91a in the up-and-down direction. In other words, a dimension of the conductor connection part 91c in the up-and-down direction is greater than a dimension between the terminal mounting surface 12 and the terminal pressing surface 15 in the up-and-down direction.

The rear end of the fuse element 50 is connected to the conductor connection part 91c by solder or the like. The conductor connection part 91c has a pair of connection plates 91e arranged apart from each other in the up-and-down direction. In the present embodiment, a plurality of fuse elements 50 are provided and the rear end of each fuse element 50 is connected to one connection plate 91e.

The locking claw 91d is arranged on the front end of the first terminal 91 and protrudes from the terminal body 91a in the left-and-right direction. Specifically, the locking claws 91d protrude from the left and right ends of the conductor connection part 91c. When the first terminal 91 is assembled to the first holding member 10B, the locking claw 91d is inserted into the terminal locking part 13. By locking the locking claw 91d with the terminal locking part 13, the first terminal 91 is positioned relative to the first holding member 10B in the front-and-rear direction and movement in the front-and-rear direction is restricted.

The second terminal 92 includes a terminal body 92a, an external terminal hole 92b, a conductor connection part 92c, and a locking claw 92d.

The terminal body 92a has a rectangular plate shape longer in the front-and-rear direction. The terminal body 92a is sandwiched between the terminal mounting surface 12 of the first holding member 10B and the terminal pressing surface 15 of the second holding member 10C.

The external terminal hole 92b has a circular hole shape penetrating the terminal body 92a in the up-and-down direction.

The conductor connection part 92c is located at the rear end of the second terminal 92 and extends in the left-and-right direction. The conductor connection part 92c is arranged in a chamber (a space) 18 defined by the first housing part 11 and the second housing part 14. The conductor connection part 92c has a larger dimension than the terminal body 92a in the up-and-down direction. In other words, a dimension of the conductor connection part 92c in the up-and-down direction is greater than a dimension between the terminal mounting surface 12 and the terminal pressing surface 15 in the up-and-down direction.

The front end of the fuse element 50 is connected to the conductor connection part 92c by solder or the like. The conductor connection part 92c has a pair of connection plates 92e arranged apart from each other in the up-and-down direction. In the present embodiment, a plurality of fuse elements 50 are provided and the front end of each fuse element 50 is connected to one connection plate 92e.

The locking claw 92d is arranged on the rear end of the second terminal 92 and protrudes from the terminal body 92a in the left-and-right direction. Specifically, the locking claws 92d protrude from the left and right ends of the conductor connection part 92c. When the second terminal 92 is assembled to the first holding member 10B, the locking claw 92d is inserted into the terminal locking part 13. By locking the locking claw 92d with the terminal locking part 13, the second terminal 92 is positioned relative to the first holding member 10B in the front-and-rear direction and movement in the front-and-rear direction is restricted.

One of the pair of external terminal holes 91b and 92b is used for connecting to a power source side and the other is used for connecting to a load side. Alternatively, the external terminal holes 91b and 92b may be used for connecting to an internal electric current path of the load.

The first terminal 91 and the second terminal 92 are made of a metal, such as copper, brass, or nickel. From the viewpoint of strengthening rigidity, it is preferable to use brass as the material for the first terminal 91 and the second terminal 92. From the viewpoint of reducing electrical resistance, it is preferable to use copper. The first terminal 91 and the second terminal 92 may be made of the same material or may be made of different materials.

### (Fuse element)

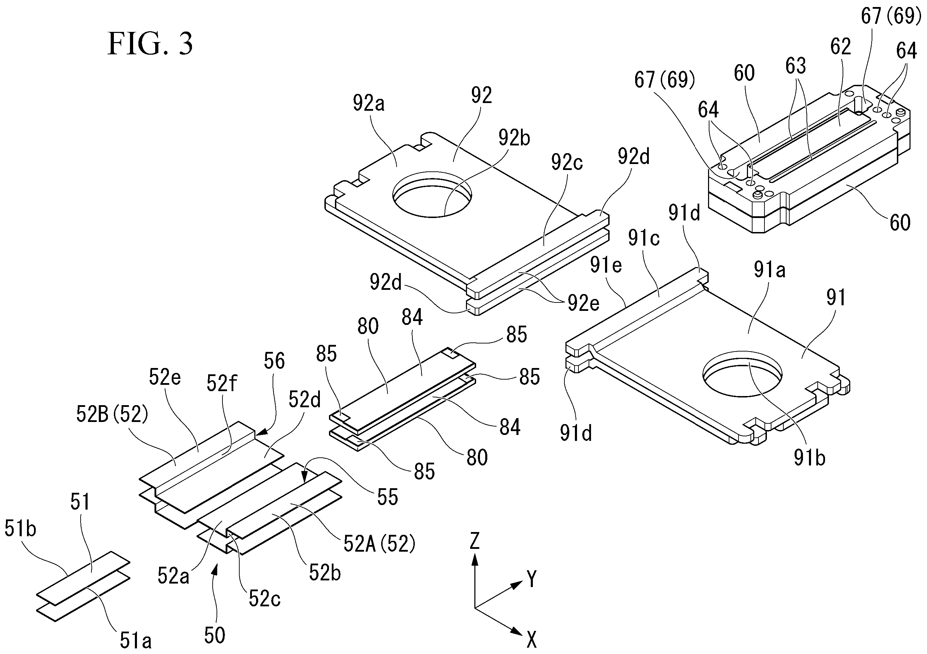

As shown in FIGS. 3 to 5, the fuse element 50 includes a metallic plate-shaped member, a sheet-shaped member, a metallic foil, or the like. In the present embodiment, two fuse elements 50 are provided side by side in the up-and-down direction. However, the present invention is not limited thereto and only one fuse element 50 may be provided or three or more fuse elements 50 may be provided side by side in the up-and-down direction.

The fuse element 50 includes a fusible conductor 51 and a metallic conductor 52 configured to connect the first terminal 91 or the second terminal 92 to the fusible conductor 51. The fusible conductor 51 is made of a material having a lower melting temperature than the metallic conductor 52. Moreover, in the present embodiment, the fusible conductor 51 has a higher electrical resistivity than the metallic conductor 52.

In the present embodiment, the fusible conductor 51 functions as a fusible part of the fuse element 50 during each of an overcurrent cutoff and an active cutoff.

The fusible conductor 51 is plate-shaped, sheet-shaped, or foil-shaped, and extends in the plane direction (the X-Y plane direction) perpendicular to the up-and-down direction. As shown in FIG. 3, in the present embodiment, the fusible conductor 51 has a rectangular plate shape having a dimension in the left-and-right direction greater than a dimension in the front-and-rear direction when viewed in the up-and-down direction. The fusible conductor 51 is arranged, for example, in the center of the fuse element 50 in the front-and-rear direction.

Although not particularly shown in the drawing, the fusible conductor 51 has a laminate in which a low-melting-point metallic layer containing Sn (tin) and a high-melting-point metallic layer containing Ag (silver) or Cu (copper) are laminated. This laminate has one or more low-melting-point metallic layers and two or more high-melting-point metallic layers, wherein the low-melting-point metallic layer is arranged between the high-melting-point metallic layers. This laminate is formed, for example, by coating the periphery of the low-melting-point metallic layer with the high-melting-point metallic layer.

The low-melting-point metallic layer of the laminate described above may contain Sn, and may be Sn alone or an Sn alloy. The Sn alloy is an alloy containing Sn as a main component. In other words, the low-melting-point metallic layer is made of Sn or contains Sn as a main component. The Sn alloy is an alloy with the highest content of Sn among the metals contained in the alloy. Examples of Sn alloys can include Sn-Bi alloys, In-Sn alloys, Sn-Ag-Cu alloys, and the like.

It is only necessary for the high-melting-point metallic layer of the laminate to contain Ag or Cu, and the high-melting-point metallic layer of the laminate may be Ag alone, Cu alone, an Ag alloy, or a Cu alloy. The Ag alloy is an alloy with the highest content of Ag among the metals contained in the alloy, and the Cu alloy is an alloy with the highest content of Cu among the metals contained in the alloy. In other words, the high-melting-point metallic layer is made of Cu or Ag or contains Cu or Ag as a main component.

In addition, the above-described laminate may have a two-layer structure of a low-melting-point metallic layer/a high-melting-point metallic layer. Alternatively, the laminate may have a multi-layer structure of three or more layers having two or more high-melting-point metallic layers and one or more low-melting-point metallic layers, wherein the low-melting-point metallic layer is arranged between the high-melting-point metallic layers.

Moreover, the fusible conductor 51 may be composed of a monolayer body of a low-melting-point metallic layer containing Sn.

The metallic conductor 52 is plate-shaped, sheet-shaped, or foil-shaped. As shown in FIG. 3, in the present embodiment, the metallic conductor 52 has an approximately rectangular plate shape with a dimension in a left-and-right direction longer than a dimension in a front-and-rear direction when viewed in the up-and-down direction. A plurality of metallic conductors 52 are provided in the fuse element 50. The metallic conductors 52 are arranged, for example, on both ends of the fuse element 50 in the front-and-rear direction.

As shown in FIGS. 3 to 5, the plurality of metallic conductors 52 include a first metallic conductor 52A configured to connect the first terminal 91 and a first end (a rear end) 51a of the fusible conductor 51 and a second metallic conductor 52B configured to connect the second terminal 92 and a second end (a front end) 51b of the fusible conductor 51. That is, in the present embodiment, each fuse element 50 has a pair of metallic conductors 52 (52A and 52B).

The first metallic conductor 52A, the fusible conductor 51, and the second metallic conductor 52B are connected in series in that order to form a current-carrying path of the fuse element 50. A pair of metallic conductors 52 are connected to both ends 51a and 51b of the fusible conductor 51 in a current-carrying direction (corresponding to approximately the front-and-rear direction in the present embodiment) in which an electric current of the fuse element 50 flows.

In the present embodiment, the first end 51a of the fusible conductor 51 is fixed on the front end of the first metallic conductor 52A. That is, the lower surface of the first end 51a of the fusible conductor 51 is connected to the upper surface of the front end of the first metallic conductor 52A.

Moreover, the second end 51b of the fusible conductor 51 is fixed on the rear end of the second metallic conductor 52B. That is, the lower surface of the second end 51b of the fusible conductor 51 is connected to the upper surface of the rear end of the second metallic conductor 52B.

The fusible conductor 51 is arranged on the upper side of the pair of metallic conductors 52A and 52B and is suspended therebetween.

Moreover, each metallic conductor 52 is made of Cu or Ag or contains Cu or Ag as a main component.

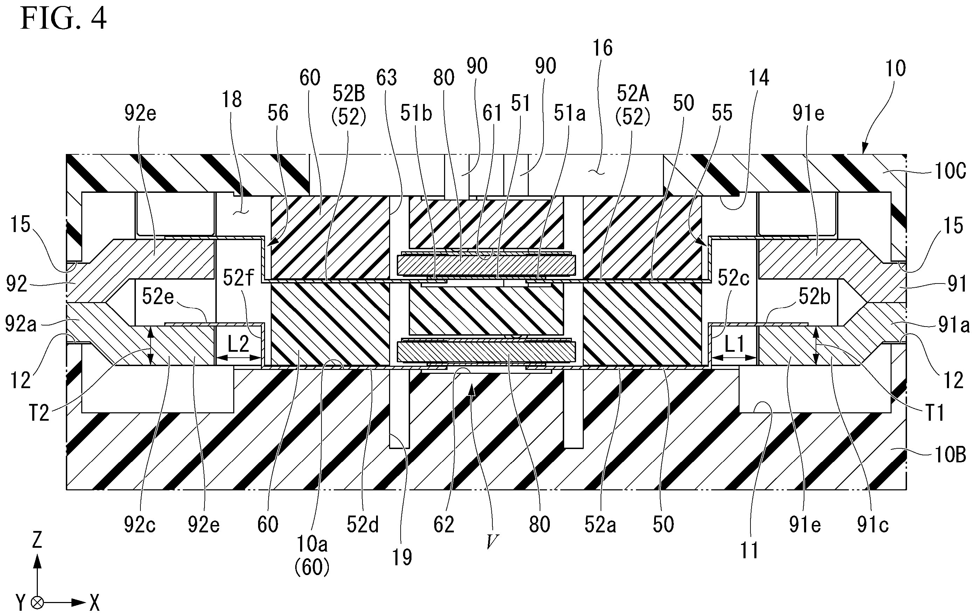

As shown in FIGS. 3 and 4, the fuse element 50 further has a first bent part 55 and a second bent part 56.

The first bent part 55 is arranged between a part of the fuse element 50, facing the insulation member 60, and the first terminal 91. In other words, the first bent part 55 is arranged between the insulation member 60 and the first terminal 91 in the front-and-rear direction. Specifically, the first bent part 55 is provided in the first metallic conductor 52A.

More specifically, the first metallic conductor 52A has an inner plate part 52a connected to the fusible conductor 51, an outer plate part 52b connected to the first terminal 91, and a connection plate part 52c configured to connect the inner plate part 52a and the outer plate part 52b.

The inner plate part 52a has a plate shape extending in the plane direction (the X-Y plane direction) perpendicular to the up-and-down direction. The front end of the inner plate part 52a is connected to the first end 51a of the fusible conductor 51 by solder or the like.

The outer plate part 52b has a plate shape extending in the plane direction (the X-Y plane direction) perpendicular to the up-and-down direction. The outer plate part 52b is arranged on the rear side and the upper side of the inner plate part 52a. The rear part of the outer plate part 52b is connected to the connection plate 91e of the conductor connection part 91c by solder or the like.

The connection plate part 52c has a plate shape extending in a plane direction (a Y-Z plane direction) perpendicular to the front-and-rear direction. In addition, the connection plate part 52c may extend in a plane direction inclined with respect to the Y-Z plane. That is, in a cross-sectional view perpendicular to the left-and-right direction (the Y-axis direction) as shown in FIG. 4, the connection plate part 52c may extend in the up-and-down direction (the Z-axis direction) or may extend to be inclined with respect to the up-and-down direction. The lower end of the connection plate part 52c is connected to the rear end of the inner plate part 52a. The upper end of the connection plate part 52c is connected to the front end of the outer plate part 52b.

The first bent part 55 includes the connection plate part 52c, a bent connection part (a bent part) between the connection plate part 52c and the inner plate part 52a, and a bent connection part (a bent part) between the connection plate part 52c and the outer plate part 52b.

Moreover, a dimension L1 between the connection plate part 52c and the connection plate 91e in the front-and-rear direction is greater than a dimension (i.e., a plate thickness dimension) T1 of the connection plate 91e in the up-and-down direction. In other words, a distance between the first terminal 91 and the first bent part 55 in the front-and-rear direction is greater than a thickness dimension of the first terminal 91 in the up-and-down direction.

The second bent part 56 is arranged between a part of the fuse element 50, facing the insulation member 60, and the second terminal 92. In other words, the second bent part 56 is arranged between the insulation member 60 and the second terminal 92 in the front-and-rear direction. Specifically, the second bent part 56 is provided in the second metallic conductor 52B.

More specifically, the second metallic conductor 52B has an inner plate part 52d connected to the fusible conductor 51, an outer plate part 52e connected to the second terminal 92, and a connection plate part 52f configured to connect the inner plate part 52d and the outer plate part 52e.

The inner plate part 52d has a plate shape extending in the plane direction (the X-Y plane direction) perpendicular to the up-and-down direction. The rear end of the inner plate part 52d is connected to the second end 51b of the fusible conductor 51 by solder or the like.

The outer plate part 52e has a plate shape extending in the plane direction (the X-Y plane direction) perpendicular to the up-and-down direction. The outer plate part 52e is arranged on the front side and the upper side of the inner plate part 52d. The front part of the outer plate part 52e is connected to the connection plate 92e of the conductor connection part 92c by solder or the like.

The connection plate part 52f has a plate shape extending in the plane direction (the Y-Z plane direction) perpendicular to the front-and-rear direction. The connection plate part 52f may extend in a plane direction inclined with respect to the Y-Z plane. That is, in a cross-sectional view perpendicular to the left-and-right direction (the Y-axis direction) as shown in FIG. 4, the connection plate part 52f may extend in the up-and-down direction (the Z-axis direction) or may extend to be inclined with respect to the up-and-down direction. The lower end of the connection plate part 52f is connected to the front end of the inner plate part 52d. The upper end of the connection plate part 52f is connected to the rear end of the outer plate part 52e.

The second bent part 56 includes the connection plate part 52f, a bent connection part (a bent part) between the connection plate part 52f and the inner plate part 52d, and a bent connection part (a bent part) between the connection plate part 52f and the outer plate part 52e.

Moreover, a dimension L2 between the connection plate part 52f and the connection plate 92e in the front-and-rear direction is greater than a dimension (i.e., a plate thickness dimension) T2 of the connection plate 92e in the up-and-down direction. In other words, a distance between the second terminal 92 and the second bent part 56 in the front-and-rear direction is greater than a thickness dimension of the second terminal 92 in the up-and-down direction.

At least one of the first bent part 55 and the second bent part 56 has a crank shape. In the present embodiment, both the first bent part 55 and the second bent part 56 have a bent crank shape.

### (Insulation member)

As shown in FIGS. 3 to 5, the insulation member 60 is plate-shaped and a pair of plate surfaces face in the up-and-down direction. In the present embodiment, the insulation member 60 has a rectangular plate shape having a dimension in the left-and-right direction greater than a dimension in the front-and-rear direction when viewed in the up-and-down direction. The insulation member 60 is made of a resin with a tracking resistance index (CTI) of 500 V or more. The insulation member 60 is made of a polyamide-based resin material or a fluorine-based resin material. Examples of the resin material constituting the insulation member 60 are similar to those of the insulation case 10 (the cover 10A and each of the holding members 10B to 10D) described above.

As shown in FIG. 4, the insulation member 60 is arranged to face the fuse element 50 from both sides in the up-and-down direction. The insulation member 60 is arranged in proximity to or in contact with the fuse element 50. A dimension between the insulation member 60 and the fuse element 50 in the up-and-down direction is, for example, 2 mm or less. The dimension between the insulation member 60 and the fuse element 50 in the up-and-down direction is preferably 1.5 mm or less, and more preferably 1 mm or less.

At least two insulation members 60 are provided on the upper side and the lower side of the fuse element 50. That is, at least a pair of insulation members 60 are arranged to sandwich the fuse element 50 in the up-and-down direction. In the present embodiment, two fuse elements 50 are provided side by side in the up-and-down direction and the insulation members 60 are provided on the upper side and the lower side of the upper fuse element 50 and the upper side and the lower side of the lower fuse element 50.

More specifically, the insulation member 60 located on the lower side of the upper fuse element 50 and the insulation member 60 located on the upper side of the lower fuse element 50 are the same part (common part). For this reason, the fuse elements 50 and the insulation members 60 are alternately arranged side by side in the up-and-down direction.

Moreover, the insulation member 60 located on the lower side of the lower fuse element 50 is formed integrally with the first holding member 10B. More specifically, the insulation member 60 located on the lower side of the lower fuse element 50 includes a part of the bottom wall 10a of the first holding member 10B. That is, at least one of the insulation members 60 is formed integrally with a part of the insulation case 10. Although not particularly shown in the drawing, the insulation member 60 located on the upper side of the upper fuse element 50 may be formed integrally with the second holding member 10C. That is, one or both of the two holding members 10B and 10C are formed integrally with the insulation member 60.

Moreover, the bottom wall 10a (the insulation member 60) may also have a groove-shaped recess 19 recessed from the surface (upper surface) of the bottom wall 10a facing the fuse element 50. A pair of recesses 19 are provided on the front side and the rear side of the fusible conductor 51. The recess 19 extends in the left-and-right direction. That is, the recess 19 extends in a direction perpendicular to the current-carrying direction (which is approximately the front-and-rear direction in the present embodiment and partially includes the up-and-down direction) in which an electric current of the fuse element 50 flows.

As shown in FIGS. 3 to 5, the insulation member 60 has a heat generation element housing part 61, a conductor-facing recess 62, a slit 63, and an air hole 64.

The heat generation element housing part 61 has a concave shape recessed from the surface of the insulation member 60 facing the fuse element 50. In the present embodiment, the heat generation element housing part 61 is formed to be recessed upward from the lower surface facing the fuse element 50 within the pair of plate surfaces (the upper and lower surfaces) of the insulation member 60. In the present embodiment, the heat generation element housing part 61 is arranged in the center of the insulation member 60 in the front-and-rear direction. The heat generation element housing part 61 has a rectangular hole shape longer in the left-and-right direction.

The conductor-facing recess 62 has a concave shape recessed from the surface of the insulation member 60 facing the fuse element 50. In the present embodiment, the conductor-facing recess 62 is formed to be recessed downward from the upper surface facing the fuse element 50 within the pair of plate surfaces (the upper and lower surfaces) of the insulation member 60. In the present embodiment, the conductor-facing recess 62 is arranged in the center of the insulation member 60 in the front-and-rear direction. Specifically, the conductor-facing recess 62 is arranged to face the fusible conductor 51 of the fuse element 50. A dimension of the conductor-facing recess 62 in the front-and-rear direction is smaller than a dimension of the heat generation element housing part 61 in the front-and-rear direction. A dimension (a depth dimension) of the conductor-facing recess 62 in the up-and-down direction is smaller than a dimension of the heat generation element housing part 61 in the up-and-down direction.

Moreover, the insulation member 60 may also have the slit 63. The slit 63 has a slit shape penetrating the insulation member 60 from the surface of the recessed insulation member 60 facing the fuse element 50. That is, the slit 63 has a slit shape, penetrates the insulation member 60 in the up-and-down direction, and opens in each of a pair of plate surfaces (upper and lower surfaces). A pair of slits 63 are provided on the front and rear sides of the fusible conductor 51. The slit 63 extends in the left-and-right direction. That is, the slit 63 extends in a direction perpendicular to the current-carrying direction (which is approximately the front-and-rear direction in the present embodiment and partially includes the up-and-down direction) in which the electric current of the fuse element 50 flows.

When the slit 63 is arranged in the insulation member 60, the molten scatter of the fuse element that adheres to the surface of the insulation member 60 facing the fuse element 50 after the fuse element 50 is cut off becomes discontinuous at the slit 63, and insulation resistance between the first terminal 91 and the second terminal 92 after the fuse element 50 is cut off can be preferably increased.

The air hole 64 penetrates the insulation member 60 in the up-and-down direction. A plurality of air holes 64 are provided in the insulation member 60. The plurality of air holes 64 are arranged on both ends of the insulation member 60 in the left-and-right direction.

In the present embodiment, the chamber 18 where the fuse element 50 is housed communicates with the internal pressure buffering space 16 via the slit 63 and the air hole 64. Therefore, if an arc discharge occurs and pressure rises in the chamber 18 when the fuse element 50 cuts off an overcurrent, this pressure can be efficiently released to the internal pressure buffering space 16 through the slit 63 and the air hole 64.

### (Heat generation element)

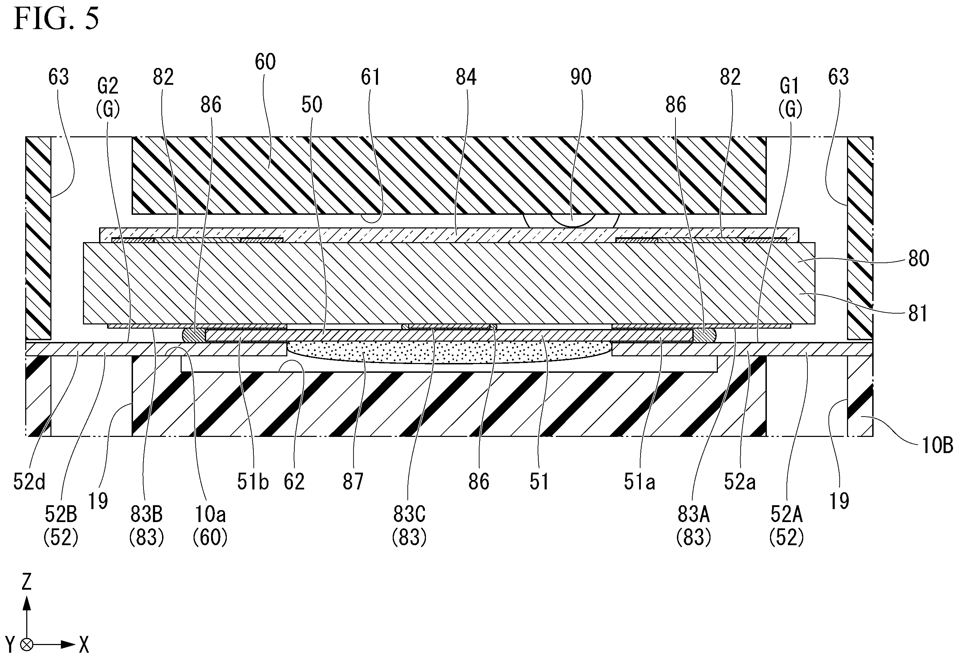

As shown in FIGS. 4 and 5, the heat generation element 80 is arranged to overlap the fuse element 50 in the up-and-down direction. The heat generation element 80 comes into contact with the fuse element 50 in the up-and-down direction. The heat generation element 80 generates heat by receiving an electric current from the power supply member 90 and melts and fuses at least a part of the fuse element 50. Specifically, the heat generation element 80 is laminated with the fusible conductor 51 in the up-and-down direction and at least the part of the fusible conductor 51 melts and fuses due to heat generated by receiving the electric current. In addition, in the present embodiment, "melting and fusing at least the part of the fuse element 50" may be abbreviated to "melting and fusing the fuse element 50" or the like in the following description. Moreover, "melting and fusing at least the part of the fusible conductor 51" may be abbreviated to "melting and fusing the fusible conductor 51" or the like in the following description. Moreover, the same is also true for the metallic conductor 52.

The heat generation elements 80 are provided in the same number as the fuse elements 50. In the present embodiment, two heat generation elements 80 are provided side by side in the up-and-down direction. Each heat generation element 80 comes into contact with one fuse element 50.

As shown in FIGS. 3 to 6B, the heat generation element 80 is plate-shaped and the pair of plate surfaces face each other in the up-and-down direction. In the present embodiment, the heat generation element 80 has a rectangular plate shape having a dimension in the left-and-right direction greater than a dimension in the front-and-rear direction when viewed in the up-and-down direction. The heat generation element 80 is arranged in the heat generation element housing part 61. That is, the heat generation element 80 is housed in the insulation member 60.

The heat generation element 80 includes an insulation substrate (a substrate) 81, a resistive layer 82 laminated on the insulation substrate 81, a metallic layer 83 laminated on the insulation substrate 81 and facing the fuse element 50 side in the up-and-down direction, an insulation layer 84, and a heat generation element electrode 85. In the present embodiment, the heat generation element 80 extends in the left-and-right direction, and the insulation substrate 81, the resistive layer 82, the metallic layer 83, and the insulation layer 84 also extend in the left-and-right direction.

Specifically, the heat generation element 80 extends in a direction intersecting the current-carrying direction (which is approximately the front-and-rear direction in the present embodiment and partially includes the up-and-down direction) in which an electric current flows through the fuse element 50 and extends in a direction (i.e., the left-and-right direction) perpendicular to the current-carrying direction in the present embodiment. Moreover, each of the insulation substrate 81, the resistive layer 82, the metallic layer 83, and the insulation layer 84 also extends in a direction intersecting the current-carrying direction, and extends in the direction (the left-and-right direction) perpendicular to the current-carrying direction in the present embodiment.

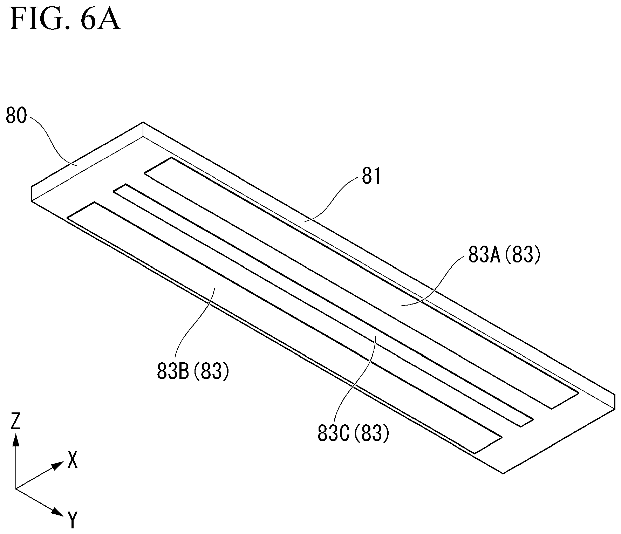

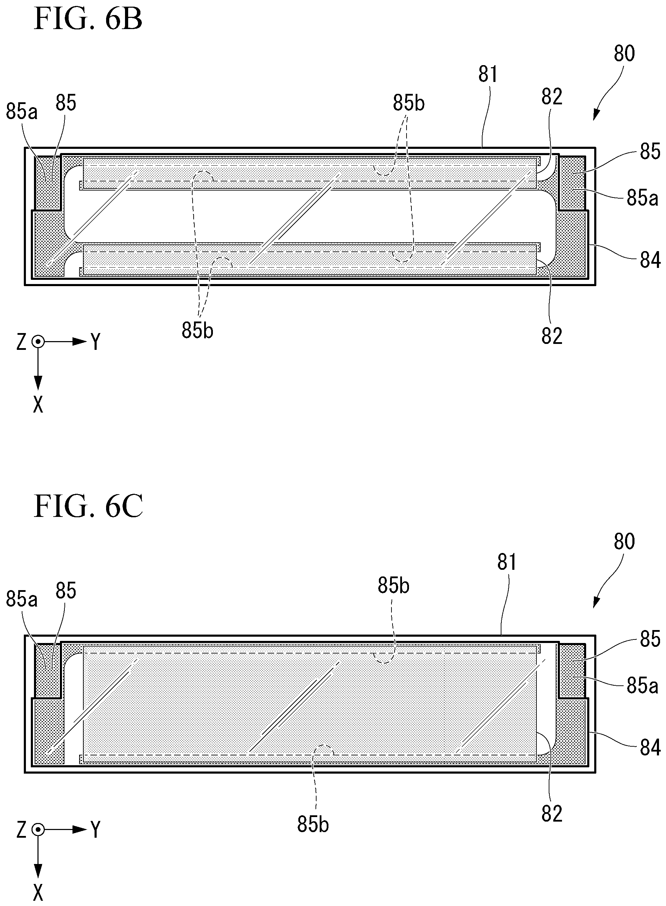

More specifically, as shown in FIG. 6B as an example, the heat generation element 80 includes two resistive layers 82 arranged apart from each other on the upper surface of the insulation substrate 81 in the front-and-rear direction and extending in parallel to each other, an insulation layer 84 configured to cover the resistive layers 82 from above, a pair of heat generation element electrodes 85 formed on the insulation substrate 81 and electrically connected to both ends of the resistive layers 82 in the left-and-right direction or the front-and-rear direction, and a metallic layer 83 arranged on the lower surface of the insulation substrate 81 (see FIG. 6A).

In the present embodiment, as shown in FIG. 6B, the heat generation element electrode 85 has a first electrode part 85a extending in the front-and-rear direction and a second electrode part 85b connected to the first electrode part 85a and extending in the left-and-right direction.

The first electrode part 85a is arranged on the end of the upper surface of the insulation substrate 81 in the left-and-right direction. At least a part of the first electrode part 85a is exposed to an outer side of the heat generation element 80 without being covered by the insulation layer 84.

In the example shown in FIG. 6B, a pair of second electrode parts 85b are provided with an interval therebetween in each heat generation element electrode 85 in the front-and-rear direction. Moreover, the second electrode parts 85b of the pair of heat generation element electrodes 85 are connected to both ends of the resistive layer 82 in the front-and-rear direction.

As shown in FIGS. 5 and 6A, the metallic layer 83 is arranged on one (the lower surface in the present embodiment) of the pair of plate surfaces (upper and lower surfaces) of the insulation substrate 81, and the resistive layer 82 is arranged on the other (the upper surface in the present embodiment) of the pair of plate surfaces. In addition, the metallic layer 83 may be referred to as an electrode (a dummy electrode) or the like.

The resistive layer 82 is made of a conductive material that generates heat when an electric current is received, for example, such as nichrome, W, Mo, Ru, or a material containing these. The resistive layer 82 is formed by mixing the powder of an alloy, composition, or compound of the above elements with a resin binder or the like, forming a pattern on the insulation substrate 81 in a paste shape using a screen-printing technique, firing the formed pattern, or the like.

As shown in FIG. 6B, the resistive layer 82 is arranged on a part of the insulation substrate (the substrate) 81 in the front-and-rear direction. Specifically, the resistive layer 82 is arranged on an end of the insulation substrate 81 in the front-and-rear direction and a pair of resistive layers 82 are arranged on both ends of the upper surface of the insulation substrate 81 in the front-and-rear direction in the present embodiment. That is, a plurality of resistive layers 82 are arranged on the insulation substrate 81 at intervals from each other in the front-and-rear direction. A dimension of the resistive layer 82 in the front-and-rear direction is half or less of a dimension of the insulation substrate 81 in the front-and-rear direction and is 1/3 or less in the present embodiment.

The insulation substrate 81 is, for example, a substrate having insulation properties such as alumina, glass ceramics, mullite, or zirconia. The insulation layer 84 is arranged to protect the resistive layer 82. An insulation material such as ceramics or glass can be used as a material of the insulation layer 84. The insulation layer 84 can be formed by a method for applying and firing a paste of an insulation material or the like.

The insulation substrate 81 electrically insulates the heat generation element electrode 85 and the resistive layer 82 on the upper surface of the heat generation element 80 from the metallic layer 83 on the lower surface thereof.

When it becomes necessary to cut off the current-carrying path due to an abnormality occurring in the external circuit that serves as the current-carrying path of the protective element 100 or the like, the heat generation element 80 is electrically connected by an electric current control element provided in the external circuit to generate heat.

As shown in FIG. 5, a part of the fusible conductor 51 of the fuse element 50 is arranged in a part of the gap G in the up-and-down direction formed between the metallic conductor 52 and the metallic layer 83 and is sandwiched between the metallic conductor 52 and the metallic layer 83 in the up-and-down direction. The gap G is the same as or slightly greater than a dimension (a thickness dimension) of the fusible conductor 51 in the up-and-down direction, specifically, for example, several tens of micrometers (µm) to several hundred micrometers (µm), and is about 50 µm to 100 µm in the present embodiment. As described below, the gap G may have a dimension for enabling capillary action to be exhibited.

In addition, in FIG. 5, reference numeral 86 denotes mounting solder 86 and reference numeral 87 denotes an insulation flux. As shown in FIG. 5, the metallic layer 83, the fusible conductor 51, and the metallic conductor 52 are connected and fixed to each other by the solder 86.

In more detail, as shown in FIGS. 5 and 6A, a plurality of metallic layers 83 are provided on the heat generation element 80. The plurality of metallic layers 83 are arranged at intervals from each other in the front-and-rear direction. Each metallic layer 83 faces a part of the fuse element 50. The plurality of metallic layers 83 include a first metallic layer 83A arranged with a first gap G1 from the first metallic conductor 52A in the up-and-down direction and a second metallic layer 83B arranged with a second gap G2 from the second metallic conductor 52B in the up-and-down direction. The first metallic layer 83A is arranged on one end of the insulation substrate 81 in the front-and-rear direction and the second metallic layer 83B is arranged on the other end of the insulation substrate 81 in the front-and-rear direction. Specifically, in the present embodiment, the first metallic layer 83A is arranged on the rear end of the lower surface of the insulation substrate 81 in the front-and-rear direction and the second metallic layer 83B is arranged on the front end of the lower surface of the insulation substrate 81 in the front-and-rear direction.

The plurality of (two) resistive layers 82 provided on the upper surface of the insulation substrate 81 overlap the first metallic layer 83A and the second metallic layer 83B, respectively, when viewed in the up-and-down direction. Therefore, when power is supplied from the power supply member 90 to the heat generation element electrode 85 and each resistive layer 82 generates heat, the heat is transmitted to the first metallic layer 83A and the second metallic layer 83B via the insulation substrate 81 and these metallic layers 83A and 83B are heated.

In addition, only one resistive layer 82 may be provided on the insulation substrate 81, as in another example of the heat generation element 80 shown in FIG. 6C. In this case, one resistive layer 82 is arranged to overlap at least a part of the first metallic layer 83A and the second metallic layer 83B when viewed in the up-and-down direction. Preferably, one resistive layer 82 is arranged to overlap both the first metallic layer 83A and the second metallic layer 83B when viewed in the up-and-down direction. One resistive layer 82 may be arranged across the entire upper surface of the insulation substrate 81. Moreover, in the example shown in FIG. 6C, each heat generation element electrode 85 has one second electrode part 85b.

As shown in FIG. 5, the first end 51a of the fusible conductor 51 is arranged in a part of the first gap G1 and sandwiched between the first metallic conductor 52A and the first metallic layer 83A in the up-and-down direction. Moreover, the second end 51b of the fusible conductor 51 is arranged in a part of the second gap G2 and sandwiched between the second metallic conductor 52B and the second metallic layer 83B in the up-and-down direction.

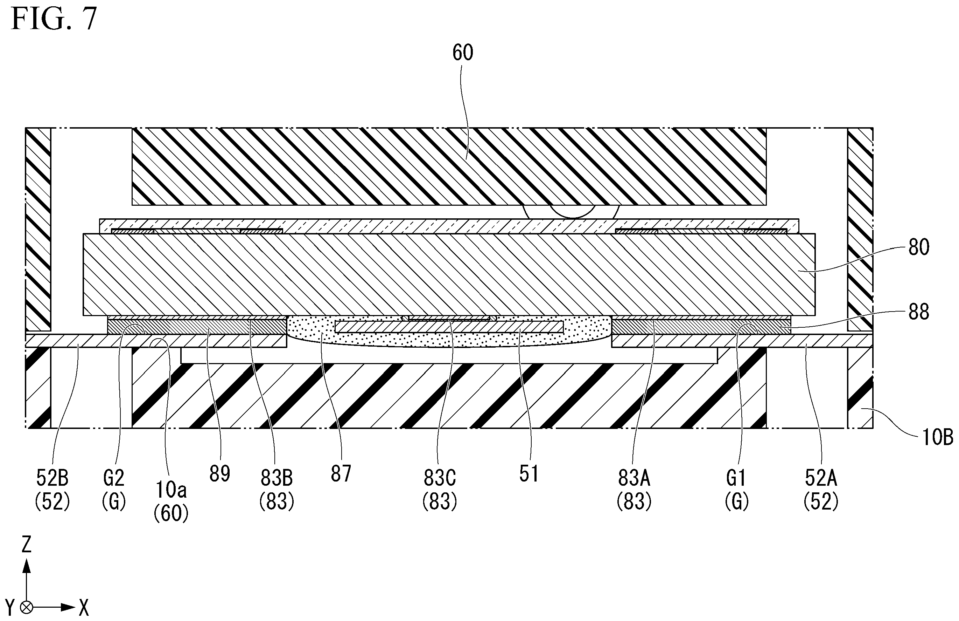

Here, FIG. 7 shows a state in which a part of the fuse element 50 has fused due to heat generated by the heat generation element 80 according to a cutoff signal.

A molten material 88 (a molten material including the first end 51a of the fusible conductor 51 and the solder 86) near the first end 51a of the fusible conductor 51 that has melted due to heat generated by the heat generation element 80 flows backward while penetrating the first gap G1 by capillary action. Moreover, a molten material 89 (a molten material including the second end 51b of the fusible conductor 51 and the solder 86) near the second end 51b of the fusible conductor 51 flows forward while penetrating the second gap G2 by capillary action. Thereby, the fusible conductor 51 fuses to be divided in the front-and-rear direction and the electric current flowing through the fuse element 50 is cut off. That is, in the present embodiment, the molten materials 88 and 89 of the fusible conductor 51 melted by the heat generated by the heat generation element 80 flow while penetrating the gap G by capillary action, such that the fusible conductor 51 fuses.

As shown in FIGS. 5 and 6A, the plurality of metallic layers 83 further include an intermediate metallic layer 83C arranged between the first metallic layer 83A and the second metallic layer 83B. The intermediate metallic layer 83C is arranged between the first metallic layer 83A and the second metallic layer 83B in the front-and-rear direction. Moreover, a dimension of the intermediate metallic layer 83C in the front-and-rear direction is smaller than a dimension of the first metallic layer 83A in the front-and-rear direction and smaller than a dimension of the second metallic layer 83B in the front-and-rear direction. The intermediate metallic layer 83C, the first metallic layer 83A, and the second metallic layer 83B are electrically isolated from the resistive layer 82.

An intermediate part of the fusible conductor 51 located between the first end 51a and the second end 51b is connected to the intermediate metallic layer 83C by the solder 86. As shown in FIG. 7, when the heat generation element 80 generates heat according to the cutoff signal, the intermediate part of the fusible conductor 51 located between the first end 51a and the second end 51b is held in a state in which a connection to the intermediate metallic layer 83C is established.

When an amount of heat generated by the heat generation element 80 is large, (the intermediate part of) the fusible conductor 51 connected to the intermediate metallic layer 83C is also melted, and some of the molten materials of the fusible conductor 51 are held on the surface of the intermediate metallic layer 83C.

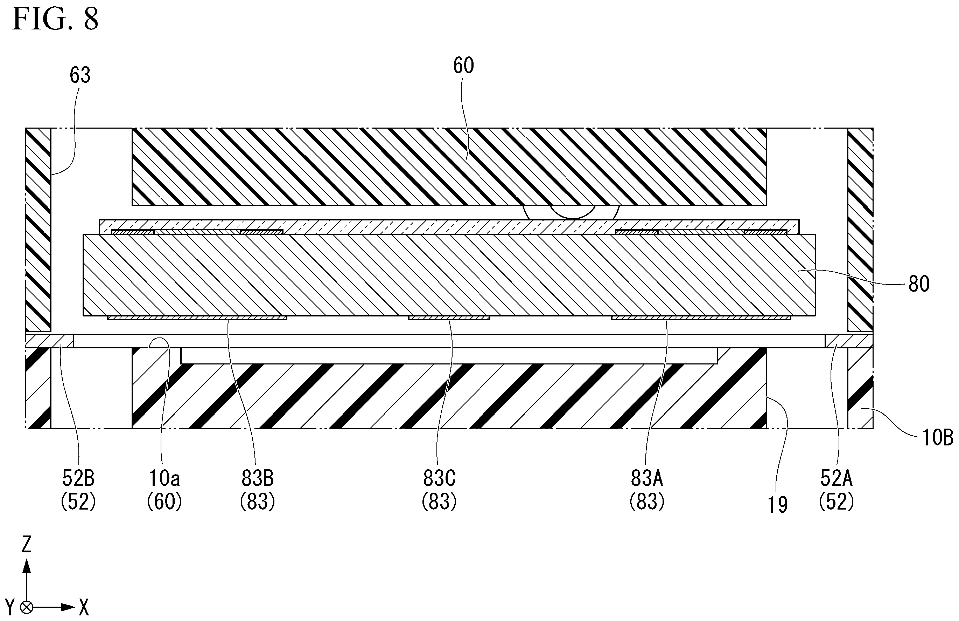

Moreover, FIG. 8 shows a state in which a part of the fuse element 50 has fused (or has been lost) due to an overcurrent (a predetermined electric current or more) exceeding the rated current. As shown in FIG. 8, when the predetermined electric current or more flows through the fuse element 50, at least a part of the fusible conductor 51 or at least a part of the fusible conductor 51 and at least a part of the metallic conductor 52 fuse and the electric current flowing through the fuse element 50 is cut off. In the example shown in FIG. 8, at least the part of the fusible conductor 51 and at least the part of the metallic conductor 52 fuse, and more specifically, all of the fusible conductor 51, the front end of the first metallic conductor 52A, and the rear end of the second metallic conductor 52B are lost due to the overcurrent.

### (Power supply member)

As shown in FIG. 2, the power supply member 90 is a member that supplies electric power to the heat generation element 80. The power supply member 90 extends from an outer side to an inner side of the insulation case 10 and one end of the power supply member 90 is connected to the heat generation element electrode 85 of the heat generation element 80. Specifically, one end of the power supply member 90 is connected to the first electrode part 85a of the heat generation element electrode 85. One end of the power supply member 90 and the first electrode part 85a of the heat generation element electrode 85 are connected, for example, by solder. A part or all of the connection part between the one end of the power supply member 90 and the first electrode part 85a of the heat generation element electrode 85 may be fixed to be covered with an adhesive and a part of the adhesive may also be bonded to the insulation member 60. Thereby, the solder connecting the power supply member 90 and the first electrode part 85a of the heat generation element electrode 85 can be prevented from being melted and electrically disconnected before the fuse element 50 fuses when an electric current is applied to the heat generation element 80. In the present embodiment, at least a part of the power supply member 90 is made of an electric wire (a wiring member). However, the present invention is not limited to this and at least a part of the power supply member may be made of a conductive plate-shaped member, a rod-shaped member, or the like, although not particularly shown in the drawing.

### (Operation and effects of present embodiment)

In the protective element 100 of the present embodiment described above, when an overcurrent exceeding the rated current (i.e., a predetermined electric current or more) flows through the fuse element 50, the fuse element 50 heats up and fuses and the electric current path is cut off. Alternatively, this protective element 100 can apply an electric current to the heat generation element 80 so that heat is generated, such that the fuse element 50 laminated on the heat generation element 80 melts and fuses and hence the electric current path can be cut off.

Moreover, in the present embodiment, the insulation member 60 is arranged to face the fuse element 50 from both ends in the up-and-down direction. More specifically, the insulation member 60 is in proximity to or in contact with the fuse element 50 from the upper side and the lower side and is preferably in close contact with the fuse element 50. Thus, there is no space where an arc discharge can continue between the fuse element 50 and the insulation member 60, and the arc discharge is reliably reduced when an overcurrent is cut off.

As described above, according to the present embodiment, it is possible to provide a protective element 100 that can suppress the occurrence of a large-scale arc discharge when the fuse element 50 fuses and can achieve both an overcurrent cutoff and a cutoff function according to a cutoff signal.

Moreover, in the present embodiment, the fuse element 50 includes the fusible conductor 51 laminated with the heat generation element 80 and the metallic conductor 52 configured to connect the first terminal 91 or the second terminal 92 to the fusible conductor 51, wherein the fusible conductor 51 has a lower melting temperature than the metallic conductor 52.

In this case, because the heat generation element 80 and the fusible conductor 51 with a low melting temperature are arranged to overlap each other, the fusible conductor 51 stably melts and fuses when an electric current is applied to the heat generation element 80 and the heat generation element 80 generates heat. Thereby, it is possible to more reliably cut off the electric current path according to the cutoff signal.

Moreover, in the present embodiment, the fusible conductor 51 has a higher electrical resistivity than the metallic conductor 52.

In this case, when an overcurrent exceeding the rated current flows through the fuse element 50, the fusible conductor 51 with the high electrical resistivity becomes a heat spot and the fuse element 50 stably fuses in the fusible conductor 51.

Moreover, in the present embodiment, the fusible conductor 51 has a laminate in which a low-melting-point metallic layer containing Sn and a high-melting-point metallic layer containing Ag or Cu are laminated. This laminate has one or more low-melting-point metallic layers and two or more high-melting-point metallic layers and has a configuration in which the low-melting-point metallic layer is arranged between the high-melting-point metallic layers.

In this case, because the high-melting-point metallic layer is arranged on the outer side of the laminate, the strength of the fusible conductor 51 is increased. When the fusible conductor 51 is connected to the metallic conductor 52 or the heat generation element 80, the deformation of the fusible conductor 51 or the like is less likely to occur due to heating during soldering.

Moreover, in the present embodiment, a dimension between the insulation member 60 and the fuse element 50 in the up-and-down direction is 2 mm or less.

In this case, because a space formed between the fuse element 50 and the insulation member 60 is narrowed, the scale of the arc discharge generated by the fuse element 50 fusing due to an overcurrent cutoff tends to be small. In other words, if the fused space is narrow, an amount of gas in the space is reduced, an amount of "plasma generated by ionizing the gas in the space" serving as a path for the electric current to flow during the arc discharge is also reduced, and the arc discharge is easily reduced early. The above-described dimension is more preferably 1.5 mm or less, and more preferably 1 mm or less.

Moreover, in the present embodiment, the insulation member 60 includes a heat generation element housing part 61 and the heat generation element 80 is arranged in the heat generation element housing part 61.

In this case, the heat generation element 80 is housed in the heat generation element housing part 61, such that a part excluding the heat generation element housing part 61 in the surface of the insulation member 60 facing the fuse element 50 can be arranged in proximity to or in contact with the fuse element 50. Thus, there is no space between the fuse element 50 and the insulation member 60 in which the arc discharge can continue and the arc discharge is more reliably suppressed.

Moreover, in the present embodiment, the insulation member 60 includes the slit 63 penetrating the insulation member 60 from the surface of the recessed insulation member 60 facing the fuse element 50 or the groove-shaped recess 19 recessed from the upper surface of the bottom wall 10a (corresponding to the lowest insulation member 60 among the plurality of insulation members 60) facing the fuse element 50. Also, the slit 63 or the recess 19 extends in a direction perpendicular to the current-carrying direction in which an electric current of the fuse element 50 flows.

In this case, the slit 63 or the recess 19 is provided, thereby suppressing a process in which the molten scatter scattering in a nearby area when the fuse element 50 has fused due to an overcurrent cutoff is continuously formed on the surface of the insulation member 60 facing the fuse element 50. Thereby, it is possible to stably increase the insulation resistance after the electric current path is cut off.

Moreover, in the present embodiment, at least two insulation members 60 are provided on the upper side and the lower side of the fuse element 50 and at least one of the insulation members 60 is formed integrally with a part of the insulation case 10.

Specifically, the insulation member 60 is integrated with the holding member 10B (a part of the insulation case 10). Thus, it is possible to reduce the number of parts to easily manufacture the protective element 100 and reduce manufacturing costs.

Moreover, in the present embodiment, the insulation case 10 includes the internal pressure buffering space 16 formed inside the insulation case 10 and communicating with the chamber (the space) 18 where the fuse element 50 is arranged.

In this case, the internal pressure buffering space 16 can suppress a sudden increase in the internal pressure of the protective element 100 caused by a gas generated by the arc discharge that occurs when the fuse element 50 fuses. Thereby, it is possible to prevent damage or the like to the insulation case 10.

Moreover, in the present embodiment, a part of the fusible conductor 51 is arranged in a part of the gap G formed between the metallic conductor 52 and the metallic layer 83 in the up-and-down direction and is sandwiched between the metallic conductor 52 and the metallic layer 83 in the up-and-down direction.

In this case, the resistive layer (the heater) 82 generates heat when an electric current is applied and this heat is transmitted to the metallic layer (the dummy electrode) 83 via the insulation substrate (the heater substrate) 81 and a part of the fusible conductor 51 melts between the metallic layer 83 and the metallic conductor 52. The fusible conductor 51 can efficiently melt and reliably fuse according to the cutoff signal.

Moreover, in the present embodiment, the molten materials 88 and 89 of the fusible conductor 51, which have melted due to the heat generated by the heat generation element 80, flow while penetrating the gap G due to capillary action, such that the fusible conductor 51 fuses.

In this case, the molten materials 88 and 89 of the fusible conductor 51 are suctioned into the gap G between the metallic conductor 52 and the metallic layer 83 due to capillary action, such that the molten materials 88 and 89 are allowed to flow in the desired direction, thereby more reliably fusing the fusible conductor 51.

Moreover, specifically, in the present embodiment, the first end 51a of the fusible conductor 51 is arranged in a part of the first gap G1 and sandwiched between the first metallic conductor 52A and the first metallic layer 83A in the up-and-down direction, and the second end 51b of the fusible conductor 51 is arranged in a part of the second gap G2 and sandwiched between the second metallic conductor 52B and the second metallic layer 83B in the up-and-down direction.

In this case, due to the heat generated by the heat generation element 80, a portion near the first end 51a of the fusible conductor 51 melts between the first metallic layer 83A and the first metallic conductor 52A and a portion near the second end 51b of the fusible conductor 51 melts between the second metallic layer 83B and the second metallic conductor 52B. Because the fusible conductor 51 melts on both ends in the current-carrying direction, the fuse element 50 can more reliably fuse according to a cutoff signal.

Moreover, in the present embodiment, specifically, the molten material 88 near the first end 51a of the fusible conductor 51 melted due to the heat generated by the heat generation element 80 flows while penetrating the first gap G1 according to capillary action and the molten material 89 near the second end 51b of the fusible conductor 51 flows while penetrating the second gap G2 according to capillary action, such that the fusible conductor 51 fuses.

In this case, the molten materials 88 and 89 of the fusible conductor 51 flow while being suctioned by capillary action near both ends in the current-carrying direction, such that the fusible conductor 51 more reliably fuses.

Moreover, in the present embodiment, the plurality of metallic layers 83 further include an intermediate metallic layer 83C, and an intermediate part of the fusible conductor 51 located between the first end 51a and the second end 51b is connected to the intermediate metallic layer 83C.

In the above-described configuration, even if the fusible conductor 51 fuses near both ends in the current-carrying direction as described above, the intermediate part of the fusible conductor 51 remains held by the intermediate metallic layer 83C. Thereby, it is possible to more reliably fuse the fusible conductor 51.

In more detail, the intermediate metallic layer 83C is provided, such that the fusible conductor 51 after melting is divided into three parts, i.e., a part 88 (near the first end 51a) arranged in the first gap G1, a part 89 (near the second end 51b) arranged in the second gap G2, and a part (near the intermediate part) held by the intermediate metallic layer 83C. By dividing the fusible conductor 51 into the three division parts, a volume of each division part is reduced and the amount of melting is also reduced, such that the flow of the molten material is easily controlled.

In more detail, for example, the molten material of the fusible conductor 51 may gather near the center of the fusible conductor 51 in the left-and-right direction due to the action of surface tension or the like to form an unintended swelling, or may flow while rotating in the X-Y plane, such that a malfunction in which the cutoff of a current-carrying operation of the fusible conductor 51 becomes unstable can be suppressed by the intermediate metallic layer 83C of the present embodiment.

Moreover, in the present embodiment, the heat generation element 80 includes an insulation substrate 81, a resistive layer 82 laminated on the insulation substrate 81, and a metallic layer 83 laminated on the insulation substrate 81 and facing a part of the fuse element 50. The resistive layer 82 extends in a direction intersecting the current-carrying direction in the fuse element 50 (the left-and-right direction in the present embodiment) and is arranged on a part of the insulation substrate 81 in the front-and-rear direction.

In this case, the resistive layer (the heater) 82 generates heat when an electric current is applied and this heat is transmitted to the metallic layer (the dummy electrode) 83 via the insulation substrate (the heater substrate) 81, such that a part of the fuse element 50 facing the metallic layer 83 melts (the fusible conductor 51 melts in the present embodiment). When the heat generation element 80 generates heat according to a cutoff signal, a part of the fuse element 50 can efficiently melt and fuse.

Also, the resistive layer 82 is arranged in a part of the insulation substrate 81 in the front-and-rear direction (the X-axis direction). Thus, when the resistive layer 82 has generated heat, a thermal load imposed on the insulation substrate 81 can be suppressed to a small load. A malfunction in which the insulation substrate 81 is damaged due to a large thermal load can be stably suppressed.

Moreover, in the present embodiment, the resistive layer 82 is arranged on the end of the insulation substrate 81 in the front-and-rear direction.

In this case, the thermal load imposed on the insulation substrate 81 due to the heat generated by the resistive layer 82 can be suppressed to a small load and a heating location is concentrated on the end of the insulation substrate 81, such that a part of the fuse element 50 can efficiently melt and reliably fuse.

Moreover, in the present embodiment, the dimension of the resistive layer 82 in the front-and-rear direction is half or less of the dimension of the insulation substrate 81 in the front-and-rear direction.

In this case, the thermal load imposed on the insulation substrate 81 due to the heat generated by the resistive layer 82 can be stably suppressed to a small load. More preferably, the dimension of the resistive layer 82 in the front-and-rear direction is 1/3 or less of the dimension of the insulation substrate 81 in the front-and-rear direction.

Moreover, in the present embodiment, a plurality of resistive layers 82 are provided on the insulation substrate 81 at intervals in the front-and-rear direction.

In this case, each resistive layer 82 generates heat, such that the fuse element 50 can fuse more reliably and the thermal load imposed on the insulation substrate 81 can be suppressed to a small load.

Moreover, in the present embodiment, the fuse element 50 has a first bent part 55 arranged between the first terminal 91 and the insulation member 60 in the front-and-rear direction and a second bent part 56 arranged between the second terminal 92 and the insulation member 60 in the front-and-rear direction. A distance L1 between the first terminal 91 and the first bent part 55 in the front-and-rear direction is greater than a thickness dimension T1 of the first terminal 91 in the up-and-down direction. A distance L2 between the second terminal 92 and the second bent part 56 in the front-and-rear direction is greater than a thickness dimension T2 of the second terminal 92 in the up-and-down direction.

In the present embodiment, a configuration in which the insulation members 60 sandwich the fuse element 50 from the upper side and the lower side is adopted. Thereby, the air in the space (the cutoff space) around a fusible part of the fuse element 50 is eliminated as much as possible, such that an amount of generated air plasma serving as an arc discharge path when an overcurrent is cut off is suppressed. However, on the other hand, when a distance between the first terminal 91 and the second terminal 92 in the front-and-rear direction changes due to thermal expansion or contraction or the like caused by a change in the temperature of the surroundings in which the protective element 100 is installed, the fuse element 50 may not be able to sufficiently follow this change and may be likely to be disconnected. In particular, as in the present embodiment, the first terminal 91 and the second terminal 92 are positioned on the resin holding member 10B, and may be easily affected by thermal expansion or contraction caused by a change in the temperature of the holding member 10B, or may be affected by a change in the position of a member such as a bus bar outside of the protective element 100 to which the first terminal 91 and the second terminal 92 are connected.

In this regard, in the present embodiment, because the first bent part 55 and the second bent part 56 are provided on the fuse element 50, even if the distance between the first terminal 91 and the second terminal 92 in the front-and-rear direction changes due to a change in the temperature of the surroundings in which the protective element 100 is installed or the like, the first bent part 55 and the second bent part 56 can expand and contract the dimension of the fuse element 50 in the front-and-rear direction. In other words, the simple structure allows the fuse element 50 to follow the change in the distance between the terminals 91 and 92.

In more detail, the distance L1 between the first terminal 91 and the first bent part 55 in the front-and-rear direction is greater than the thickness dimension T1 of the first terminal 91 in the up-and-down direction. Therefore, even if the solder connecting the fuse element 50 and the first terminal 91 or the like protrudes from the first terminal 91 to the fuse element 50 side, it is prevented from reaching the first bent part 55. Thereby, a malfunction in which the first bent part 55 and the first terminal 91 become stuck together is suppressed and the expansion and contraction function of the fuse element 50 by the first bent part 55 is stable and functional.

Moreover, the distance L2 between the second terminal 92 and the second bent part 56 in the front-and-rear direction is set to be greater than the thickness dimension T2 of the second terminal 92 in the up-and-down direction. Therefore, even if the solder connecting the fuse element 50 and the second terminal 92 or the like protrudes from the second terminal 92 to the fuse element 50 side, it is prevented from reaching the second bent part 56. Thereby, a malfunction in which the second bent part 56 and the second terminal 92 become stuck together is suppressed and the expansion and contraction function of the fuse element 50 by the second bent part 56 is stable and functional.

Therefore, according to the present embodiment, it is possible to stably prevent a malfunction in which the fuse element 50 is disconnected by an excessive load such as tension or compression acting on the fuse element 50 due to a change in a temperature or the like, while suppressing the occurrence of a large-scale arc discharge when the fuse element 50 fuses.

Moreover, in the present embodiment, at least one of the first bent part 55 and the second bent part 56 has a crank shape.

In this case, the expansion and contraction function of the fuse element 50 by the first bent part 55 or the second bent part 56 is more stable and functional.

Moreover, in the present embodiment, the insulation case 10 has at least two holding members 10B and 10C arranged on both sides of the fuse element 50 in the up-and-down direction. A part of the first terminal 91, a part of the second terminal 92, and the fuse element 50 are arranged between the two holding members 10B and 10C. One or both of the two holding members 10B and 10C are formed integrally with the insulation member 60.

In this case, the insulation member 60 is integrated with a part of the insulation case 10. Thus, it is possible to reduce the number of parts, facilitate the manufacture of the protective element 100, and reduce manufacturing costs.

Moreover, in the present embodiment, the insulation case 10 has a cover 10A configured to house at least two holding members 10B to 10D. The cover 10A holds at least two holding members 10B to 10D in a fixed state.

In this case, these holding members 10B to 10D are maintained in a fixed state with respect to each other by housing the plurality of holding members 10B to 10D in the cover 10A. The postures of a part of the first terminal 91, a part of the second terminal 92, and the fuse element 50 arranged between two or more holding members 10B and 10C are stabilized.

Moreover, in the present embodiment, the insulation member 60 is made of a resin with a tracking resistance index (CTI) of 500 V or more.

In this case, because carbides serving as conductive paths are less likely to be formed on the surface of the insulation member 60 by an arc discharge, the leakage current is less likely to occur.

Moreover, in the present embodiment, the insulation member 60 is made of a polyamide resin material or a fluorine resin material.

Resin materials, for example, have a smaller heat capacity and a lower melting point than ceramic materials. If a resin material is used as the material for the insulation member 60 as in the present embodiment, it is preferred because there are a property of weakening the arc discharge due to gasification cooling (ablation) and a property of making the metallic particles sparse and making it difficult to form a conductive path as the surface of the insulation member 60 deforms or adhered matters aggregate when melted and scattered metallic particles adhere to the insulation member 60.

The present invention is not limited to the above-described embodiment and modifications and the like in the configuration can be made without departing from the scope and spirit of the present invention, for example, as described below. In addition, as shown in the modified example, constituent elements identical to those of the above-described embodiment are denoted by the same reference signs and differences will be mainly described in the following description.

Although an example in which the fuse element 50 has the fusible conductor 51 and the metallic conductor 52 made of different materials has been described in the above-described embodiment, the present invention is not limited thereto. The fuse element 50 may be entirely made of Cu or Ag or may contain Cu or Ag as a main component. In this case, the fuse element 50 contains Cu or Ag. The fuse element 50 may be made of Cu alone, Ag alone, a Cu alloy, or an Ag alloy.

With the above-described configuration, the electrical resistivity is likely to be less than when the fuse element 50 is a laminate of a high-melting-point metallic layer and a low-melting-point metallic layer. Therefore, the thickness of the fuse element 50 made of a monolayer body containing Cu or Ag can be made thinner even if it has the same electrical resistance in the same area as the fuse element 50 made of a laminate of a high-melting-point metallic layer and a low-melting-point metallic layer. If the thickness of the fuse element 50 is thinner, an amount of molten scatter when the fuse element 50 fuses is reduced in proportion to the thickness and the insulation resistance after the cutoff is higher.

### (Protective element (first modified example))

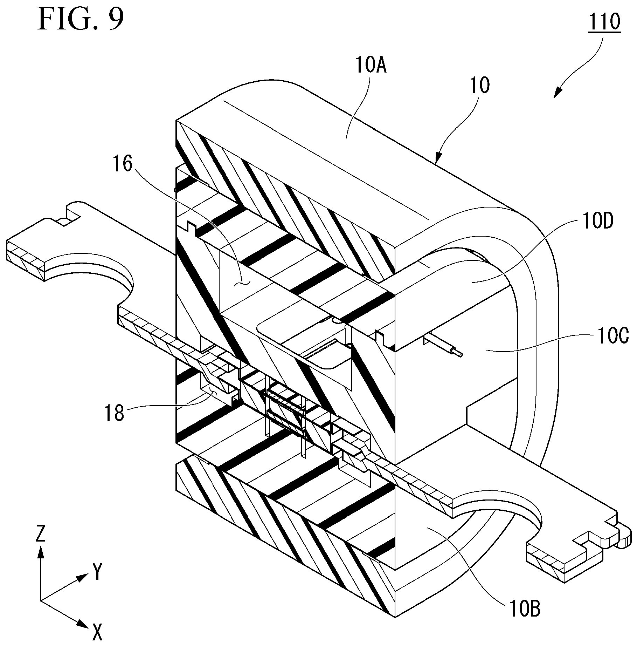

FIG. 9 is a perspective view (a cross-sectional perspective view) showing an appearance and cross-section of a protective element 110 of a first modified example. In this first modified example, a dimension of the internal pressure buffering space 16 in the up-and-down direction is smaller than that of the protective element 100 described in the above-described embodiment. Specifically, a dimension of the internal pressure buffering space 16 of the first modified example in the up-and-down direction is, for example, 1/5 to 1/3 of a dimension (an external height) of the entire protective element 110 in the up-and-down direction.

In this way, by appropriately setting the dimension of the internal pressure buffering space 16 in the up-and-down direction, the protective element 110 can be made compact.

### (Protective element (second modified example))

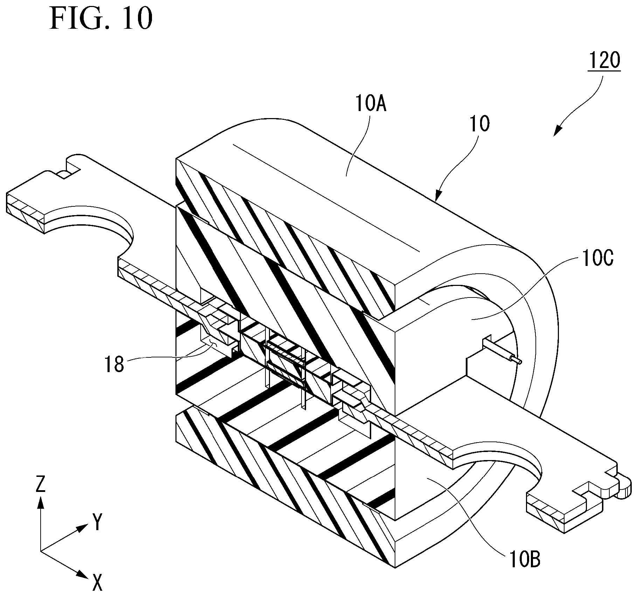

FIG. 10 is a perspective view (a cross-sectional perspective view) showing an appearance and cross-section of a protective element 120 of a second modified example. In this second modified example, an internal pressure buffering space 16 is not provided inside an insulation case 10. Moreover, the insulation case 10 does not include a third holding member 10D.

When a sudden increase in the internal pressure of the protective element 120 caused by a gas generated by an arc discharge that occurs when a fuse element 50 fuses can be sufficiently suppressed by a chamber (a space) 18 or the like, it is possible to configure the protective element 120 without providing the internal pressure buffering space 16. In this case, the protective element 120 can be made even more compact.

### (Protective element (third modified example))

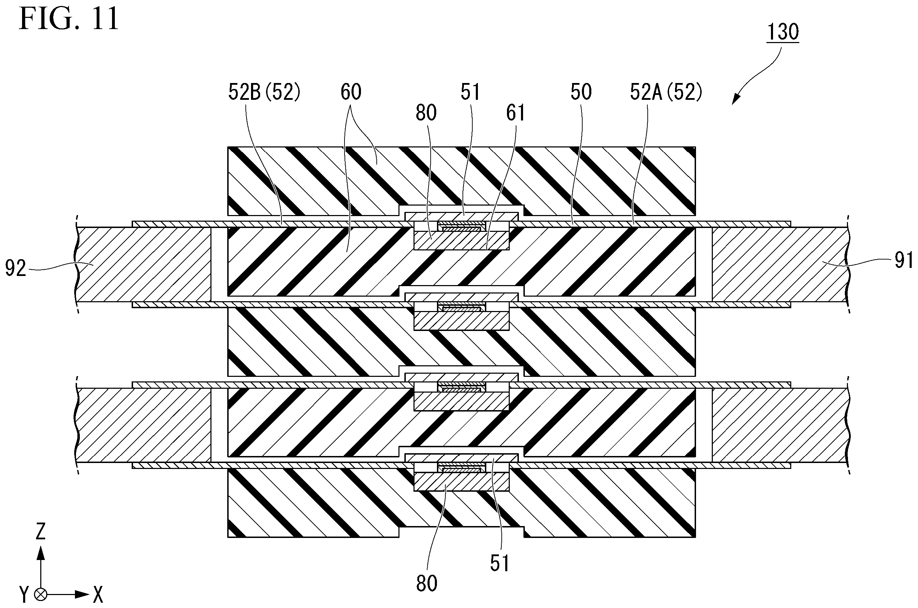

FIG. 11 is a cross-sectional view showing a part of a protective element 130 of a third modified example. In this third modified example, a heat generation element 80 is arranged on a lower side of a fusible conductor 51 and is connected to a lower surface of the fusible conductor 51. With this third modified example, an operation and effects similar to those of the above-described embodiment can be obtained.

### (Protective element (fourth modified example))

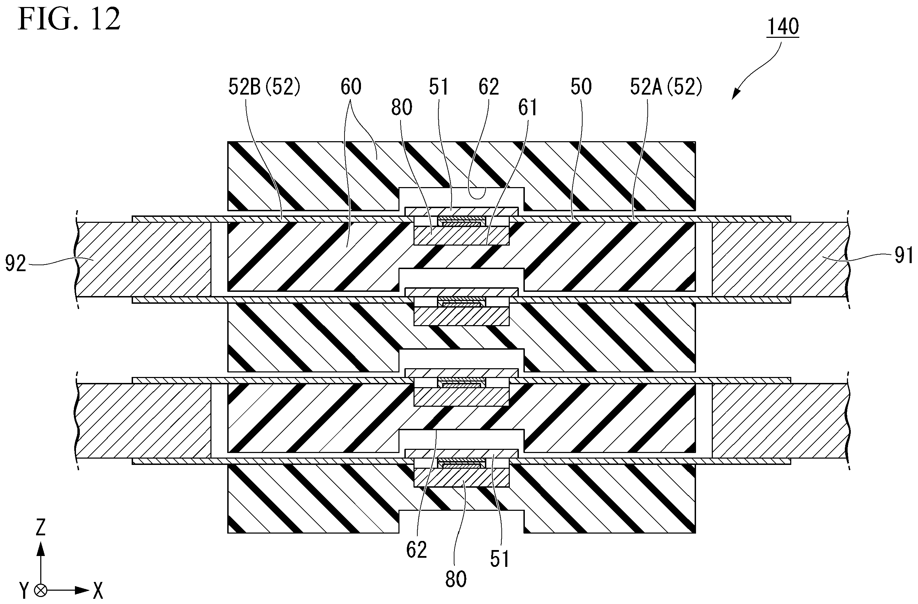

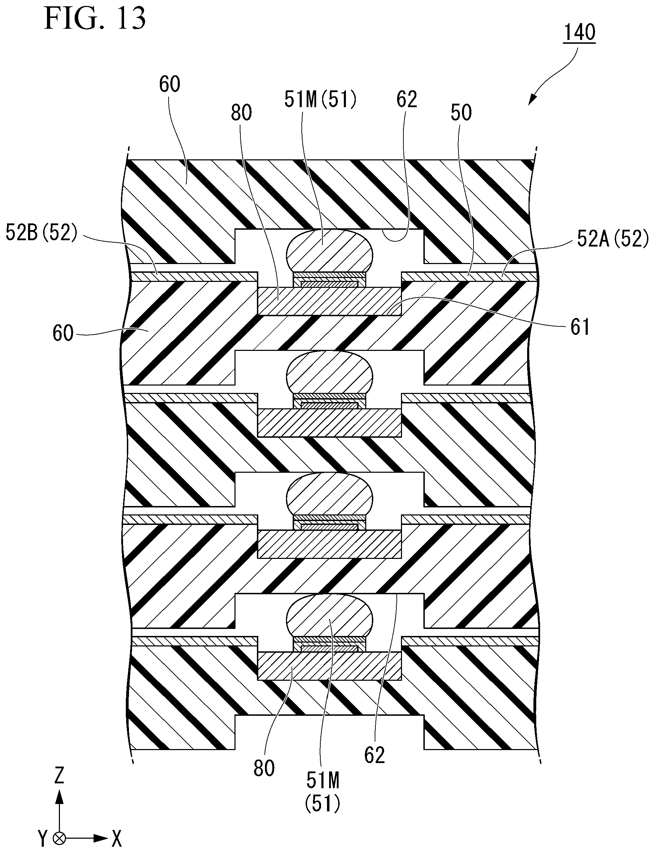

FIGS. 12 and 13 are cross-sectional views showing a part of a protective element 140 of a fourth modified example. As shown in FIG. 12, in this fourth modified example, an insulation member 60 includes a conductor-facing recess 62 recessed upward from a surface (a lower surface) of an insulation member 60 facing a fuse element 50. As shown in FIG. 13, when a heat generation element 80 generates heat according to a cutoff signal, at least a part of a fusible conductor 51M (51) melted due to heat is arranged in a conductor-facing recess 62.

In this case, when at least a part of the molten fusible conductor 51M is housed in the conductor-facing recess 62, an action of the surface tension of the fusible conductor 51M or the like is accelerated, such that the fusible conductor 51M can be stably separated from the metallic conductor 52. Thereby, it is possible to stably cut off an electrical connection (circuit) between the fusible conductor 51M (51) and the metallic conductor 52.

### (Protective element (fifth modified example))

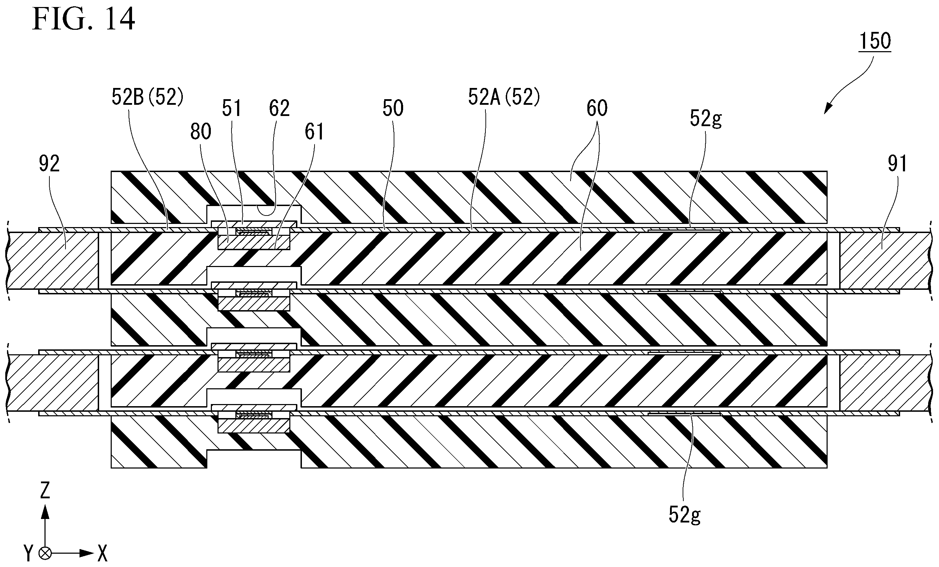

FIG. 14 is a cross-sectional view showing a part of a protective element 150 of a fifth modified example. As shown in FIG. 14, in this fifth modified example, a metallic conductor 52A (52) includes a cutoff part 52g having a higher electrical resistance than the fusible conductor 51.

In this case, when an overcurrent exceeding the rated current flows through the fuse element 50, the cutoff part 52g of the metallic conductor 52A having high electrical resistance becomes a heat spot and the fuse element 50 stably fuses in the cutoff part 52g.

Because a cutoff location due to the cutoff signal (the fusible conductor 51) and a cutoff location due to an overcurrent cutoff (the cutoff part 52g) can be provided separately, it is possible to arrange the insulation member 60 in more proximity to or in more contact with the cutoff part 52g in the up-and-down direction as shown in FIG. 14. Thus, it is possible to more quickly and reliably reduce the arc discharge that occurs when the cutoff part 52g fuses.

More specifically, in this fifth modified example, a cross-sectional area of the cross-section (a Y-Z cross-section) of the cutoff part 52g perpendicular to the current-carrying direction (the front-and-rear direction) is smaller than a cross-sectional area of a part of the metallic conductor 52 excluding the cutoff part 52g. In the example of the drawing, a dimension (a thickness dimension) of the cutoff part 52g in the up-and-down direction is smaller than a dimension of the part of the metallic conductor 52 excluding the cutoff part 52g in the up-and-down direction.

In this case, the simple structure enables the electrical resistance of the cutoff part 52g of the metallic conductor 52 to be higher than the electrical resistance of the other part, thereby reliably fusing the cutoff part 52g.

### (Protective element (sixth modified example))

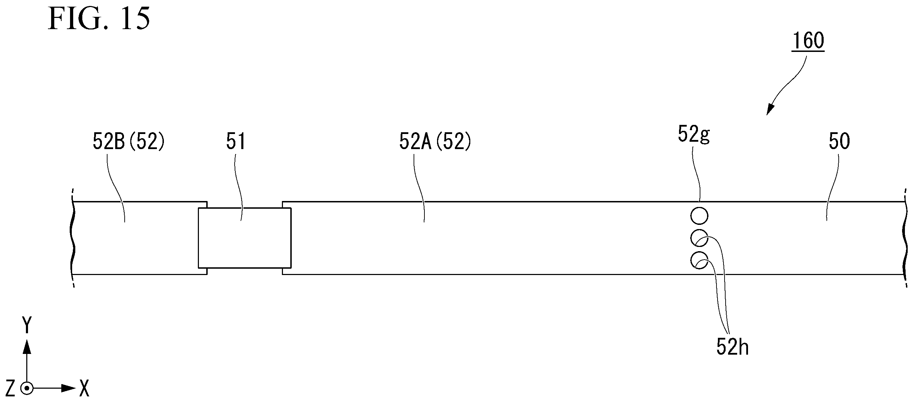

FIG. 15 is a top view showing a part (a fuse element 50) of a protective element 160 of a sixth modified example. As shown in FIG. 15, in this sixth modified example, a cutoff part 52g has a plurality of through holes 52h penetrating a metallic conductor 52 in an up-and-down direction. Thereby, a cross-sectional area of the cutoff part 52g in a cross-section (a Y-Z cross-section) perpendicular to a current-carrying direction (a front-and-rear direction) is smaller than a cross-sectional area of a part of the metallic conductor 52 excluding the cutoff part 52g.

This configuration can also obtain an operation and effects similar to those described above.

### (Protective element (seventh modified example))

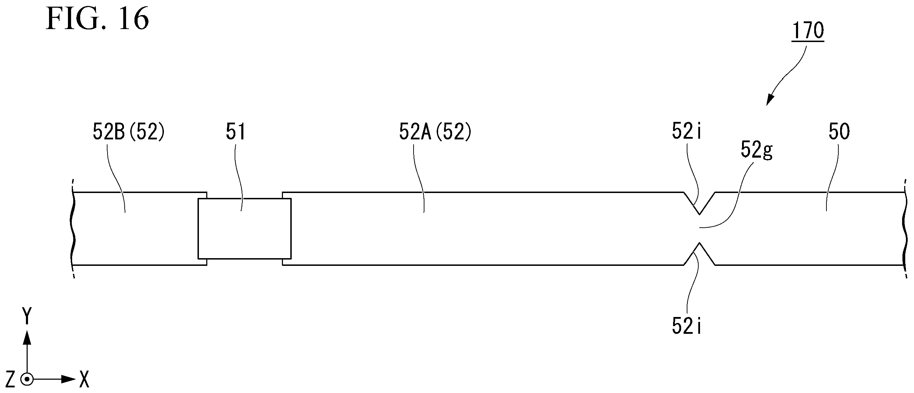

FIG. 16 is a top view showing a part (a fuse element 50) of a protective element 170 of a seventh modified example. As shown in FIG. 16, in this seventh modified example, a cutoff part 52g has a plurality of cutout parts 52i obtained by cutting out parts of a metallic conductor 52. Thereby, a cross-sectional area of the cutoff part 52g in a cross-section (a Y-Z cross-section) perpendicular to a current-carrying direction (a front-and-rear direction) is smaller than a cross-sectional area of a part of the metallic conductor 52 excluding the cutoff part 52g.

This configuration can also have an operation and effects similar to those described above.

Moreover, the cutoff part 52g of the metallic conductor 52 may be provided at a plurality of locations in the current-carrying direction in which an electric current flows through the fuse element 50.

### (Protective element (eighth modified example))

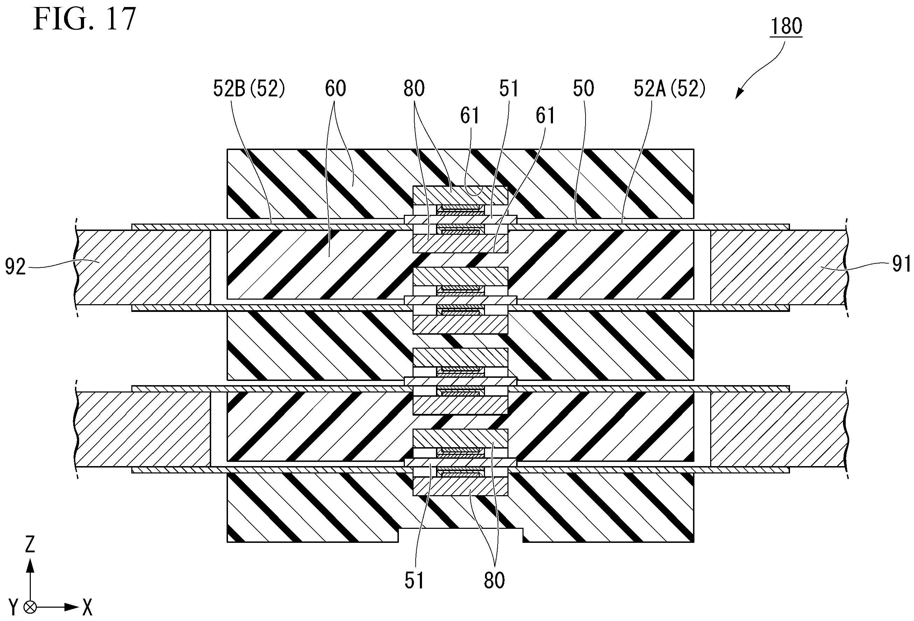

FIG. 17 is a cross-sectional view showing a part of a protective element 180 of an eighth modified example. As shown in FIG. 17, in this eighth modified example, heat generation elements 80 are respectively arranged on the upper side and the lower side of a fusible conductor 51. That is, the heat generation elements 80 are provided on both sides of a fuse element 50 in an up-and-down direction.

In this case, a pair of heat generation elements 80 arranged to sandwich the fuse element 50 in the up-and-down direction more reliably melt and fuse the fuse element 50 during an active cutoff.

### (Protective element (ninth modified example))

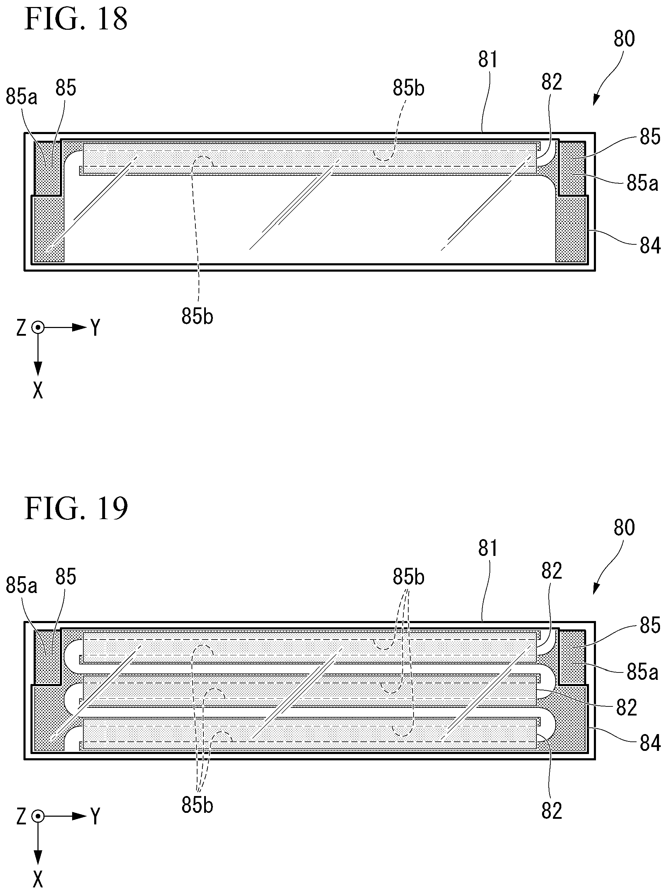

FIG. 18 is a top view showing a part (a heat generation element 80) of a protective element of a ninth modified example. As shown in FIG. 18, in this ninth modified example, the heat generation element 80 has one resistive layer 82. The resistive layer 82 is arranged on a part of an insulation substrate 81 in a front-and-rear direction, specifically, on an end of an upper surface of the insulation substrate 81 in the front-and-rear direction. Moreover, each of the pair of heat generation element electrodes 85 includes a first electrode part 85a and a second electrode part 85b extending from the first electrode part 85a in a left-and-right direction.

This ninth modified example can also obtain an operation and effects similar to those described above.

### (Protective element (tenth modified example))

FIG. 19 is a top view showing a part (a heat generation element 80) of a protective element of a tenth modified example. As shown in FIG. 19, in this tenth modified example, the heat generation element 80 includes a plurality of resistive layers 82 and may specifically have three resistive layers 82. The three resistive layers 82 are arranged on both ends on an upper surface of an insulation substrate 81 in a front-and-rear direction and in an intermediate part between the ends. Each of a pair of heat generation element electrodes 85 has one first electrode part 85a and three (multiple) second electrode parts 85b extending from the first electrode part 85a in a left-and-right direction and arranged side by side in the front-and-rear direction.

This tenth modified example can also obtain an operation and effects similar to those described above.

### (Protective element (eleventh modified example))

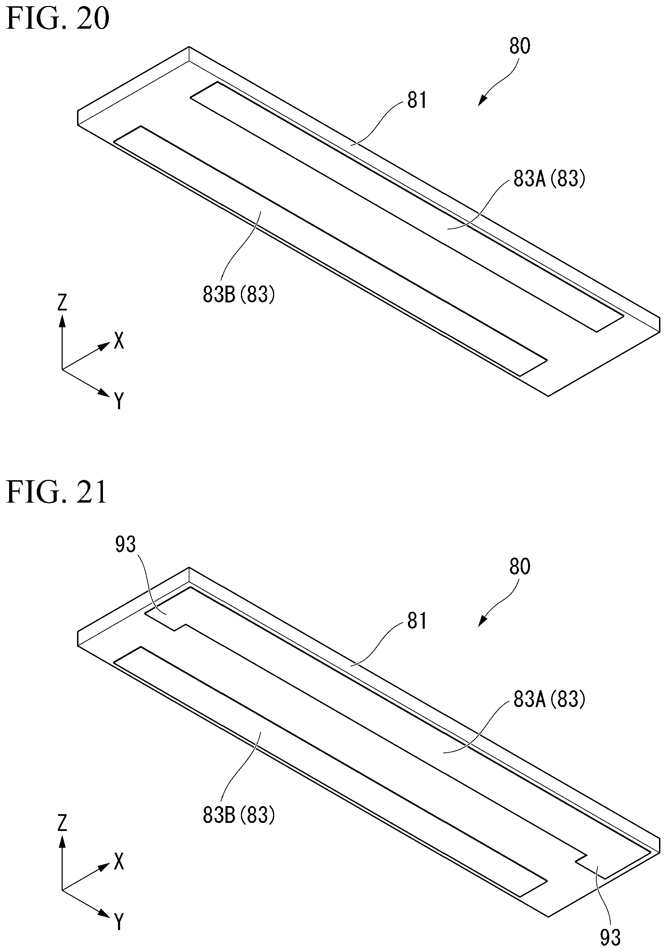

FIG. 20 is a perspective view showing a part (a heat generation element 80) of a protective element of an eleventh modified example. As shown in FIG. 20, in the eleventh modified example, the heat generation element 80 does not include an intermediate metallic layer 83C.

For example, if an amount of heat generated by a resistive layer 82 (the heat generation element 80) is large and a part of a fusible conductor 51 connected to the intermediate metallic layer 83C (an intermediate part of the fusible conductor 51 in a front-and-rear direction) entirely melts when an electric current is applied to the resistive layer 82, there is a possibility that a function of the intermediate metallic layer 83C (a function of holding a part of the fusible conductor 51) will not be sufficiently obtained. In this case, the manufacturing cost of the heat generation element 80 may be reduced without providing the intermediate metallic layer 83C as in the above-described configuration.

### (Protective element (twelfth modified example))

FIG. 21 is a perspective view showing a part of a protective element (a heat generation element 80) of a twelfth modified example. As shown in FIG. 21, in the twelfth modified example, the heat generation element 80 has a holding metallic layer 93 laminated on an insulation substrate 81. The holding metallic layer 93 faces a fuse element 50 in an up-and-down direction. Specifically, the holding metallic layer 93 is arranged on a plate surface (a lower surface in the example shown in the drawing), identical to a plate surface on which a metallic layer 83 is arranged, within a pair of plate surfaces facing the insulation substrate 81 in the up-and-down direction.

The holding metallic layer 93 is made of the same material as the metallic layer 83. The holding metallic layer 93 and the metallic layer 83 are formed on the insulation substrate 81, for example, by the same printing process. The holding metallic layer 93 is connected to one of a plurality of metallic layers 83. Specifically, the holding metallic layer 93 is connected to the first metallic layer 83A or the second metallic layer 83B and connected to the first metallic layer 83A in the example shown in the drawing. That is, the holding metallic layer 93 is formed integrally with the metallic layer 83. The holding metallic layer 93 is connected to an end of the metallic layer 83 in the direction (the left-and-right direction) intersecting the current-carrying direction of the fuse element 50. The holding metallic layer 93 is capable of holding a molten material of the fuse element 50. In addition, the "molten material of the fuse element 50" in the present specification includes a molten material of mounting solder 86 as well as a molten material of a fusible conductor 51. The molten material may also be referred to as a solder pool or the like.

The holding metallic layer 93 protrudes from an end of the first metallic layer 83A (the metallic layer 83) in the left-and-right direction. Specifically, the holding metallic layer 93 protrudes from an end of the first metallic layer 83A in the left-and-right direction to an outer side of the heat generation element 80 in the left-and-right direction (a side opposite the center in the left-and-right direction) and protrudes to an inner side of the heat generation element 80 in the front-and-rear direction (a central side in the front-and-rear direction). In the example of the drawing, a pair of holding metallic layers 93 are provided at an interval therebetween in the left-and-right direction. The pair of holding metallic layers 93 are connected to both ends of the first metallic layer 83A in the left-and-right direction. The pair of holding metallic layers 93 are arranged on both ends of the plate surface of the insulation substrate 81 facing the fuse element 50 side in the left-and-right direction and each extend in the front-and-rear direction.

According to this twelfth modified example, when heat of a resistive layer 82 is transmitted to the metallic layer 83 and a part of the fuse element 50 melts, the following operation and effects are obtained. That is, even if the molten material of the fuse element 50 flows along the metallic layer 83 in a direction (the left-and-right direction) in which the metallic layer 83 extends and accumulates near the end of the metallic layer 83, the molten material is held by the holding metallic layer 93 connected to this end. Because the holding metallic layer 93 can stably hold the molten material at a predetermined position and can control the flow of the molten material, a malfunction in which the molten material impedes a current-carrying cutoff (an active cutoff) can be stably suppressed.

Specifically, in the twelfth modified example, the holding metallic layer 93 is connected to the first metallic layer 83A or the second metallic layer 83B.

In this case, even if the molten material of the fuse element 50 accumulates near the end of the first metallic layer 83A in the extension direction (the left-and-right direction) or near the end of the second metallic layer 83B in the extension direction, the molten material can be stably held by the holding metallic layer 93 connected to this end.

### (Protective element (thirteenth modified example))

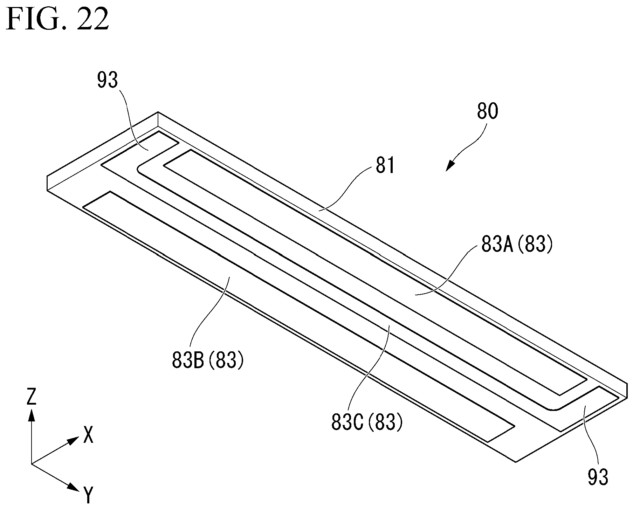

FIG. 22 is a perspective view showing a part of a protective element (a heat generation element 80) of a thirteenth modified example. As shown in FIG. 22, a holding metallic layer 93 may be connected to an intermediate metallic layer 83C. Specifically, the holding metallic layer 93 protrudes from the end of the intermediate metallic layer 83C in a left-and-right direction to an outer side of the heat generation element 80 in the left-and-right direction (a side opposite the center in the left-and-right direction) and also protrudes to the outer side of the heat generation element 80 in a front-and-rear direction (a side opposite the center in a front-and-rear direction). In the example of the drawing, a pair of holding metallic layers 93 are provided at an interval therebetween in the left-and-right direction. The pair of holding metallic layers 93 are connected to both ends of the intermediate metallic layer 83C in the left-and-right direction.

Moreover, the holding metallic layer 93 may also be connected to a first metallic layer 83A or a second metallic layer 83B.

According to this thirteenth modified example, even if the molten material of the fuse element 50 accumulates near the end of the intermediate metallic layer 83C in the extension direction (the left-and-right direction), the molten material can be stably held by the holding metallic layer 93 connected to this end. Moreover, when the holding metallic layer 93 is connected to the first metallic layer 83A or the second metallic layer 83B, even if the molten material of the fuse element 50 accumulates near an end of the first metallic layer 83A in the extension direction (the left-and-right direction) or near an end of the second metallic layer 83B in the extension direction, the molten material can be stably held by the holding metallic layer 93 connected to this end.

In other words, the holding metallic layer 93 is connected to any one of the intermediate metallic layer 83C, the first metallic layer 83A, and the second metallic layer 83B. More specifically, the holding metallic layer 93 is connected to one or more (i.e., at least one) of the intermediate metallic layer 83C, the first metallic layer 83A, and the second metallic layer 83B.

### (Protective element (fourteenth modified example))

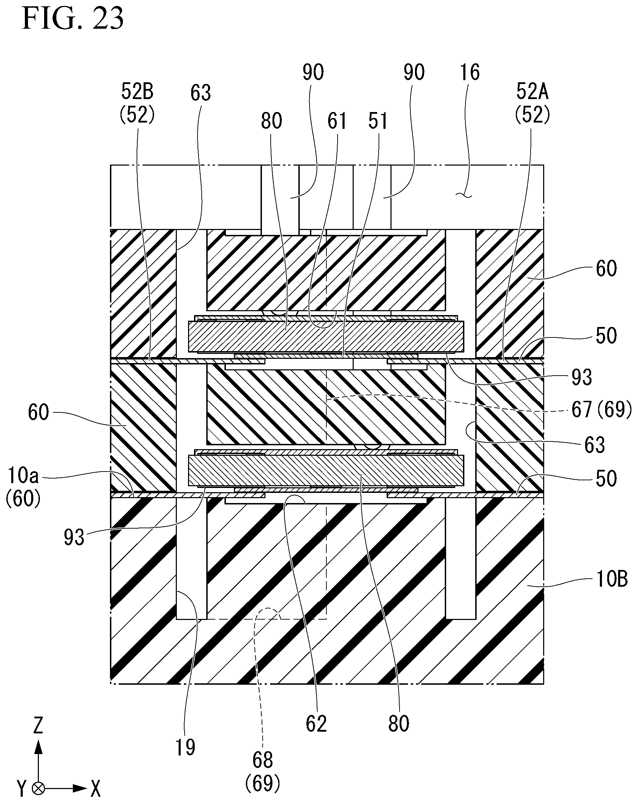

FIG. 23 is a cross-sectional view showing a part of a protective element of a fourteenth modified example and corresponds to a part of the cross-sectional view shown in FIG. 4. As shown in FIG. 23, in the fourteenth modified example, an insulation member 60 facing an upper fuse element 50 from a lower side among a plurality of insulation members 60 provided in the protective element has a housing through hole 67 (a housing recess 69). The housing through hole 67 penetrates the insulation member 60 in an up-and-down direction, and has, for example, an approximately rectangular hole shape. The housing through hole 67 is connected to an end of a slit 63 of the insulation member 60 in a left-and-right direction. A pair of housing through holes 67 are provided at an interval from each other in the insulation member 60 in a left-and-right direction. The pair of housing through holes 67 are connected to both ends of the slit 63 in the left-and-right direction.

The housing through hole 67 (the housing recess 69) is arranged directly below the holding metallic layer 93 of the upper heat generation element 80 of the pair of heat generation elements 80 provided in the protective element. In other words, the housing through hole 67 faces the holding metallic layer 93. The housing through hole 67 can house the molten material of the fuse element 50 held by the holding metallic layer 93.

Moreover, the insulation member 60 facing the lower fuse element 50 from a lower side among the plurality of insulation members 60 provided in the protective element has a housing hole 68 (the housing recess 69). In more detail, the insulation member 60 facing the lower fuse element 50 from the lower side is formed by a part of a bottom wall 10a of a first holding member 10B and this bottom wall 10a has the housing hole 68 recessed from the upper surface of the bottom wall 10a. The housing hole 68 is connected to an end of the groove-shaped recess 19 provided in the bottom wall 10a in the left-and-right direction. A pair of housing holes 68 are provided with an interval therebetween in the bottom wall 10a in the left-and-right direction. The pair of housing holes 68 are connected to both ends of the recess 19 in the left-and-right direction.

The housing hole 68 (the housing recess 69) is arranged directly below the holding metallic layer 93 of the lower heat generation element 80 within the pair of heat generation elements 80 provided in the protective element. In other words, the housing hole 68 faces the holding metallic layer 93. The housing hole 68 can house the molten material of the fuse element 50 held by the holding metallic layer 93.

Although not particularly shown in the drawing, the molten material of the fuse element 50 held by the holding metallic layer 93 has, for example, a droplet-like shape, and hangs down from the lower side of the holding metallic layer 93. As in this fourteenth modified example, the housing through hole 67 or the housing hole 68 serving as the housing recess 69 is provided on the insulation member 60 or the bottom wall 10a arranged on the lower side of the fuse element 50, such that the molten material held by each holding metallic layer 93 is arranged in the housing recess 69. The provision of the housing recess 69 can allow the holding metallic layer 93 to stably hold the molten material and suppress the occurrence of a malfunction such as an electric short-circuit caused by an unintended flow of the molten material or the like.

The present invention is not limited to the above-described embodiment and modifications and the like in the configuration can be made without departing from the scope and spirit of the present invention, for example, as described below. In addition, as shown in the modified example, constituent elements identical to those of the above-described embodiment are denoted by the same reference signs in the drawings of other embodiments or modified examples and differences will be mainly described in the following description.

### (Protective element (second embodiment))

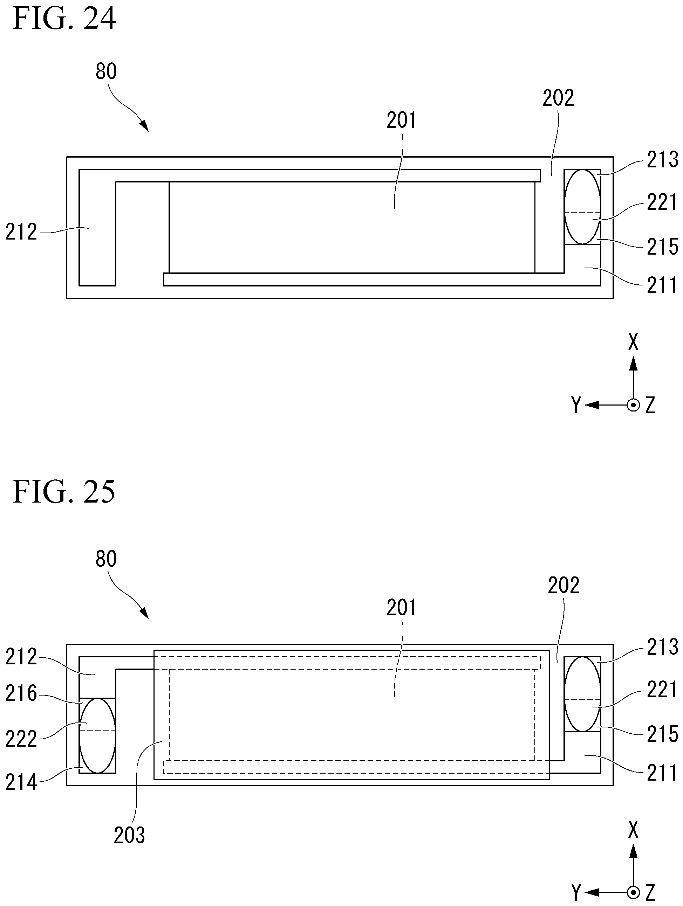

A protective element according to a second embodiment of the present invention will be described with reference to FIGS. 24 to 35. The protective element of the second embodiment is different from the first embodiment described above mainly in an arrangement aspect of electrodes on an insulation substrate 202 having a resistive layer 201. In addition, in each drawing of the present embodiment, constituent elements identical or substantially similar to those of the first embodiment may be denoted by the same reference signs or names and description thereof may be omitted.

FIG. 24 is a top view showing an example of a heat generation element 80 of the second embodiment. In the example of FIG. 24, the protective element includes an insulation substrate 202 including a resistive layer 201, a fusible conductor 51 (not shown in FIG. 24) mounted on the insulation substrate 202, a first electrode 211 and a second electrode 212 connected to the resistive layer 201, a third electrode 213 arranged on the insulation substrate 202, a fifth electrode 215 connected between the first electrode 211 and the third electrode 213, and a first metal 221 formed on the third electrode 213 and the fifth electrode 215.

FIG. 25 is a top view showing another example of the heat generation element 80 of the second embodiment. In the example of FIG. 25, the protective element includes an insulation substrate 202 including a resistive layer 201, a fusible conductor 51 (not shown in FIG. 25) mounted on the insulation substrate 202, a first electrode 211 and a second electrode 212 connected to the resistive layer 201, a third electrode 213 and a fourth electrode 214 arranged on the insulation substrate 202, a fifth electrode 215 connected between the first electrode 211 and the third electrode 213, a sixth electrode 216 connected between the second electrode 212 and the fourth electrode 214, a first metal 221 formed on the third electrode 213 and the fifth electrode 215, and a second metal 222 formed on the fourth electrode 214 and the sixth electrode 216. The resistive layer 201 is covered with an insulation layer 203 from the upper side.

The resistive layer 201 is made of a conductive material that generates heat when an electric current is applied, such as nichrome, W, Mo, Ru, or a material containing these. The resistive layer 201 is formed by mixing the powder of an alloy, composition, or compound of the above elements with a resin binder or the like, forming a pattern on the insulation substrate 202 formed in a paste shape using a screen-printing technique, firing the formed pattern, or the like. In addition, the material of the resistive layer 201 is not limited to the above, and can be changed in accordance with design specifications.

In the example of the drawing, the resistive layer 201 extends in the left-and-right direction when viewed from above. In the example of the drawing, the resistive layer 201 has a rectangular shape having a dimension in the left-and-right direction greater than a dimension in a front-and-rear direction. Specifically, the resistive layer 201 extends in a direction intersecting the current-carrying direction (which is approximately the front-and-rear direction and partially includes the up-and-down direction) in which an electric current flows through the fuse element 50 and extends in a direction (i.e., the left-and-right direction) perpendicular to the current-carrying direction in the example of the drawing. In addition, the shape of the resistive layer 201 is not limited to the above and can be changed in accordance with design specifications.

The insulation substrate 202 is, for example, a substrate having an insulation property of alumina, glass ceramics, mullite, zirconia, or the like. In addition, the material of the insulation substrate 202 is not limited to the above and can be changed in accordance with design specifications.

In the example of the drawing, the insulation substrate 202 has a rectangular shape larger than the resistive layer 201 when viewed from above. Specifically, the insulation substrate 202 extends in a direction intersecting the current-carrying direction and extends in the direction (the left-and-right direction) perpendicular to the current-carrying direction in the example of the drawing. The shape of the insulation substrate 202 is not limited to the above and can be changed in accordance with design specifications.

The insulation layer 203 is arranged to protect the resistive layer 201. For example, an insulation material such as ceramics or glass can be used as a material of the insulation layer 203. The insulation layer 203 can be formed by a method for applying and firing a paste of an insulation material or the like. In addition, the material of the insulation layer 203 is not limited to the above and can be changed in accordance with design specifications.

In the example of the drawing, the insulation layer 203 has a rectangular shape larger than the resistive layer 201 and smaller than the insulation substrate 202 when viewed from above. Specifically, the insulation layer 203 extends in a direction intersecting the current-carrying direction and extends in the direction (the left-and-right direction) perpendicular to the current-carrying direction in the example of the drawing. In addition, the shape of the insulation layer 203 is not limited to the above and can be changed in accordance with design specifications.

The first electrode 211 and the second electrode 212 include a part extending in the front-and-rear direction at the end of the upper surface of the insulation substrate 202 in the left-and-right direction and a part extending in the left-and-right direction from an outer end of this part and connected to the resistive layer 201. **In** the example of the drawing, the first electrode 211 and the second electrode 212 have mutually opposite L-shapes when viewed from above. A part of the first electrode 211 and the second electrode 212 is externally exposed without being covered by the insulation layer 203. In addition, the shapes of the first electrode 211 and the second electrode 212 are not limited to the above and can be changed in accordance with design specifications.

The third electrode 213 and the fourth electrode 214 are arranged apart from the first electrode 211 and the second electrode 212 in the front-and-rear direction at the left and right ends of the upper surface of the insulation substrate 202. In the example of the drawing, each of the third electrode 213 and the fourth electrode 214 has a rectangular shape when viewed from above. The third electrode 213 and the fourth electrode 214 are externally exposed without being covered by the insulation layer 203. In addition, the shapes of the third electrode 213 and the fourth electrode 214 are not limited to the above and can be changed in accordance with design specifications.

The fifth electrode 215 is arranged between the first electrode 211 and the third electrode 213 at an end of the upper surface of the insulation substrate 202 in the left-and-right direction. In the example of the drawing, the fifth electrode 215 has a rectangular shape when viewed from above. The fifth electrode 215 is externally exposed without being covered by the insulation layer 203. The shape of the fifth electrode 215 is not limited to the above and can be changed in accordance with design specifications.

The fifth electrode 215 is, for example, a metal made of Ag (silver) or Cu (copper) or an alloy containing Ag or Cu as a main component. It is only necessary for the fifth electrode 215 to contain Ag or Cu. The fifth electrode 215 may be Ag alone, Cu alone, an Ag alloy, or a Cu alloy. The Ag alloy is an alloy with the highest content of Ag among the metals contained in the alloy and the Cu alloy is an alloy with the highest content of Cu among the metals contained in the alloy. In addition, the material of the fifth electrode 215 is not limited to the above and can be changed in accordance with design specifications.

The sixth electrode 216 is arranged between the second electrode 212 and the fourth electrode 214 at the other end of the upper surface of the insulation substrate 202 in the left-and-right direction (an end opposite the fifth electrode 215 in the left-and-right direction). In the example of the drawing, the sixth electrode 216 has a rectangular shape when viewed from above. The sixth electrode 216 is externally exposed without being covered by the insulation layer 203. In addition, the shape of the sixth electrode 216 is not limited to the above and can be changed in accordance with design specifications.

The sixth electrode 216 is, for example, a metal made of Ag or Cu or an alloy containing Ag or Cu as a main component. The sixth electrode 216 can use, for example, the same material as the fifth electrode 215. In addition, the material of the sixth electrode 216 is not limited to the above and can be changed in accordance with design specifications.

The first metal 221 is formed to straddle the upper surfaces of the third electrode 213 and the fifth electrode 215 in the front-and-rear direction. In the example of the drawing, the first metal 221 has an oval shape longer in the front-and-rear direction when viewed from above. The first metal 221 is externally exposed without being covered by the insulation layer 203. The shape of the first metal 221 is not limited to the above and can be changed in accordance with design specifications.

The first metal 221 is, for example, Sn (tin) or an alloy containing Sn as a main component. It is only necessary for the first metal 221 to contain Sn. The first metal 221 may be Sn alone or an Sn alloy. The Sn alloy is an alloy containing Sn as a main component. The Sn alloy has the highest Sn content among all metals contained in the alloy. Examples of Sn alloys include an Sn-Bi alloy, an In-Sn alloy, an Sn-Ag-Cu alloy, and the like. In addition, the material of the first metal 221 is not limited to the above and can be changed in accordance with design specifications.

The second metal 222 is formed to straddle the upper surfaces of the fourth electrode 214 and the sixth electrode 216 in the front-and-rear direction. In the example of the drawing, the second metal 222 has an oval shape longer in the front-and-rear direction when viewed from above. The second metal 222 is externally exposed without being covered by the insulation layer 203. The shape of the second metal 222 is not limited to the above and can be changed in accordance with design specifications.

The second metal 222 is, for example, Sn or an alloy containing Sn as a main component. The second metal 222 can use, for example, the same material as the first metal 221. In addition, the material of the second metal 222 is not limited to the above and can be changed in accordance with design specifications.

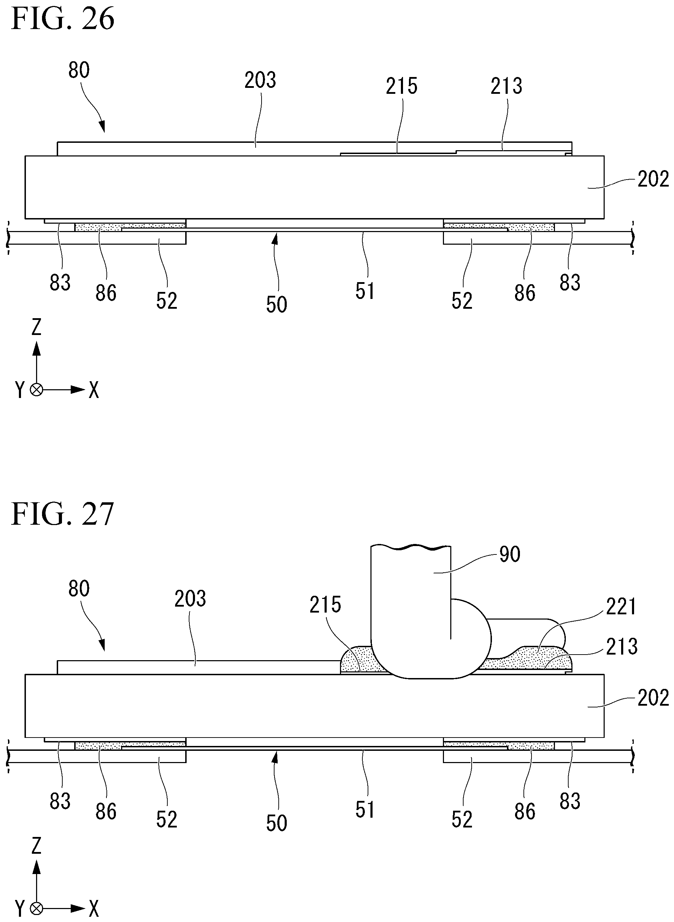

FIG. 26 is a side view of the insulation substrate 202 before the current-carrying member 90 is connected according to the second embodiment. FIG. 27 is a side view of the insulation substrate 202 before a current-carrying process after the current-carrying member 90 is connected according to the second embodiment.

Referring to FIGS. 26 and 27 together, the thickness of the fifth electrode 215 is thinner than the thickness of the third electrode 213. In the example of the drawing, the thickness of the electrode corresponds to a minimum length of the electrode in the up-and-down direction.

Although not shown in the drawing, the thickness of the sixth electrode 216 is thinner than the thickness of the fourth electrode 214. For example, the thickness of the sixth electrode 216 may be approximately the same as the thickness of the fifth electrode 215. For example, the thickness of the fourth electrode 214 may be approximately the same as the thickness of the third electrode 213. In addition, a relationship between thicknesses of the respective electrodes is not limited to the above and can be changed in accordance with design specifications.

A current-carrying member 90 for the resistive layer 201 is connected to the third electrode 213 and the fourth electrode 214. The current-carrying member 90 is, for example, a power supply line. In addition, the current-carrying member 90 is not limited to a wire such as a power supply line, and may be a member that supplies power (a power supply member). For example, the form of the current-carrying member 90 is not limited to the above and can be changed in accordance with design specifications.

In the example of the drawing, the third electrode 213 is connected to the current-carrying member 90 via the first metal 221 formed on the third electrode 213 and the fifth electrode 215. The first metal 221, for example, functions as solder for connecting the third electrode 213 and the current-carrying member 90. In the present embodiment, a thickness of the fifth electrode 215 to which the current-carrying member 90 is not connected is thinner than a thickness of the third electrode 213 to which the current-carrying member 90 is connected.

Although not shown in the drawing, the fourth electrode 214 is connected to the current-carrying member 90 via the second metal 222 formed on the fourth electrode 214 and the sixth electrode 216. The second metal 222, for example, functions as solder for connecting the fourth electrode 214 and the current-carrying member 90. In the present embodiment, a thickness of the sixth electrode 216 to which the current-carrying member 90 is not connected is thinner than a thickness of the fourth electrode 214 to which the current-carrying member 90 is connected.

In the present embodiment, the fusible conductor 51 is cut off due to heat generated by the resistive layer 201 and a resistance value between the third electrode 213 and the fourth electrode 214 increases by 10 times or more due to dissolution of the fifth electrode 215 caused by melting of the first metal 221 and/or dissolution of the sixth electrode 216 caused by melting of the second metal 222.

Hereinafter, as an example, an example in which the fusible conductor 51 is cut off due to heat generated by the resistive layer 201 and a resistance value between the third electrode 213 and the second electrode 212 increases by 10 times or more due to dissolution of the fifth electrode 215 caused by melting of the first metal 221 will be described.

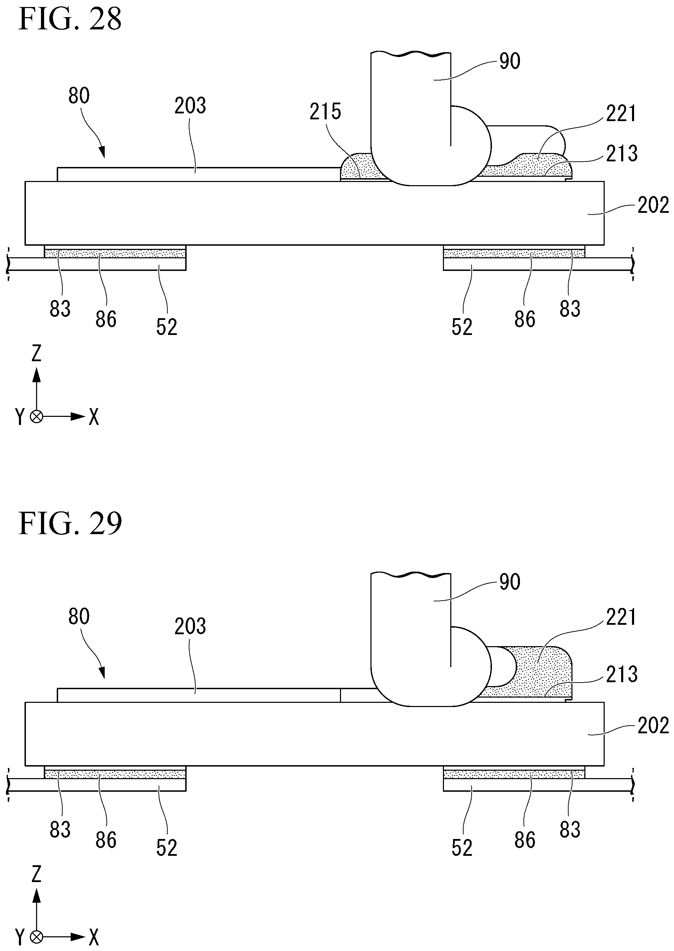

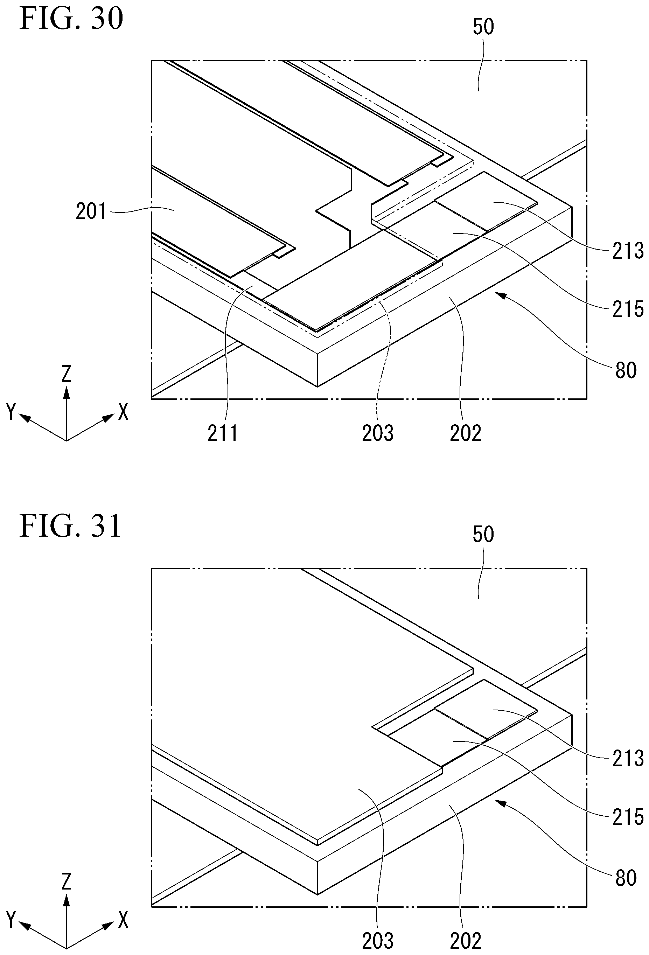

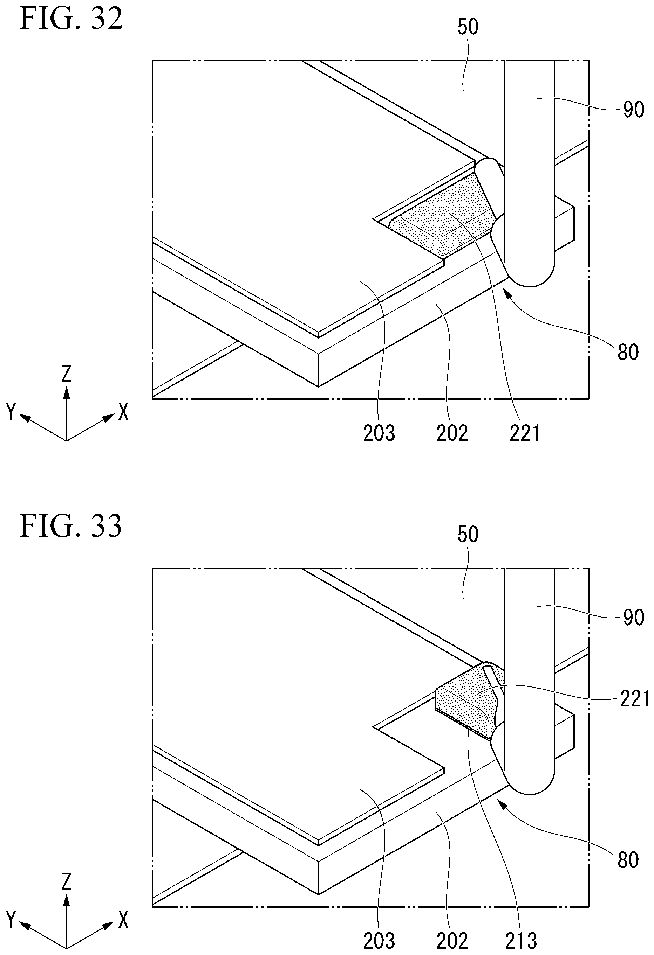

FIG. 28 is a side view of the insulation substrate 202 showing a state in which a part of the fuse element 50 has fused after the current-carrying process according to the second embodiment. FIG. 29 is a side view of the insulation substrate 202 showing a state in which a part of an electrode of the heat generation element 80 has fused according to the second embodiment. FIG. 30 is a perspective view of the insulation substrate 202 before the current-carrying member 90 is connected (wherein the insulation layer 203 is indicated by a two-dot chain line) according to the second embodiment. FIG. 31 is a perspective view of the insulation substrate 202 before the current-carrying member 90 is connected (wherein the insulation layer 203 is indicated by a solid line) according to the second embodiment. FIG. 32 is a perspective view of the insulation substrate 202 after the current-carrying member 90 is connected according to the second embodiment. FIG. 33 is a perspective view of the insulation substrate 202 showing a state in which a part of the electrode of the heat generation element 80 has fused according to the second embodiment.

As shown in FIG. 28, when the resistive layer 201 generates heat, at least a part of the fusible conductor 51 (an example of a part of the fuse element 50) fuses and the electrical connection of the fuse element 50 is cut off. In the example of FIG. 28, the fusible conductor 51 fuses (or is cut off), and more specifically, the fusible conductor 51 fuses due to the heating of the resistive layer 201.

Subsequently, when the resistive layer 201 continues to generate heat, the entire insulation substrate 202 heats up. Because the insulation substrate 202 is a rectangular plate long in the left-and-right direction when viewed from above, a temperature of the central side of the insulation substrate 202 in the left-and-right direction is higher than a temperature of the outer end side in the left-and-right direction due to the heat generated by the resistive layer 201. Moreover, because heat from the current-carrying member 90 escapes at the outer end side of the insulation substrate 202 in the left-and-right direction, the temperature of the outer end side of the insulation substrate 202 in the left-and-right direction is lower than the temperature of the central side in the left-and-right direction. The insulation substrate 202 has a temperature distribution in which the temperature of the central side in the left-and-right direction is high and the temperature of the outer end side in the left-and-right direction is low.

As shown in FIGS. 29 and 33, after the fusible conductor 51 fuses, the solder (the first metal 221) of the current-carrying member 90 melts. In this case, the fifth electrode 215 having a thinner thickness than the third electrode 213 melts into the molten solder (the first metal 221). The molten solder corrodes the fifth electrode 215 and is attracted by surface tension to the third electrode 213 side having higher wettability than the insulation substrate 202. In the present embodiment, the fifth electrode 215 having a thinner thickness than the third electrode 213 functions as a cutoff part configured to cut off the current-carrying path of the heat generation element 80. On the other hand, the third electrode 213 having a thicker thickness than the fifth electrode 215 functions as a solder pool that attracts the molten solder (solder that has corroded the fifth electrode 215).

In the examples of FIGS. 29 and 33, the fifth electrode 215 is dissolved and more specifically lost due to a phenomenon in which the fifth electrode 215 is corroded by the molten solder (so-called solder corrosion). In addition, the fifth electrode 215 is not necessarily lost completely between the first electrode 211 and the third electrode 213, and a melt residue may remain (a part of the fifth electrode 215 may remain).

It is only necessary to configure the protective element of the present embodiment so that, for example, the resistance value between the third electrode 213 and the second electrode 212 increases by 10 times or more due to the dissolution of the fifth electrode 215 caused by the melting of the first metal 221, and the heat generation of the resistive layer 201 is suppressed. For example, it is only necessary to configure the fifth electrode 215 so that even if it remains partially, the resistance value increases due to the thinning of the thickness and no electric current flows through the current-carrying path of the heat generation element 80. For example, when the resistance value between the third electrode 213 and the second electrode 212 increases by 10 times or more, an amount of generated heat becomes 1/10 or less and the risk of destruction due to overheating in a protective element is reduced.

The protective element of the present embodiment described above includes the insulation substrate 202 having the resistive layer 201; the fusible conductor 51 mounted on the insulation substrate 202; the first electrode 211 and the second electrode 212 connected to the resistive layer 201; the third electrode 213 and the fourth electrode 214 arranged on the insulation substrate 202; the fifth electrode 215 connected between the first electrode 211 and the third electrode 213; the sixth electrode 216 connected between the second electrode 212 and the fourth electrode 214; the first metal 221 formed on the third electrode 213 and the fifth electrode 215; and the second metal 222 formed on the fourth electrode 214 and the sixth electrode 216, wherein a thickness of the fifth electrode 215 is thinner than a thickness of the third electrode 213, wherein a thickness of the sixth electrode 216 is thinner than a thickness of the fourth electrode 214, and wherein the fusible conductor 51 fuses due to heat generated by the resistive layer 201 and a resistance value between the third electrode 213 and the fourth electrode 214 increases by 10 times or more due to dissolution of the fifth electrode 215 caused by melting of the first metal 221 and/or dissolution of the sixth electrode 216 caused by melting of the second metal 222.

According to this configuration, after the fusible conductor 51 fuses due to the heat generated by the resistive layer 201, the resistance value between the third electrode 213 and the fourth electrode 214 increases by 10 times or more due to the dissolution of the fifth electrode 215 and/or the dissolution of the sixth electrode 216 by the molten solder, such that the amount of generated heat is reduced to 1/10 or less. Therefore, it is possible to reduce the risk of destruction due to overheating in a protective element. In addition, in a structure in which the current-carrying path of the fuse element 50 through which a large current flows and the current-carrying path of the heat generation element 80 are electrically cut off, the heat generation element 80 can stop automatic heat generation after the fuse element 50 fuses.

In the present embodiment, the first metal 221 is tin or an alloy containing tin as a main component and the fifth electrode 215 is a metal made of silver or copper, or an alloy containing silver or copper as a main component.

According to this configuration, because the fifth electrode 215 easily melts into the molten first metal 221, solder corrosion easily occurs.

In the present embodiment, the current-carrying member 90 for the resistive layer 201 is connected to the third electrode 213 and the fourth electrode 214.

With this configuration, because thicknesses of the fifth electrode 215 and the sixth electrode 216 to which the current-carrying member 90 is not connected can be easily made thin, solder corrosion easily occurs.

Although not shown in the drawing, for example, the heat generation element of a conventional protective element has the following problems (1) to (3).
(1) A manufacturing process can be facilitated if it is a low-voltage specification of several tens of volts for mobile devices and the like. However, for specifications of several hundred volts and several hundred amperes under the assumption of a large-capacity battery, it becomes difficult to ensure the withstand voltage of the heat generation element and the insulation after the fusible conductor is cut off.
(2) Although the molten material of the fuse element is concentrated in a single third electrode arranged between the first electrode and the second electrode as a method for fusing the heat generation element, it is difficult to stably fuse large fuse elements for large currents.
(3) In a structure in which the current-carrying path of the fuse element through which a large current flows and the current-carrying path of the heat generation element are electrically independent, it is difficult to automatically stop the heat generation element after the fuse element fuses.

On the other hand, the present embodiment can solve all of the above-described problems (1) to (3) with the above-described configuration.

### (Modified example of second embodiment)

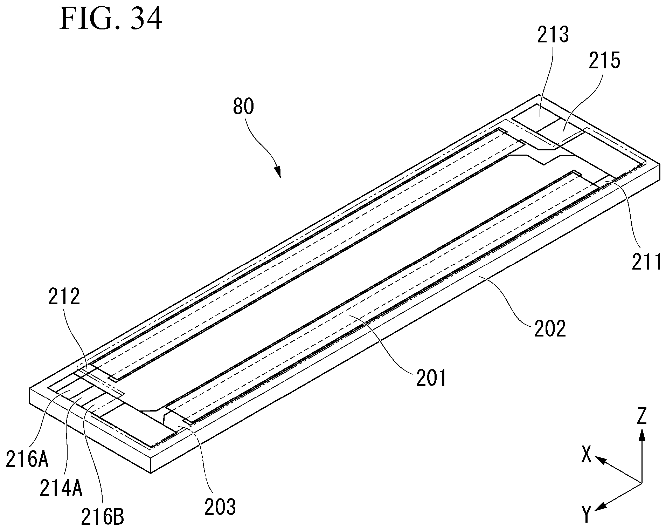

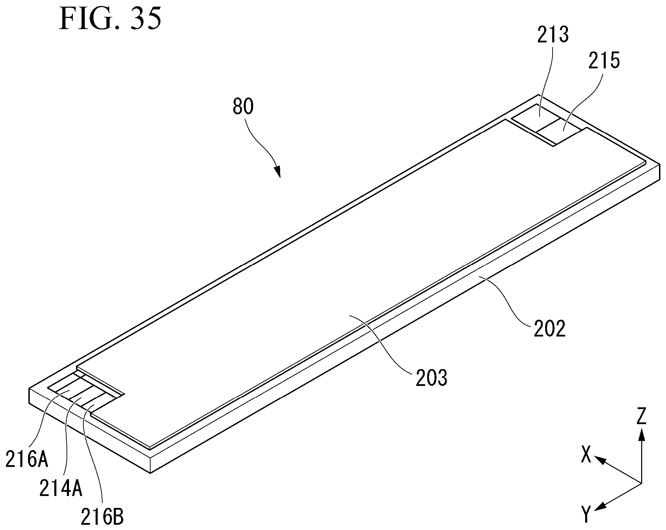

FIG. 34 is a perspective view of an insulation substrate 202 before a current-carrying member 90 is connected (wherein an insulation layer 203 is indicated by a two-dot chain line) according to a modified example of the second embodiment. FIG. 35 is a perspective view of the insulation substrate 202 before a current-carrying member 90 is connected (wherein an insulation layer 203 is indicated by a solid line) according to a modified example of the second embodiment. In addition, in each of FIGS. 34 and 35, constituent elements identical or substantially similar to those of the above-described embodiment may be denoted by the same reference signs or names and description thereof may be omitted.

Although a sixth electrode 216 connected between a second electrode 212 and a fourth electrode 214 is provided at one location between the second electrode 212 and the fourth electrode 214 in the example shown in FIG. 25, the present invention is not limited thereto. As shown in FIGS. 34 and 35, for example, sixth electrodes 216A and 216B may be provided at two locations on both sides of a fourth electrode 214A to which the current-carrying member 90 is connected. For example, the sixth electrodes 216A and 216B having thinner thicknesses than the fourth electrode 214A may be provided on both sides of the fourth electrode 214A. For example, an installation aspect of the sixth electrodes 216A and 216B may be changed in accordance with design specifications.

### (Protective element (third embodiment))

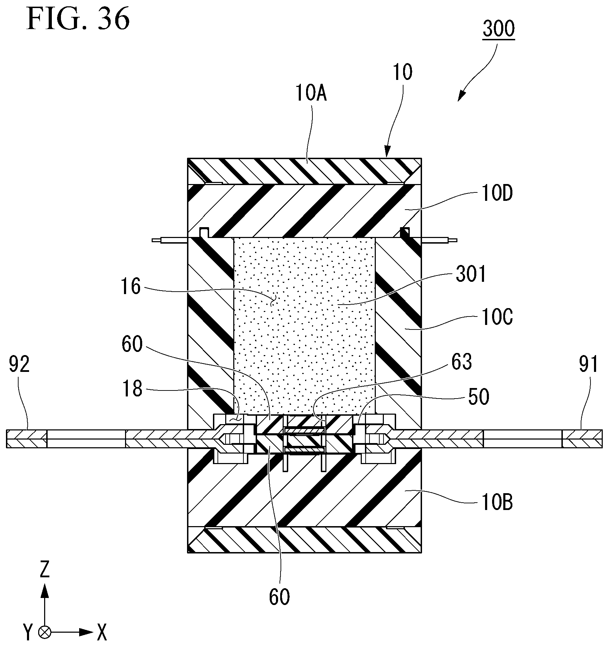

A protective element 300 according to a third embodiment of the present invention will be described with reference to FIGS. 36 to 40. The protective element 300 of the third embodiment is mainly different from the above-described first embodiment in that a filler 301 is arranged in an internal pressure buffering space 16 formed inside an insulation case 10. In addition, in each drawing of the present embodiment, constituent elements identical or substantially similar to those of the first embodiment may be denoted by the same reference signs or names and description thereof may be omitted.

FIG. 36 is a cross-sectional view showing an example of the filler 301 of the third embodiment.

Referring to FIG. 36, the protective element 300 includes a first terminal 91 and a second terminal 92 arranged apart from each other in a front-and-rear direction (an example of a first direction); a fuse element 50 arranged between the first terminal 91 and the second terminal 92 to electrically connect the first terminal 91 and the second terminal 92 and configured to fuse when a predetermined electric current or more flows; an insulation member 60 arranged to face the fuse element 50 from both sides in an up-and-down direction (an example of a second direction perpendicular to the first direction); an insulation case 10 configured to house a part of the first terminal 91, a part of the second terminal 92, the fuse element 50, and the insulation member 60, wherein an internal pressure buffering space 16 communicating with a space where the fuse element 50 is arranged is formed inside the insulation case 10; and a filler 301 arranged in at least a part of the internal pressure buffering space 16 and configured to be in contact with a surface of at least one insulation member 60 opposite a surface facing the fuse element 50.

The filler 301 has a function of filtering and cooling the metal gas generated by the arc discharge that occurs in a part desired to be cut off in a circuit in which an overcurrent is flowing and quickly and safely reducing the arc discharge. In addition, the filler 301 is not limited to a granular inorganic insulation material and various materials can be used. For example, an aspect of the filler 301 can be changed in accordance with design specifications.

In the example of the drawing, the filler 301 is filled into the internal pressure buffering space 16 inside the protective element 300. A part of the filler 301 is in contact with an upper surface of the insulation member 60 located on an upper side of the upper fuse element 50. For example, first, before the third holding member 10D (corresponding to a cover member constituting the insulation case 10) is mounted on the second holding member 10C, the filler 301 is placed in the internal pressure buffering space 16. Subsequently, the third holding member 10D is attached to the second holding member 10C, such that the filler 301 is filled into the internal pressure buffering space 16.

In addition, the filler 301 is not necessarily completely filled into the internal pressure buffering space 16 without gaps, and may be filled with gaps in a part of the internal pressure buffering space 16. For example, the filler 301 is arranged in at least a part of the internal pressure buffering space 16 and it is only necessary for at least one insulation member 60 to be in contact with a surface opposite the surface facing the fuse element 50 (the upper surface in the example of the drawing).

For example, if the filler comes into contact with the surface of the fuse element and covers the surface of the fuse element, metallic scatter generated when the fuse element fuses may continuously accumulate on a filler surface to form a conductive path, which may lead to a risk of prolonging the arc discharge and/or a decrease in insulation resistance after a cutoff.

Therefore, it is preferable to arrange the filler 301 to avoid contact with the fuse element 50 as much as possible.

In addition, the orientation of the protective element 300 is not limited to an arrangement in which its up-and-down direction (an example of a second direction perpendicular to the first direction) is along a gravity direction, but may be arranged to intersect the gravity direction. For example, when the filler 301 is filled without gaps into the internal pressure buffering space 16, even if the protective element 300 is arranged to be inclined with respect to the gravity direction, at least one insulation member 60 is in contact with a surface opposite the surface facing the fuse element 50. For example, an arrangement aspect of the protective element 300 can be changed in accordance with design specifications.

The filler 301 is, for example, silica sand. The silica sand is granular SiO₂ (quartz glass). The silica sand is sand made of quartz grains as a main component. Specifically, the silica sand is white coarse-grained sand that contains a large amount of quartz grains, especially among sandy deposits and weathering products that contain silicates as a main component.

In addition, the filler 301 is not limited to silica sand and various materials can be used. For example, the filler 301 may be a spherical member (e.g., ceramic beads or ceramic balls) formed of a ceramic material such as quartz glass, alumina, or zirconia. For example, the filler 301 may be a porous member (e.g., porous ceramic) formed of a ceramic material such as quartz glass, alumina, or zirconia. For example, the filler 301 may be a spherical member (e.g., plastic beads or plastic balls) formed of a plastic material such as nylon or PMMA (acrylic resin). For example, the filler 301 may be a porous member (e.g., porous plastic) formed of a plastic material such as nylon or PMMA.

A through hole 63 (e.g., a slit) penetrating the insulation member 60 in the up-and-down direction may be formed in the insulation member 60. A part of the filler 301 entering the through hole 63 may be in contact with a part of the fuse element 50. In addition, the filler 301 entering the through hole 63 may not be in contact with a part of the fuse element 50. For example, a contact aspect between the filler 301 entering the through hole 63 and the fuse element 50 may be changed in accordance with design specifications.

The protective element 300 further includes a heat generation element 80 arranged to overlap the fuse element 50 in the up-and-down direction. The fuse element 50 may include a fusible conductor 51 laminated with the heat generation element 80 and a metallic conductor 52 configured to connect the first terminal 91 or the second terminal 92 to the fusible conductor 51. The fusible conductor 51 may have a lower melting temperature than the metallic conductor 52.

The protective element 300 further includes a power supply member 90 configured to supply an electric current to the heat generation element 80. The insulation case 10 houses a part of the power supply member 90 and the heat generation element 80. The heat generation element 80 generates heat by receiving an electric current from the power supply member 90 and melts and fuses at least a part of the fuse element 50.

The protective element 300 of the present embodiment described above includes a first terminal 91 and a second terminal 92 arranged apart from each other in a first direction; a fuse element 50 arranged between the first terminal 91 and the second terminal 92 to electrically connect the first terminal 91 and the second terminal 92 and configured to fuse when a predetermined electric current or more flows; an insulation member 60 arranged to face the fuse element 50 from both sides in a second direction perpendicular to the first direction; an insulation case 10 configured to house a part of the first terminal 91, a part of the second terminal 92, the fuse element 50, and the insulation member 60, wherein an internal pressure buffering space 16 communicating with a space 18 where the fuse element 50 is arranged is formed inside the insulation case 10; and a filler 301 arranged in at least a part of the internal pressure buffering space 16 and configured to be in contact with a surface of at least one insulation member 60 opposite a surface facing the fuse element 50.

According to this configuration, a configuration in which the insulation members 60 sandwich the fuse element 50 from the upper side and the lower side is adopted. Thereby, the air in the space (the cutoff space) around the fusible part of the fuse element 50 is eliminated as much as possible, such that an amount of generated air plasma serving as an arc discharge path when an overcurrent is cut off is suppressed. Thereby, it is possible to suppress the occurrence of a large-scale arc discharge when the fuse element 50 fuses. In addition, the internal pressure buffering space 16 can suppress a sudden increase in the internal pressure of the protective element 300 caused by a gas generated by an arc discharge that occurs when the fuse element 50 fuses. Thereby, it is possible to prevent damage or the like to the insulation case 10. In addition, the filler 301 is arranged in at least a part of the internal pressure buffering space 16, and the insulation member 60 is in contact with the surface opposite the surface facing the fuse element 50, such that the insulation member 60 can suppress the occurrence of an arc discharge and the filler 301 can sufficiently suppress a sudden increase in the internal pressure of the protective element 300 caused by a molten scatter entering the internal pressure buffering space 16. Therefore, it is possible to provide the protective element 300 that can suppress the occurrence of a large-scale arc discharge when the fuse element 50 fuses and that can achieve both an overcurrent cutoff and a cutoff function according to a cutoff signal.

For example, in addition to a narrow space cutoff that suppresses the arc when a high voltage and a large current are cut off by sandwiching the fuse element 50 between insulation members 60 made of a material with high tracking resistance such as nylon, because the energy of the arc can be absorbed by the filler 301 by arranging the filler 301 in the internal pressure buffering space 16, the arc can be suppressed. As a result, it is possible to suppress an increase in internal pressure due to a molten material of the fuse element 50 and it is possible to suppress the ejection of ejection materials and sparks outside of the insulation case 10. Thereby, it is possible to cut off the electric current path more safely even under high-voltage and large-current conditions.

For example, by using silica sand, which is granular SiO₂ (quartz glass), as the filler 301, it is possible to ensure a surface area for each particle of silica sand, and it is easier to increase the surface area of the filler 301 as a whole, compared to when the filler 301 is plate-shaped. Therefore, it is easier to prevent a sudden increase in the internal pressure of the protective element 300 caused by a molten scatter entering the internal pressure buffering space 16. In addition, because quartz glass has a lower melting point than other ceramic materials, the endothermic reaction proceeds faster. Therefore, because the heat from the molten scatter entering the internal pressure buffering space 16 is quickly absorbed, the increase in the internal pressure of the protective element 300 can be prevented. Moreover, quartz glass is available more cheaply and easily than other ceramic materials, contributing to cost reduction.

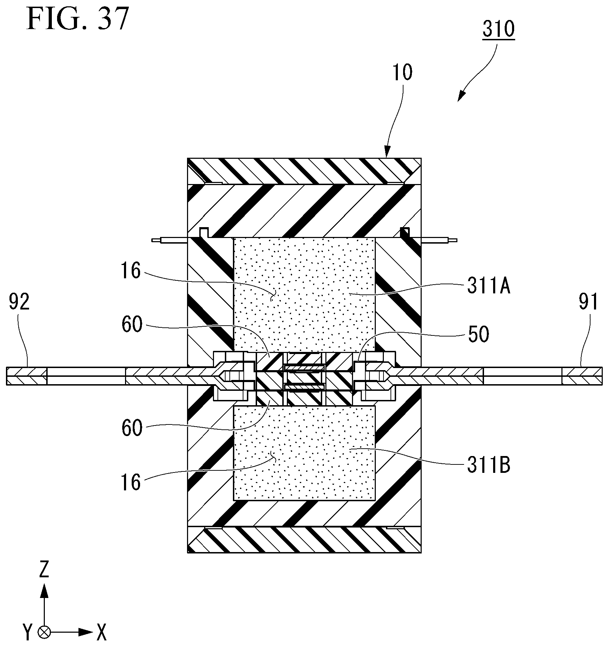

FIG. 37 is a cross-sectional view showing an example of an arrangement of fillers according to the third embodiment.

In the example of the drawing, fillers 311A and 311B are arranged in the internal pressure buffering space 16 formed inside the upper and lower parts of the insulation case 10 in the protective element 310. In the example of the drawing, the filters 311A and 311B are filled into the internal pressure buffering space 16 inside the protective element 310. A part of the filler 311A located in the upper internal pressure buffering space 16 is in contact with the upper surface of the insulation member 60 located on the upper side of the upper fuse element 50. A part of the filler 311B located in the lower internal pressure buffering space 16 is in contact with the lower surface of the insulation member 60 located on the lower side of the lower fuse element 50.

With this configuration, the filler 311A located in the upper internal pressure buffering space 16 and the filler 311B located in the lower internal pressure buffering space 16 can absorb the energy of the arc in the up-and-down direction. This configuration is particularly effective when the fuse element 50 has a plurality of layers.

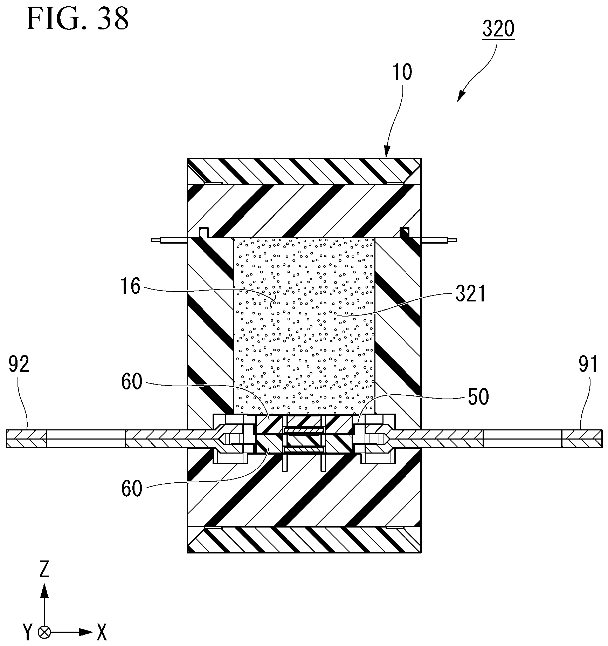

FIG. 38 is a cross-sectional view showing another example of the filler according to the third embodiment.

In the example of the drawing, the filler 321 is filled into the internal pressure buffering space 16 inside the protective element 320. Apart of the filler 321 is in contact with the upper surface of the insulation member 60 located on the upper side of the upper fuse element 50.

The filler 321 is, for example, silicone. Silicone is an inorganic polymer with a main chain of siloxane bonds in which silicon (Si) and oxygen (O) are repeatedly arranged. In the example of the drawing, gel-like silicone is filled into the internal pressure buffering space 16.

With this configuration, because the filler 321 is silicone, it is softer than when the filler 321 is plate-shaped, so that the molten scatter is easily absorbed and easily taken into the filler 321. Therefore, it is easier to suppress a sudden increase in the internal pressure of the protective element 320 due to the molten scatter entering the internal pressure buffering space 16.

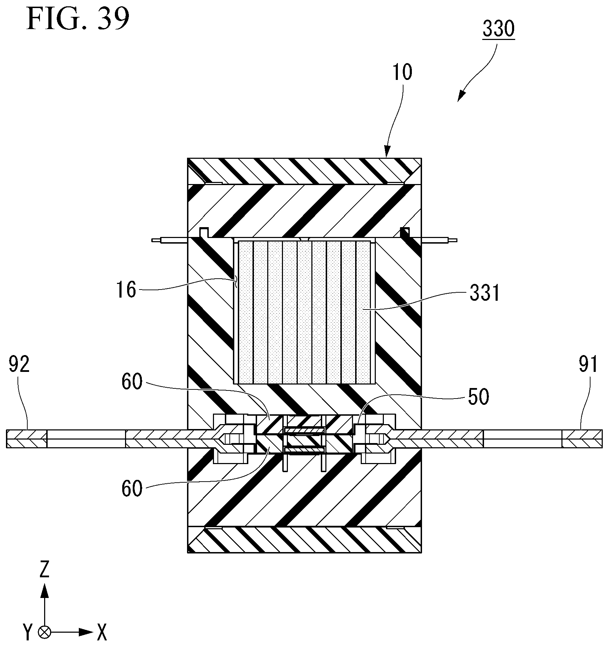

FIG. 39 is a cross-sectional view showing another example of the filler according to the third embodiment.

In the example of the drawing, the filler 331 is filled into the internal pressure buffering space 16 inside the protective element 330. A part of the filler 331 comes into contact with the upper surface of the insulation member 60 located on the upper side of the upper fuse element 50 via a part of the insulation case 10 (the bottom of the internal pressure buffering space 16).

The filler 331 is a plate-shaped member (e.g., plate-shaped ceramic) made of a ceramic material such as quartz glass, alumina, or zirconia. In the example of the drawing, a plurality of plate-shaped ceramics are arranged to overlap in the front-and-rear direction.

With this configuration, the filler 331 is a plate-shaped ceramic and a plurality of plate-shaped ceramics are arranged to overlap in the front-and-rear direction, such that a surface area in contact with the arc can be increased. Therefore, it is easier to suppress a sudden increase in the internal pressure of the protective element 330 due to a molten scatter entering the internal pressure buffering space 16.

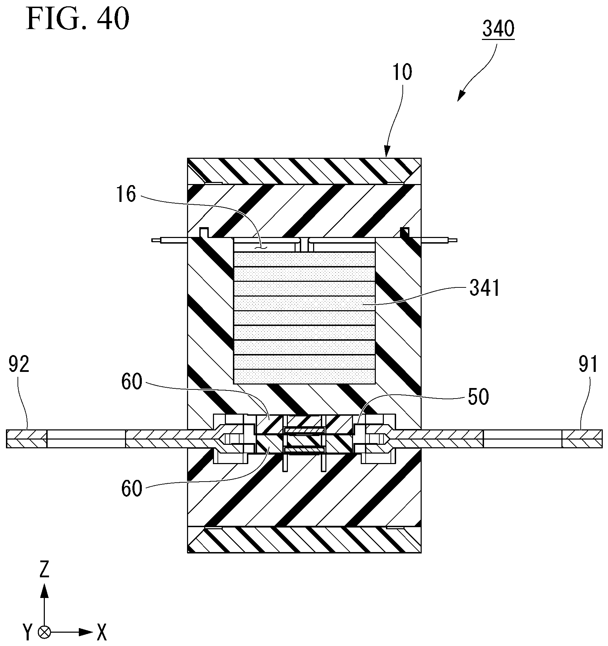

FIG. 40 is a cross-sectional view showing another example of the filler according to the third embodiment.

In the example of the drawing, the filler 341 is filled into the internal pressure buffering space 16 inside the protective element 340. A part of the filler 341 comes into contact with the upper surface of the insulation member 60 located on the upper side of the upper fuse element 50 via a part of the insulation case 10 (the bottom of the internal pressure buffering space 16).

The filler 341 is a plate-shaped member (e.g., a plate-shaped ceramic) made of a ceramic material such as quartz glass, alumina, or zirconia. In the example of the drawing, a plurality of plate-shaped ceramics are arranged to overlap in the up-and-down direction.

With this configuration, the filler 341 is a plate-shaped ceramic and a plurality of plate-shaped ceramics are arranged to overlap in the up-and-down direction, such that the surface area in contact with the arc can be increased. Therefore, it is easier to suppress a sudden increase in the internal pressure of the protective element 340 due to a molten scatter entering the internal pressure buffering space 16.

### (Protective element (fourth embodiment))

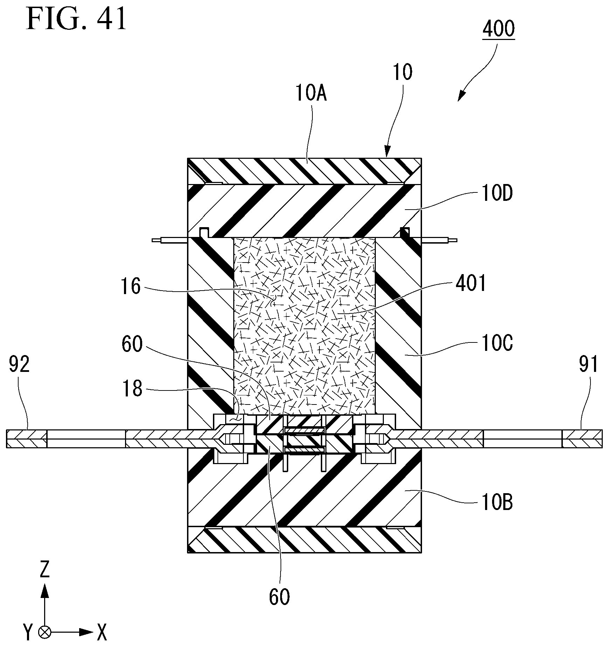

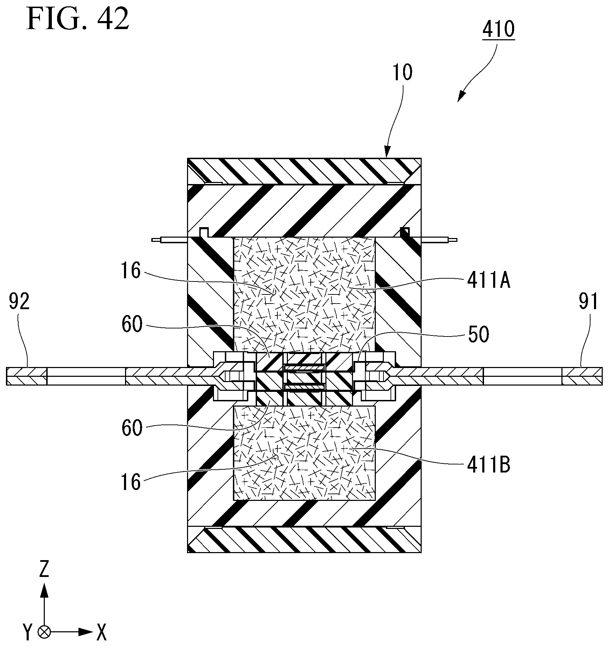

A protective element 400 according to a fourth embodiment of the present invention will be described with reference to FIGS. 41 and 42. The protective element 400 of the fourth embodiment is mainly different from that of the first embodiment described above in that a filter 401 is arranged in the internal pressure buffering space 16 formed inside the insulation case 10. In addition, in each drawing of the present embodiment, constituent elements identical or substantially similar to those of the first embodiment may be denoted by the same reference signs or names and description thereof may be omitted.

FIG. 41 is a cross-sectional view showing an example of a filter 401 according to the fourth embodiment.

Referring to FIG. 41, the protective element 400 includes a first terminal 91 and a second terminal 92 arranged apart from each other in a front-and-rear direction (an example of a first direction); a fuse element 50 arranged between the first terminal 91 and the second terminal 92 to electrically connect the first terminal 91 and the second terminal 92 and configured to fuse when a predetermined electric current or more flows; an insulation member 60 arranged to face the fuse element 50 from both sides in an up-and-down direction (an example of a second direction perpendicular to the first direction); an insulation case 10 configured to house a part of the first terminal 91, a part of the second terminal 92, the fuse element 50, and the insulation member 60, wherein an internal pressure buffering space 16 communicating with a space where the fuse element 50 is arranged is formed inside the insulation case 10; and the filter 401 arranged in at least a part of the internal pressure buffering space 16 and configured to be in contact with a surface of at least one insulation member 60 opposite a surface facing the fuse element 50.

The filter 401 has a function of suppressing an increase in an internal pressure by collecting a molten scatter generated by an arc discharge that occurs in a part to be cut off in a circuit through which an overcurrent is flowing. In addition, the filter 401 is not limited to materials having the above-described function, and various materials can be used. For example, the aspect of the filter 401 can be changed in accordance with design specifications.

In the example of the drawing, the filter 401 is filled into the internal pressure buffering space 16. The filter 401 is not in close contact with the fuse element 50. A part of the filter 401 is in contact with the upper surface of the insulation member 60 located on the upper side of the upper fuse element 50. For example, first, the third holding member 10D (corresponding to the cover member constituting the insulation case 10) is removed from the second holding member 10C, and the filter 401 is placed in the internal pressure buffering space 16. Subsequently, the third holding member 10D is attached to the second holding member 10C, such that the filter 401 can be filled into the internal pressure buffering space 16.

The filter 401 is not necessarily completely filled into the internal pressure buffering space 16 without gaps, and may be filled with gaps in a part of the internal pressure buffering space 16. For example, the filter 401 is arranged in at least a part of the internal pressure buffering space 16 and it is only necessary for at least one of the insulation members 60 to be in contact with a surface opposite the surface facing the fuse element 50 (the upper surface in the example shown in the drawing).

In addition, the orientation of the protective element 400 is not limited to an arrangement in which its up-and-down direction (an example of a second direction perpendicular to the first direction) is along a gravity direction, but may be arranged to intersect the gravity direction. For example, when the filter 401 is filled without gaps into the internal pressure buffering space 16, even if the protective element 400 is arranged to be inclined with respect to the gravity direction, at least one insulation member 60 is in contact with a surface opposite the surface facing the fuse element 50. For example, an arrangement aspect of the protective element 400 can be changed in accordance with design specifications.

The filter 401 is made of, for example, a fiber material. For example, the fiber material may be a ceramic material such as SiO₂, MgO, CaO, TiO₂, Al₂O₃, or ZrO₂ or an artificial mineral fiber (MMMF) made of SiO₂, MgO, CaO, TiO₂, Al₂O₃, ZrO₂, or the like. In particular, from the viewpoint of safety, biofusible fiber (biofusible fiber (BSF) or alkaline earth silicate (AES)), alumina fiber (polycrystalline fiber: PCW), glass wool, rock wool, slag wool, or silica fiber is preferred. Alternatively, the fiber material may be a plastic material such as nylon or PMMA. In addition, an aspect of the fiber material is not limited to the above and may be changed in accordance with design specifications.

In addition, the filter 401 is not limited to a fiber material, and may be formed of a porous material. For example, the filter 401 may be formed of a sheet-like material. For example, the filter 401 may be ceramic fiber paper, biofusible fiber paper, alumina fiber paper, glass wool paper, rock wool paper, slag wool paper, or silica fiber paper. A plurality of sheets of ceramic fiber paper, or biofusible fiber paper, alumina fiber paper, glass wool paper, rock wool paper, slag wool paper, or silica fiber paper may be laminated and arranged in the internal pressure buffering space 16. For example, the filter 401 is not limited to paper, and may be in the form of wool, a board, a block, or the like. For example, an aspect of the filter 401 may be changed in accordance with design specifications.

The fuse element 50 may be a fusible conductor 51 having a lower melting point than the first terminal 91 and the second terminal 92. For example, the fusible conductor 51 may be a laminate including a low-melting-point metallic layer and a high-melting-point metallic layer. For example, the low-melting-point metallic layer is made of Sn or contains Sn as a main component. For example, the high-melting-point metallic layer is made of Ag or Cu or contains Ag or Cu as the main component.

The protective element 400 further includes a heat generation element 80 arranged to overlap the fuse element 50 in the up-and-down direction. The fuse element 50 may include a fusible conductor 51 laminated with the heat generation element 80 and a metallic conductor 52 configured to connect the first terminal 91 or the second terminal 92 to the fusible conductor 51. For example, the melting point of the metallic conductor 52 may be higher than the melting point of the fuse element 50. In the fuse element 50, the fusible conductor 51 is laminated with the heat generation element 80.

The protective element 400 further includes a power supply member 90 configured to supply an electric current to the heat generation element 80. The insulation case 10 houses a part of the power supply member 90 and the heat generation element 80. The heat generation element 80 generates heat by receiving an electric current from the power supply member 90 and melts and fuses at least a part of the fuse element 50.

The protective element 400 of the present embodiment described above includes a first terminal 91 and a second terminal 92 arranged apart from each other in a first direction; a fuse element 50 arranged between the first terminal 91 and the second terminal 92 to electrically connect the first terminal 91 and the second terminal 92 and configured to fuse when a predetermined electric current or more flows; an insulation member 60 arranged to face the fuse element 50 from both sides in a second direction perpendicular to the first direction; an insulation case 10 configured to house a part of the first terminal 91, a part of the second terminal 92, the fuse element 50, and the insulation member 60, wherein an internal pressure buffering space 16 communicating with a space 18 where the fuse element 50 is arranged is formed inside the insulation case 10; and the filter 401 arranged in at least a part of the internal pressure buffering space 16 and configured to be in contact with a surface of at least one insulation member 60 opposite a surface facing the fuse element 50.

According to this configuration, a configuration in which the insulation members 60 sandwich the fuse element 50 from the upper side and the lower side is adopted. Thereby, the air in the space (the cutoff space) around the fusible part of the fuse element 50 is eliminated as much as possible, such that an amount of generated air plasma serving as an arc discharge path when an overcurrent is cut off is suppressed. Thereby, it is possible to suppress the occurrence of a large-scale arc discharge when the fuse element 50 fuses. In addition, the internal pressure buffering space 16 can suppress a sudden increase in the internal pressure of the protective element 400 caused by a gas generated by an arc discharge that occurs when the fuse element 50 fuses. Thereby, it is possible to prevent damage or the like to the insulation case 10. In addition, the filter 401 is arranged in at least a part of the internal pressure buffering space 16, and the insulation member 60 is in contact with the surface opposite the surface facing the fuse element 50, so that the insulation member 60 can suppress the occurrence of an arc discharge and the filter 401 can sufficiently suppress a sudden increase in the internal pressure of the protective element 400 caused by a molten scatter entering the internal pressure buffering space 16. Therefore, it is possible to provide the protective element 400 that can suppress the occurrence of a large-scale arc discharge when the fuse element 50 fuses and that can achieve both an overcurrent cutoff and a cutoff function according to a cutoff signal.

For example, in addition to a narrow space cutoff that suppresses the arc when a high voltage and a large current are cut off by sandwiching the fuse element 50 between insulation members 60 made of a material with high tracking resistance such as nylon, because an increase in the internal pressure can be suppressed by collecting molten scatters with the filter 401 when the filter 401 is arranged in the internal pressure buffering space 16, the arc can be suppressed. As a result, it is possible to suppress an increase in internal pressure due to a molten material of the fuse element 50 and it is possible to suppress the ejection of ejection materials and sparks outside of the insulation case 10. Thereby, it is possible to cut off the electric current path more safely even under high voltage and large current conditions.

For example, the filter 401 is made of a fiber material, such that the surface area of the filter 401 can be secured and the surface area of the filter 401 as a whole can be easily increased compared to the case of plate-shaped ceramic. In addition, the fiber-shaped filter 401 has more elements for capturing molten scatters compared to the plate-shaped ceramic. For this reason, it is easier to suppress a sudden increase in the internal pressure of the protective element 400 due to molten scatters entering the internal pressure buffering space 16.

FIG. 42 is a cross-sectional view showing an example of an arrangement of filters according to the fourth embodiment.

In the example of the drawing, filters 411A and 411B are arranged in the internal pressure buffering spaces 16 formed inside the upper and lower parts of the insulation case 10 in the protective element 410. In the example of the drawing, the filters 411A and 411B are filled into the internal pressure buffering space 16 inside the protective element 410. A part of the filter 411A located in the upper internal pressure buffering space 16 is in contact with the upper surface of the insulation member 60 located on the upper side of the upper fuse element 50. A part of the filter 411B located in the lower internal pressure buffering space 16 is in contact with the lower surface of the insulation member 60 located on the lower side of the lower fuse element 50.

With this configuration, the filter 411A arranged in the upper internal pressure buffering space 16 and the filter 411B arranged in the lower internal pressure buffering space 16 can collect molten scatters in the up-and-down direction. In addition, the filters 411A and 411B on both sides in the up-and-down direction can collect the molten scatters. This configuration is particularly effective when the fuse element 50 has a plurality of layers.

### (Protective element (fifth embodiment))

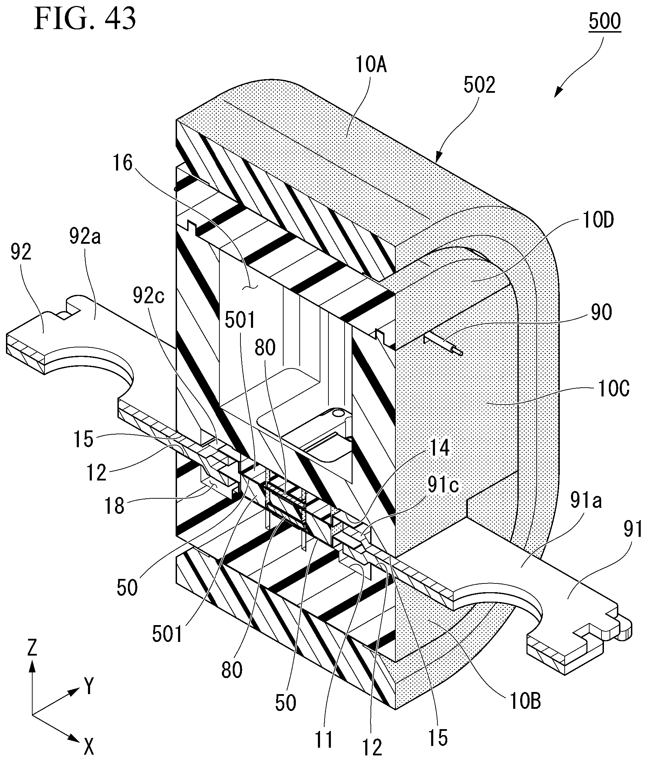

A protective element 500 of a fifth embodiment of the present invention will be described with reference to FIGS. 43 to 45. The protective element 500 of the fifth embodiment is mainly different from the first embodiment described above in that an amount of carbon material contained in the insulation member 501 and/or the insulation case 502 is less than a predetermined amount. In addition, in each drawing of the present embodiment, constituent elements identical or substantially similar to those of the first embodiment may be denoted by the same reference signs or names and description thereof may be omitted.

FIG. 43 is a perspective view (a cross-sectional perspective view) showing an appearance and cross-section of the protective element 500 of the fifth embodiment.

Referring to FIG. 43, the protective element 500 includes a first terminal 91 and a second terminal 92 arranged apart from each other in a front-and-rear direction (an example of a first direction); a fuse element 50 arranged between the first terminal 91 and the second terminal 92 to electrically connect the first terminal 91 and the second terminal 92 and configured to fuse when a predetermined electric current or more flows; an insulation member 501 arranged to face the fuse element 50 from both sides in an up-and-down direction (an example of a second direction perpendicular to the first direction); an insulation case 502 configured to house a part of the first terminal 91, a part of the second terminal 92, the fuse element 50, and the insulation member 501, wherein an internal pressure buffering space 16 communicating with a space 18 where the fuse element 50 is arranged is formed inside the insulation case 502, wherein the insulation member 501 and/or the insulation case 502 have a carbon material content of less than 0.1 wt%.

In the example of the drawing, the insulation member 501 and the insulation case 502 have highly tracking-resistant insulation materials sandwiching the fuse element 50, which is a resin material, and the carbon material content of the resin material is less than 0.1 wt%.

For example, the highly tracking-resistant insulation material is preferably a nylon material, and more preferably PA46 or PA66, which does not contain a benzene ring. In addition, the insulation material is not limited to the above and can be changed in accordance with design specifications.

For example, an outer surface part of the cover 10A (for example, a pipe outside of the insulation case 10) may be black (for example, the carbon black content is 0.5 wt% or more) so that laser marking on the insulation case 10 is enabled. In addition, the color of the insulation case 10 is not limited to the above and can be changed in accordance with design specifications.

For example, the carbon material is preferably amorphous (microcrystalline) carbon such as carbon black, activated carbon, carbon fiber, hard carbon, soft carbon, and mesoporous carbon. In addition, the carbon material is not limited to the above and may be other solid carbon materials and may be changed in accordance with design specifications.

The insulation member 501 and/or the insulation case 502 have a glass fiber 503 whose content is 10 wt% or more. More preferably, the insulation member 501 and/or the insulation case 502 have the glass fiber 503 whose content is 30 wt% or more. In the example of the drawing, the insulation member 501 and insulation case 502 have the glass fiber 503 whose content is 30 wt% or more. For example, the glass fiber 503 may be SiO₂, MgO, Al₂O₃, ZrO₂, or the like. The glass fiber 503 is not limited to the above and may be changed in accordance with design specifications.

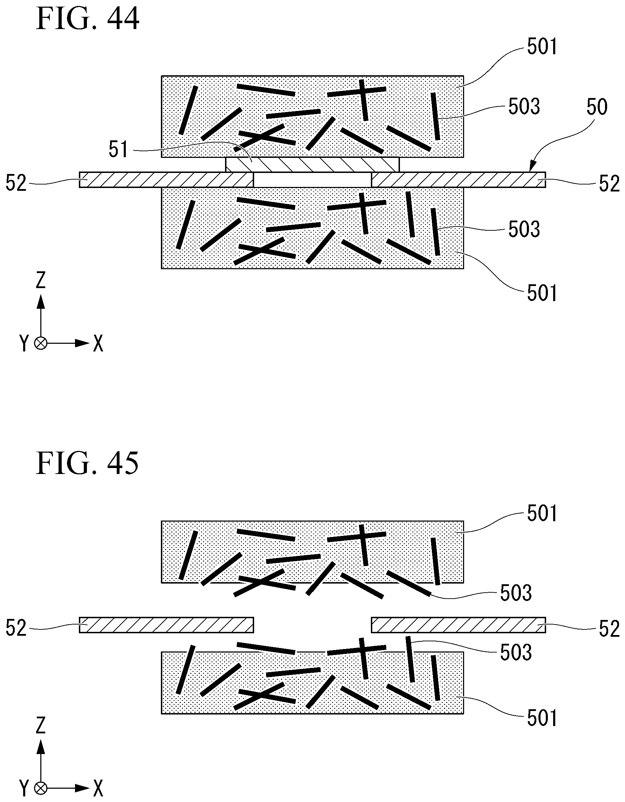

FIG. 44 is a side view of the insulation member 501 before a cutoff due to an overcurrent according to the fifth embodiment. FIG. 45 is a side view of the insulation member 501 showing a state in which a part of the insulation member 501 has melted after a cutoff due to an overcurrent according to the fifth embodiment.

Referring to FIGS. 44 and 45 together, the insulation members 501 on both the upper side and the lower side of the fuse element 50 are exposed to a high-temperature arc discharge during an overcurrent cutoff and a part of the insulation members 501 is melted and sublimated. Thereby, some of the glass fibers 503 contained in the insulation member 501 become exposed and irregularities on the surface of the insulation member 501 facing the fuse element 50 are formed. These irregularities obstruct the conductive path and the insulation resistance increases.

The protective element 500 of the present embodiment described above includes a first terminal 91 and a second terminal 92 arranged apart from each other in a first direction; a fuse element 50 arranged between the first terminal 91 and the second terminal 92 to electrically connect the first terminal 91 and the second terminal 92 and configured to fuse when a predetermined electric current or more flows; an insulation member 501 arranged to face the fuse element 50 from both sides in a second direction perpendicular to the first direction; an insulation case 502 configured to house a part of the first terminal 91, a part of the second terminal 92, the fuse element 50, and the insulation member 501, wherein an internal pressure buffering space 16 communicating with a space 18 where the fuse element 50 is arranged is formed inside the insulation case 502, wherein the insulation member 501 and/or the insulation case 502 have a carbon material content of less than 0.1 wt%.

According to this configuration, the surfaces of the insulation member 501 and the insulation case 502 are less likely to become graphitized even when exposed to an arc discharge or molten scatter from the fuse element 50 at high temperatures, compared to when the carbon material content of the insulation member 501 and the insulation case 502 is 0.1 wt% or more. Thus, it is difficult to form a new electric current path and arc suppression and insulation resistance after a cutoff are improved. In particular, if the insulation material of the insulation member 501 and the insulation case 502 is a material such as PA46 or PA66 that does not contain a benzene ring, there is no element to be graphitized, making it easier to improve the insulation resistance. In addition, compared to when the carbon material content of the insulation member 501 and the insulation case 502 is 0.1 wt% or more, the appearance of the insulation member 501 and the insulation case 502 can be made closer to a natural color.

In the present embodiment, the insulation member 501 and/or the insulation case 502 have a glass fiber 503 whose content is 10 wt% or more.

With this configuration, the insulation member 501 and insulation case 502 are less likely to be damaged than when the content of the glass fiber 503 of the insulation member 501 and insulation case 502 is less than 10 wt%. Thereby, it is possible to safely cut off the circuit. In addition, the strength of the insulation member 501 and insulation case 502 (corresponding to the housing of the protective element 500) can be improved, and durability against the impact of an arc explosion can be improved.

### (Protective element (sixth embodiment))

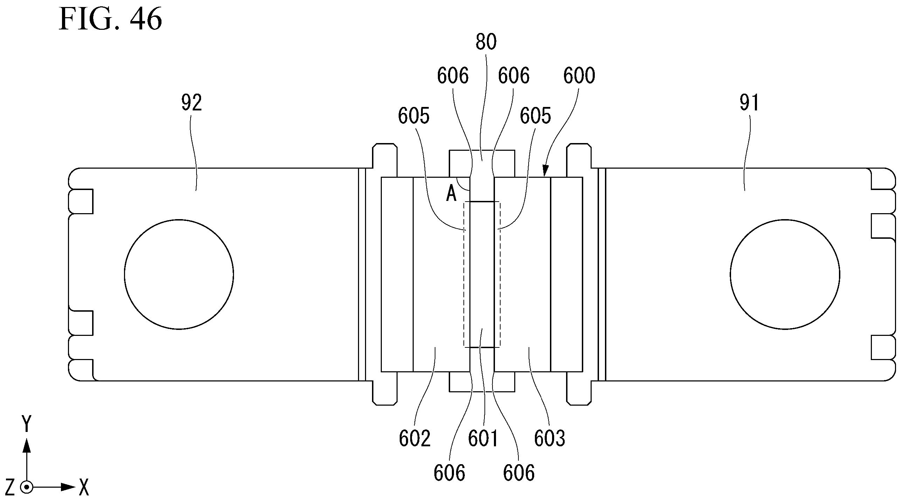

A protective element according to a sixth embodiment of the present invention will be described with reference to FIGS. 46 to 53. The protective element of the sixth embodiment is mainly different from that of the above-described first embodiment in an aspect of the fuse element 600 constituting the protective element. In addition, in each drawing of the present embodiment, constituent elements identical or substantially similar to those of the first embodiment may be denoted by the same reference signs or names and description thereof may be omitted.

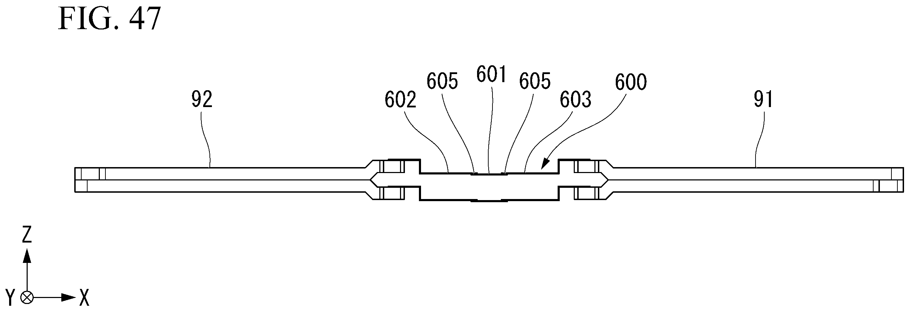

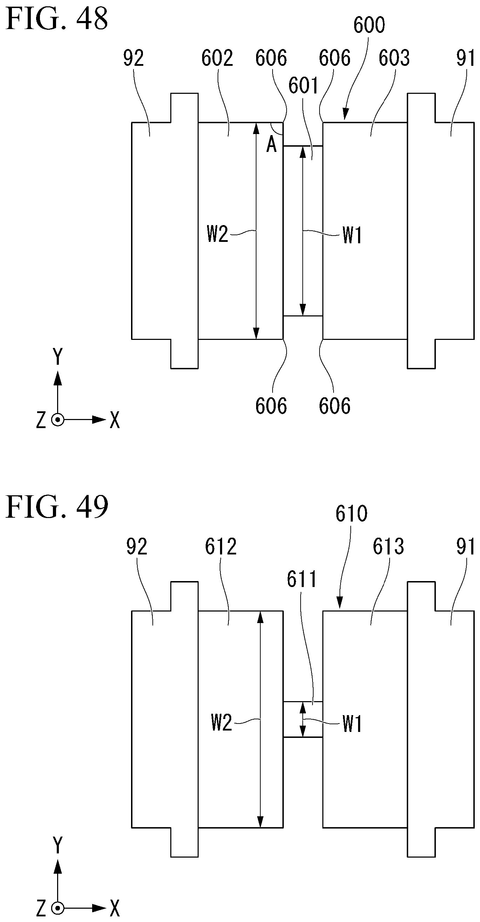

FIG. 46 is a top view showing a part (a fuse element 600) of the protective element of the sixth embodiment. FIG. 47 is a side view showing the part (the fuse element 600) of the protective element of the sixth embodiment. FIG. 48 is a top view showing an example of the part (the fuse element 600) of the protective element of the sixth embodiment.

Referring to FIGS. 46 to 48 together, the fuse element 600 includes a first conductive material 601; and a second conductive material 602 formed of a material different from that of the first conductive material 601, wherein the first conductive material 601 and the second conductive material 602 are connected in series to each other in a front-and-rear direction (corresponding to a current-carrying direction), wherein the first conductive material 601 has a higher electrical resistance than the second conductive material 602 in the current-carrying direction, wherein, when viewed in the up-and-down direction (corresponding to a thickness direction perpendicular to the current-carrying direction), an overlapping part 605 is provided in a part in which the first conductive material 601 and the second conductive material 602 are connected to each other, wherein the first conductive material 601 has a shorter length in a left-and-right direction (corresponding to a width direction perpendicular to the current-carrying direction and the thickness direction) in the overlapping part 605 than the second conductive material 602, wherein the second conductive material 602 has at least one corner 606 on an outer side of the overlapping part 605 in the width direction, and wherein, when viewed in the thickness direction, at least the one corner 606 has an angle A of 100° or less. In addition, the heat generation element 80 arranged to overlap the fuse element 600 in the up-and-down direction is also shown in FIG. 46 and the overlapping part 605 is not shown in FIG. 48.

Although an example in which two fuse elements 600 are laminated in the up-and-down direction (the two-layer fuse element 600) is shown in the example of the drawing, the present invention is not limited thereto. For example, there may be only one fuse element 600 (a one-layer fuse element 600). For example, a lamination aspect of the fuse element 600 can be changed in accordance with design specifications.

Each of the first conductive material 601 and the second conductive material 602 has a plate shape. The fuse element 600 further includes a third conductive material 603. The fuse element 600 has the third conductive material 603, the first conductive material 601, and the second conductive material 602 connected in series in the current-carrying direction in that order. In the example of the drawing, the third conductive material 603 has the same plate shape as the second conductive material 602. The third conductive material 603 is formed of the same material as the second conductive material 602.

For example, the first conductive material 601 is made of a material having a lower melting temperature than the second conductive material 602 and the third conductive material 603. In the present embodiment, the first conductive material 601 has a higher electrical resistivity than the second conductive material 602 and the third conductive material 603. In the present embodiment, the first conductive material 601 functions as a fusible part of the fuse element 600 during each of an overcurrent cutoff and an active cutoff.

The first conductive material 601 is plate-shaped, sheet-shaped, or foil-shaped, and extends in a plane direction (an X-Y plane direction) perpendicular to the up-and-down direction. In the example of the drawing, the first conductive material 601 has a rectangular plate shape having a dimension in the left-and-right direction greater than a dimension in the front-and-rear direction when viewed in the up-and-down direction. The first conductive material 601 is arranged, for example, in the center of the fuse element 600 in the front-and-rear direction.

For example, the first conductive material 601 may be a laminate including a low-melting-point metallic layer and a high-melting-point metallic layer. Although not particularly shown in the drawing, the first conductive material 601 may have a laminate in which a low-melting-point metallic layer containing Sn (tin) and a high-melting-point metallic layer containing Ag (silver) or Cu (copper) are laminated. This laminate has one or more low-melting-point metallic layers and two or more high-melting-point metallic layers, wherein the low-melting-point metallic layer is arranged between the high-melting-point metallic layers. This laminate is formed, for example, by coating the periphery of a low-melting-point metallic layer with a high-melting-point metallic layer.

It is only necessary for the low-melting-point metallic layer of the laminate may contain Sn, and the low-melting-point metallic layer of the laminate may be Sn alone or an Sn alloy. The Sn alloy is an alloy containing Sn as a main component. That is, the low-melting-point metallic layer is made of Sn or contains Sn as the main component. The Sn alloy is an alloy with the highest content of Sn among the metals contained in the alloy. Examples of Sn alloys can contain an Sn-Bi alloy, an In-Sn alloy, and an Sn-Ag-Cu alloy.

It is only necessary for the high-melting-point metallic layer of the laminate to contain Ag or Cu, and the high-melting-point metallic layer of the laminate may be Ag alone, Cu alone, an Ag alloy, or a Cu alloy. The Ag alloy is an alloy with the highest content of Ag among the metals contained in the alloy and the Cu alloy is an alloy with the highest content of Cu among the metals contained in the alloy. That is, the high-melting-point metallic layer is made of Cu or Ag or contains Cu or Ag as a main component.

In addition, the laminate may have a two-layer structure of a low-melting-point metallic layer/high-melting-point metallic layer. Alternatively, the laminate may have a multi-layer structure of three or more layers having two or more high-melting-point metallic layers and one or more low-melting-point metallic layers, wherein the low-melting-point metallic layer is arranged between the high-melting-point metallic layers.

Moreover, the first conductive material 601 may also be made of a monolayer body of a low-melting-point metallic layer containing Sn.

For example, the second conductive material 602 and the third conductive material 603 are made of Cu or Ag or contain Cu or Ag as a main component.

The second conductive material 602 and the third conductive material 603 are plate-shaped, sheet-shaped, or foil-shaped. In the example of the drawing, the second conductive material 602 and the third conductive material 603 have an approximately rectangular plate shape having a dimension in the left-and-right direction longer than a dimension in the front-and-rear direction when viewed in the top-and-down direction. A plurality of second conductive materials 602 and a plurality of third conductive materials 603 are provided on the fuse element 600. The second conductive materials 602 and the third conductive materials 603 are arranged, for example, on both ends of the fuse element 600 in the front-and-rear direction. In the present embodiment, each fuse element 600 has a pair of the second conductive material 602 and the third conductive material 603.

The third conductive material 603, the first conductive material 601, and the second conductive material 602 are connected in series in that order to form a current-carrying path for the fuse element 600. A pair of the second conductive material 602 and the third conductive material 603 are connected to both ends of the first conductive material 601 in the current-carrying direction (corresponding to the front-and-rear direction) in which an electric current of the fuse element 600 flows.

In the example of the drawing, the first end of the first conductive material 601 is fixed below the front end of the second conductive material 602 (the +X end in the example shown in the drawing). That is, the upper surface of the first end of the first conductive material 601 and the lower surface of the front end of the second conductive material 602 are connected to each other.

Moreover, the second end of the first conductive material 601 is fixed below the rear end of the third conductive material 603 (the -X end in the example shown in the drawing). That is, the upper surface of the second end of the first conductive material 601 and the lower surface of the rear end of the third conductive material 603 are connected to each other.

The first conductive material 601 is arranged on the lower side of the pair of the second conductive material 602 and the third conductive material 603 and is suspended therebetween.

The overlapping part 605 is a part in which the first conductive material 601 and the second conductive material 602 are connected to each other and overlap each other when viewed from above. A widthwise length of the first conductive material 601 in the overlapping part 605 is shorter than that of the second conductive material 602. In the present embodiment, a ratio W2/W1 between a widthwise length W1 of the overlapping part 605 of the first conductive material 601 (hereinafter also referred to as the "width dimension W1 of the first conductive material 601") and a widthwise length W2 of the overlapping part 605 of the second conductive material 602 (hereinafter also referred to as the "width dimension W2 of the second conductive material 602") is about 1.07.

For example, the ratio W2/W1 is preferably greater than 1.0 and less than or equal to 32, more preferably greater than or equal to 1.06 and less than or equal to 8, and even more preferably greater than or equal to 1.06 and less than or equal to 4. For example, if the ratio W2/W1 becomes excessively large, there is a risk that the fuse resistance value will become large and the rated current will not be able to be increased. In addition, the ratio W2/W1 is not limited to the above and can be changed in accordance with design specifications.

The second conductive material 602 has at least one corner 606 on the outer side of the overlapping part 605 in the width direction. In the example of the drawing, each of the second conductive material 602 and the third conductive material 603 has corners 606 (two corners 606) on both outer sides of the overlapping part 605 in the width direction. In addition, an arrangement aspect of the corners 606 in the second conductive material 602 and/or the third conductive material 603 is not limited to the above and can be changed in accordance with design specifications.

The corners 606 have an angle A of 100° or less when viewed in the thickness direction. In the example of the drawing, the angle A of the corners 606 is about 90° (approximately a right angle) when viewed in the thickness direction. In addition, the angle A of the corners 606 is not limited to the above and can be changed in accordance with design specifications.

The fuse element 600 of the present embodiment described above includes a first conductive material 601; and a second conductive material 602 formed of a material different from that of the first conductive material 601, wherein the first conductive material 601 and the second conductive material 602 are connected in series to each other in a current-carrying direction, wherein the first conductive material 601 has a higher electrical resistance than the second conductive material 602 in the current-carrying direction, wherein, when viewed in a thickness direction perpendicular to the current-carrying direction, an overlapping part 605 is provided in a part in which the first conductive material 601 and the second conductive material 602 are connected to each other, wherein the first conductive material 601 has a shorter length in a width direction perpendicular to the current-carrying direction and the thickness direction in the overlapping part 605 than the second conductive material 602, wherein the second conductive material 602 has at least one corner 606 on an outer side of the overlapping part 605 in the width direction, and wherein, when viewed in the thickness direction, at least the one corner 606 has an angle A of 100° or less.

As a result of intensive research, the inventors have found that the effect of suppressing the arc discharge occurring during a high-voltage/large-current cutoff differs according to a widthwise length of the overlapping part 605 of the first conductive material 601 and the second conductive material 602 and/or a magnitude of the angle A of the outer corner 606 of the second conductive material 602 in the width direction in the overlapping part 605. According to this configuration, as the first conductive material 601 has a shorter widthwise length than the second conductive material 602 in the overlapping part 605 and the outer corner 606 of the second conductive material 602 in the overlapping part 605 has an angle A of 100° or less when viewed in the thickness direction, it is possible to more effectively suppress the arc discharge occurring during the high-voltage/large-current cutoff compared to when the first conductive material 601 is the same widthwise length as that of the second conductive material 602 in the overlapping part 605. Therefore, the arc discharge time is shortened during the high-voltage/large-current cutoff and it is possible to prevent the sparks from being ejected from becoming large. Therefore, even in the high-voltage/large-current cutoff, the electric current path can be cut off more safely.

As a result of intensive research, the inventors have found that the arc discharge tends to be suppressed as the ratio W2/W1 between the widthwise length W1 in the overlapping part 605 of the first conductive material 601 and the widthwise length W2 in the overlapping part 605 of the second conductive material 602 increases. In the present embodiment, the ratio W2/W1 is about 1.07, such that the arc discharge occurring during a high-voltage/large-current cutoff can be more effectively suppressed. In addition, an excessive increase in the fuse resistance value can be suppressed and the risk that the rated current cannot be raised can be avoided.

FIG. 49 is a top view showing another example of a part (a fuse element) of the protective element of the sixth embodiment. The overlapping part is not shown in FIG. 49.

In the example of the drawing, a widthwise length of a first conductive material 611 in the overlapping part is extremely short compared to that of the second conductive material 612. A pair of a second conductive material 612 and a third conductive material 613 are connected to both ends of the first conductive material 611 in a current-carrying direction in which an electric current of a fuse element 610 flows. In the example of the drawing, a ratio W2/W1 between a widthwise length W1 of an overlapping part of the first conductive material 611 and a widthwise length W2 of an overlapping part of the second conductive material 612 is about 6.

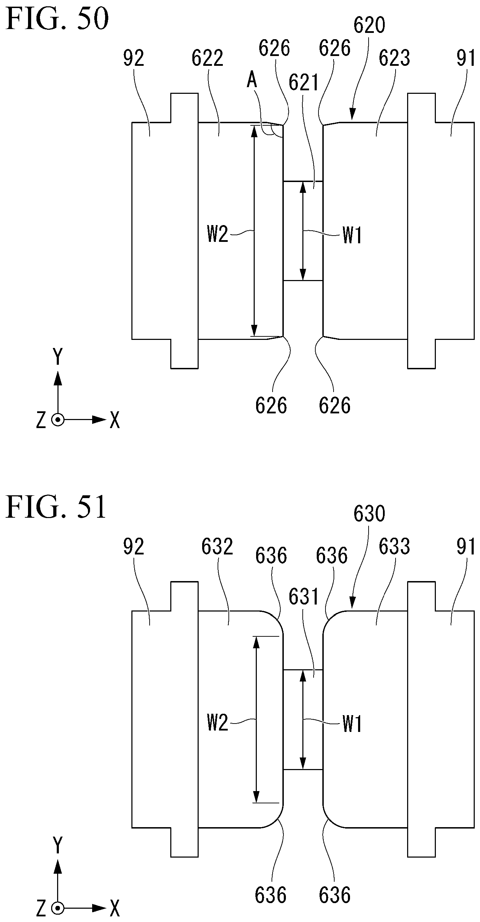

FIG. 50 is a top view showing another example of a part (a fuse element) of the protective element of the sixth embodiment.

In the example of the drawing, each of a second conductive material 622 and a third conductive material 623 has chamfered corners 626 (two corners 626) on both outer sides of the overlapping part in a width direction. A pair of the second conductive material 622 and the third conductive material 623 are connected to both ends of a first conductive material 621 in the current-carrying direction in which an electric current of a fuse element 620 flows. In the example of the drawing, angle A of the corner 626 is about 100° (an example of an obtuse angle) when viewed in a thickness direction.

FIG. 51 is a top view showing another example of the part (the fuse element) of the protective element of the sixth embodiment.

In the example of the drawing, each of a second conductive material 632 and a third conductive material 633 has rounded corners 636 (two round corners 636) on both outer sides of an overlapping part in a width direction. A pair of the second conductive material 632 and the third conductive material 633 are connected to both ends of a first conductive material 631 in a current-carrying direction in which an electric current of a fuse element 630 flows. In the example of the drawing, the round corners 636 are curved in an arc shape that convexly faces outward when viewed in the thickness direction.

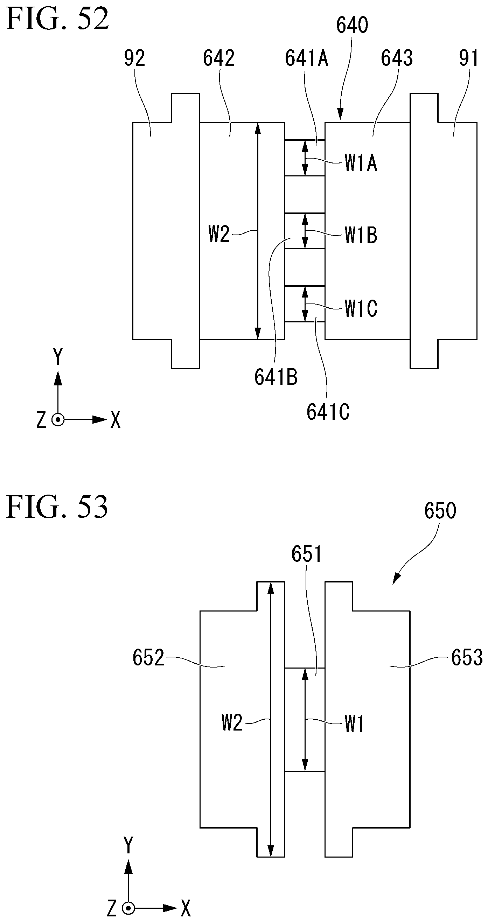

FIG. 52 is a top view showing another example of the part (the fuse element) of the protective element of the sixth embodiment.

In the example of the drawing, three first conductive materials 641A, 641B, and 641C (corresponding to an example of a plurality of conductive materials) are arranged side by side in a width direction (corresponding to a left-and-right direction). In other words, the first conductive materials 641A, 641B, and 641C are configured to be divided in the width direction. A pair of the second conductive material 642 and the third conductive material 643 are connected to both ends of the first conductive materials 641A, 641B, and 641C in the current-carrying direction in which an electric current of a fuse element 640 flows. In addition, a division aspect of the first conductive materials 641A, 641B, and 641C is not limited to the above and can be changed in accordance with design specifications.

In the example of the drawing, in the first conductive materials 641A, 641B, and 641C, width dimensions W1A, W1B, and W1C are shorter than a width dimension of the second conductive material 642 in the overlapping part. In the example of the drawing, a total length of the width dimensions W1A, W1B, and W1C of the first conductive material 641A, 641B, and 641C in the overlapping part is shorter than a width dimension W2 of the second conductive material 642 in the overlapping part.

FIG. 53 is a top view showing another example of the part (the fuse element) of the protective element of the sixth embodiment.

In the example of the drawing, a terminal also serves as a low resistance part (corresponding to a second conductive material 652 and a third conductive material 653) and the terminal is connected to a high resistance part (corresponding to a first conductive material 651). A pair of the second conductive material 652 and the third conductive material 653 are connected to both ends of the first conductive material 651 in a current-carrying direction in which an electric current of a fuse element 650 flows.

The respective constituent elements described in the above-described embodiments and modified examples and the like according to the present invention may be combined without departing from the spirit of the present invention, and addition, omission, substitution, and other modifications of the constituent elements can be made. Moreover, the present invention is not limited to the above-described embodiments and the like, but is limited only by the claims.

### [Inventive example]

Herein, an inventive example of the protective element according to the above-described embodiment of the present invention will be specifically described below. In addition, the following inventive example is a specific example to which the present invention is applied and does not limit the present invention.

### (Inventive Example)

The protective element of the inventive example includes a first conductive material; and a second conductive material formed of a material different from that of the first conductive material, wherein the first conductive material and the second conductive material are connected in series to each other in a current-carrying direction, wherein the first conductive material has a higher electrical resistance than the second conductive material in the current-carrying direction, wherein, when viewed in a thickness direction perpendicular to the current-carrying direction, an overlapping part is provided in a part in which the first conductive material and the second conductive material are connected to each other, wherein the first conductive material has a shorter length in a width direction perpendicular to the current-carrying direction and the thickness direction in the overlapping part than the second conductive material, wherein the second conductive material has a corner on an outer side of the overlapping part in the width direction, and wherein, when viewed in the thickness direction, the corner has an angle of 90° (corresponding to the configuration shown in FIG. 48).

Inventive Examples 1 and 2 were provided as inventive examples.

In Inventive Example 1, a widthwise length W1 of the overlapping part of the first conductive material was 15 mm, a widthwise length W2 of the overlapping part of the second conductive material was 16 mm, and a ratio W2/W1 was 1.07.

In Inventive Example 2, the widthwise length W1 of the overlapping part of the first conductive material was 13 mm, the widthwise length W2 of the overlapping part of the second conductive material was 16 mm, and the ratio W2/W1 was 1.23.

### (Comparative example)

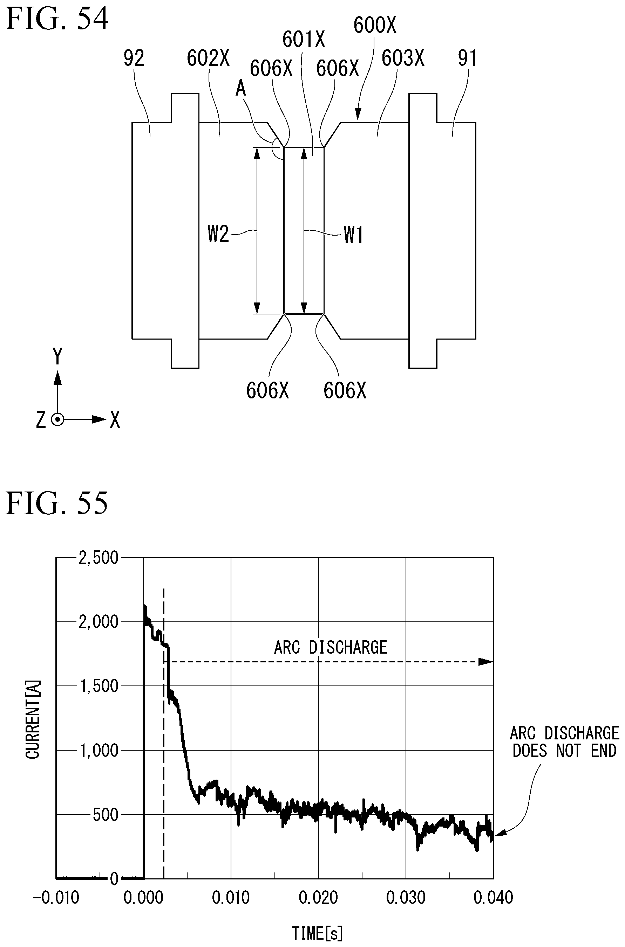

FIG. 54 is a top view showing a part (a fuse element 600X) of a protective element of a comparative example.

Referring to FIG. 54, the protective element of the comparative example has the same basic configuration as the protective element of the inventive example. However, a widthwise length of an overlapping part of a first conductive material 601X and a second conductive material 602X and a size of an angle A of an outer corner 606X in a width direction of the second conductive material 602X and a third conductive material 603X in the overlapping part were different.

In the comparative example, the first conductive material 601X had the same widthwise length in the overlapping part as the second conductive material 602X, and the corner 606X had an angle of 135° when viewed in the thickness direction. In the comparative example, the widthwise length W1 in the overlapping part of the first conductive material 601X was 13 mm, the widthwise length W2 in the overlapping part of the second conductive material 602X was 13 mm, and the ratio W2/W1 was 1.00.

### (Evaluation results)

An electric current waveform at the time of a cutoff of each protective element was measured by a high-voltage/large-current cutoff test. The test conditions were voltage 400 V/current 2kA. Evaluation results are shown in FIGS. 55 to 57.

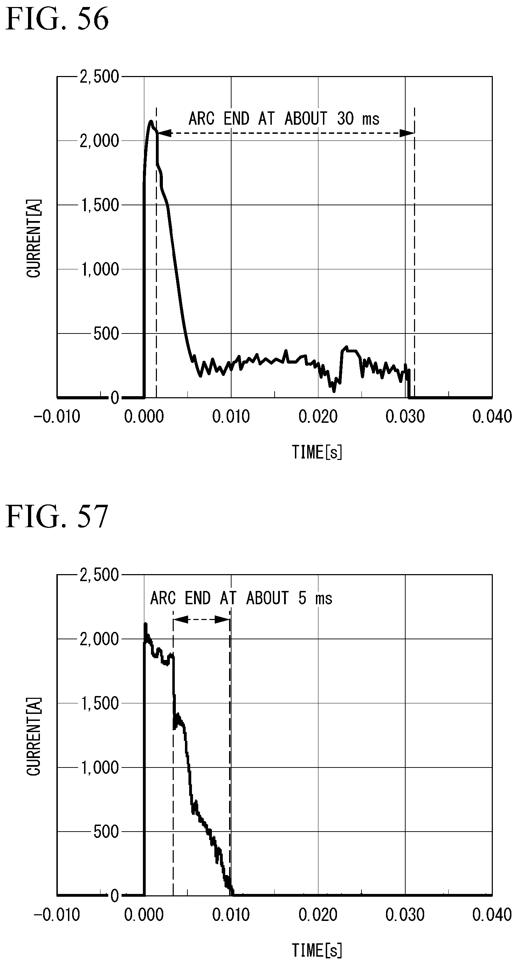

FIG. 55 is a diagram showing results of a high-voltage/large-current cutoff test of the protective element of the comparative example. FIG. 56 is a diagram showing results of a high-voltage/large-current cutoff test of a protective element of Inventive Example 1. FIG. 57 is a diagram showing results of a high-voltage/large-current cutoff test of a protective element of Inventive Example 2.

Referring to FIGS. 55 to 57 together, it was confirmed that the protective element of the inventive example had a shorter arc discharge time than the protective element of the comparative example. Moreover, it was confirmed that the arc ended at about 30 ms in Inventive Example 1 (ratio W2/W1 = 1.07) and the arc ended at about 5 ms in Inventive Example 2 (ratio W2/W1 = 1.23). Thereby, it could be seen that the arc discharge tends to be suppressed as the ratio W2/W1 increases.

### REFERENCE SIGNS LIST

10 Insulation case
10A Cover
10B, 10C Holding member
16 Internal pressure buffering space
18 Chamber (space)
19 Recess
50 Fuse element
51, 51M Fusible conductor
51a First end
51b Second end
52 Metallic conductor
52g Cutoff part
52A First metallic conductor
52B Second metallic conductor
55 First bent part
56 Second bent part
60 Insulation member
61 Heat generation element housing part
62 Conductor-facing recess
63 Slit
67 (69) Housing through hole (housing recess)
68 (69) Housing hole (housing recess)
80 Heat generation element
81 Insulation substrate (substrate)
82 Resistive layer
83 Metallic layer
83A First metallic layer
83B Second metallic layer
83C Intermediate metallic layer
88, 89 Molten material
90 Power supply member (current-carrying member)
91 First terminal
92 Second terminal
93 Holding metallic layer
100, 110, 120, 130, 140, 150, 160, 170, 180 Protective element
201 Resistive layer
202 Insulation substrate
211 First Electrode
212 Second electrode
213 Third electrode
214, 214A Fourth electrode
215 Fifth electrode
216, 216A, 216B Sixth electrode
221 First metal
222 Second metal
300, 310, 320, 330, 340 Protective element
301, 311A, 311B, 321, 331, 341 Filler
400, 410 Protective element
401, 411A, 411B Filter
500 Protective element
501 Insulation member
502 Insulation case
503 Glass fiber
600, 610, 620, 630, 640, 650 Fuse element
605 Overlapping part
606, 626 Corner
611, 621, 631, 641A, 641B, 641C, 651 First conductive material
612, 622, 632, 642, 652 Second conductive material
613, 623, 633, 643, 653 Third conductive material
A Corner angle
G Gap
G1 First gap
G2 Second gap
L1, L2 Distance
T1, T2 Thickness dimension
W1 Width dimension of first conductive material
W2 Width dimension of second conductive material

## Claims

1. A protective element comprising:
a first terminal and a second terminal arranged apart from each other in a front-and-rear direction;
a fuse element arranged between the first terminal and the second terminal to electrically connect the first terminal and the second terminal and configured to fuse when a predetermined electric current or more flows therethrough;
an insulation member arranged to face the fuse element from both sides in an up-and-down direction orthogonal to the front-and-rear direction;
a heat generation element arranged to overlap the fuse element in the up-and-down direction;
a power supply member configured to supply the electric current to the heat generation element; and
an insulation case configured to house a part of the first terminal, a part of the second terminal, the fuse element, the insulation member, the heat generation element, and a part of the power supply member,
wherein the heat generation element generates heat by receiving the electric current from the power supply member and melts and fuses at least a part of the fuse element.

2. The protective element according to claim 1,
wherein the fuse element includes
a fusible conductor laminated with the heat generation element; and
a metallic conductor configured to connect the first terminal or the second terminal and the fusible conductor, and
wherein the fusible conductor has a lower melting temperature than the metallic conductor.

3. The protective element according to claim 2, wherein the fusible conductor has a higher electrical resistivity than the metallic conductor.

4. The protective element according to claim 2, wherein the metallic conductor includes a cutoff part having a higher electrical resistance than the fusible conductor.

5. The protective element according to claim 4, wherein a cross-sectional area of a cross-section of the cutoff part perpendicular to a current-carrying direction in which the electric current flows is smaller than a cross-sectional area of a part of the metallic conductor excluding the cutoff part.

6. The protective element according to any one of claims 2 to 5, wherein the fusible conductor is composed of a monolayer body of a low-melting-point metallic layer containing Sn.

7. The protective element according to any one of claims 2 to 5, wherein the fusible conductor has a laminate in which a low-melting-point metallic layer containing Sn and a high-melting-point metallic layer containing Ag or Cu are laminated.

8. The protective element according to claim 7,
wherein the laminate has one or more low-melting-point metallic layers and two or more high-melting-point metallic layers, and
wherein the low-melting-point metallic layer is arranged between the high-melting-point metallic layers.

9. The protective element according to any one of claims 1 to 5, wherein a dimension between the insulation member and the fuse element in the up-and-down direction is 2 mm or less.

10. The protective element according to any one of claims 1 to 5,
wherein the insulation member has a concave heat generation element housing part recessed from a surface of the insulation member facing the fuse element, and
wherein the concave heat generation element is arranged in the heat generation element housing part.

11. The protective element according to any one of claims 2 to 5,
wherein the insulation member has a concave conductor-facing recess recessed from a surface of the insulation member facing the fuse element, and
wherein at least a part of the fusible conductor melted by heat generated by the heat generation element is arranged in the concave conductor-facing recess.

12. The protective element according to any one of claims 1 to 5,
wherein the insulation member has a slit recessed from a surface of the insulation member facing the fuse element and penetrating the insulation member or a groove-shaped recess recessed from the surface, and
wherein the slit or the recess extends in a direction perpendicular to a current-carrying direction in which the electric current flows through the fuse element.

13. The protective element according to any one of claims 1 to 5, wherein at least two insulation members are provided on an upper side and a lower side of the fuse element.

14. The protective element according to claim 13, wherein at least one of the insulation members is formed integrally with a part of the insulation case.

15. The protective element according to any one of claims 1 to 5, wherein the heat generation element is provided on both sides of the fuse element in the up-and-down direction.

16. The protective element according to any one of claims 1 to 5, wherein the insulation case has an internal pressure buffering space formed inside the insulation case and communicating with a space where the fuse element is arranged.

17. The protective element according to any one of claims 2 to 5,
wherein the heat generation element includes
a substrate;
a resistive layer laminated on the substrate; and
a metallic layer laminated on the substrate and facing the fuse element in the up-and-down direction, and
wherein a part of the fusible conductor is arranged in a part of a gap in the up-and-down direction formed between the metallic conductor and the metallic layer and is sandwiched between the metallic conductor and the metallic layer in the up-and-down direction.

18. The protective element according to claim 17, wherein a molten material of the fusible conductor melted due to heat generated by the heat generation element flows while penetrating the gap due to capillary action and the fusible conductor fuses.

19. The protective element according to claim 17,
wherein a plurality of metallic conductors are provided on the fuse element, and each of the plurality of metallic conductors is the metallic conductor,
wherein the plurality of metallic conductors include
a first metallic conductor configured to connect the first terminal and a first end of the fusible conductor; and
a second metallic conductor configured to connect the second terminal and a second end of the fusible conductor,
wherein the first metallic conductor, the fusible conductor, and the second metallic conductor are connected in series in that order to form a current-carrying path of the fuse element,
wherein a plurality of metallic layers are provided on the heat generation element, and each of the plurality of metallic layers is the metallic layer,
wherein the plurality of metallic layers include
a first metallic layer arranged with a first gap from the first metallic conductor in the up-and-down direction, and
a second metallic layer arranged with a second gap from the second metallic conductor in the up-and-down direction,
wherein the first end of the fusible conductor is arranged in a part of the first gap and is sandwiched between the first metallic conductor and the first metallic layer in the up-and-down direction, and
wherein the second end of the fusible conductor is arranged in a part of the second gap and is sandwiched between the second metallic conductor and the second metallic layer in the up-and-down direction.

20. The protective element according to claim 19, wherein a molten material near the first end of the fusible conductor melted by heat generated by the heat generation element flows while penetrating the first gap by capillary action, a molten material near the second end of the fusible conductor flows while penetrating the second gap by capillary action, and the fusible conductor fuses.

21. The protective element according to claim 17,
wherein the metallic layer is arranged on one of a pair of plate surfaces of the substrate, and
wherein the resistive layer is arranged on the other of the pair of plate surfaces.

22. The protective element according to claim 19,
wherein the plurality of metallic layers further include an intermediate metallic layer arranged between the first metallic layer and the second metallic layer, and
wherein an intermediate part of the fusible conductor located between the first end and the second end is connected to the intermediate metallic layer.

23. The protective element according to claim 17, wherein the metallic layer, the fusible conductor, and the metallic conductor are connected to each other by solder.

24. The protective element according to any one of claims 2 to 5, wherein at least a part of the fusible conductor, or at least a part of the fusible conductor and at least a part of the metallic conductor fuse, when the electric current equal to or greater than a predetermined value flows through the fuse element.

25. The protective element according to any one of claims 1 to 5,
wherein the fuse element includes
a first bent part arranged between the first terminal and the insulation member in the front-and-rear direction; and
a second bent part arranged between the second terminal and the insulation member in the front-and-rear direction,
wherein a distance between the first terminal and the first bent part in the front-and-rear direction is greater than a thickness dimension of the first terminal in the up-and-down direction, and
wherein a distance between the second terminal and the second bent part in the front-and-rear direction is greater than a thickness dimension of the second terminal in the up-and-down direction.

26. The protective element according to claim 25, wherein at least one of the first bent part and the second bent part has a crank shape.

27. The protective element according to any one of claims 1 to 5,
wherein the insulation case includes at least two holding members arranged on both sides of the fuse element in the up-and-down direction, and
wherein a part of the first terminal, a part of the second terminal, and the fuse element are arranged between the two holding members.

28. The protective element according to claim 27, wherein one or both of the two holding members are formed integrally with the insulation member.

29. The protective element according to claim 27,
wherein the insulation case has a cover configured to house at least the two holding members, and
wherein the cover holds at least the two holding members in a fixed state.

30. The protective element according to any one of claims 1 to 5, wherein the insulation member is made of a resin having a tracking resistance index (CTI) of 500 V or more.

31. The protective element according to claim 30, wherein the insulation member is made of a polyamide-based resin material or a fluorine-based resin material.

32. The protective element according to claim 1, wherein the fuse element is made of Cu or Ag or contains Cu or Ag as a main component.

33. The protective element according to any one of claims 2 to 5,
wherein the fusible conductor is a laminate including a low-melting-point metallic layer and a high-melting-point metallic layer,
wherein a pair of metallic conductors are connected to both ends of the fusible conductor in a current-carrying direction in which the electric current flows through the fuse element, and
wherein each of the metallic conductors is made of Cu or Ag or contains Cu or Ag as a main component.

34. The protective element according to claim 33,
wherein the low-melting-point metallic layer is made of Sn or contains Sn as a main component, and
wherein the high-melting-point metallic layer is made of Cu or Ag or contains Cu or Ag as a main component.

35. The protective element according to claim 1, wherein the fuse element includes
a fusible conductor laminated with the heat generation element; and
a cutoff part having a higher electrical resistance than the fusible conductor.

36. The protective element according to any one of claims 1 to 5,
wherein the heat generation element includes
a substrate;
a resistive layer laminated on the substrate; and
a metallic layer laminated on the substrate and facing a part of the fuse element, and
wherein the resistive layer extends in a direction intersecting a current-carrying direction in which the electric current flows through the fuse element and is arranged on a part of the substrate in the front-and-rear direction.

37. The protective element according to claim 36, wherein the resistive layer is arranged on an end of the substrate in the front-and-rear direction.

38. The protective element according to claim 36, wherein a dimension of the resistive layer in the front-and-rear direction is equal to or less than half a dimension of the substrate in the front-and-rear direction.

39. The protective element according to claim 36, wherein a plurality of resistive layers are provided on the substrate at intervals from each other in the front-and-rear direction, and each of the plurality of resistive layers is the resistive layer.

40. The protective element according to claim 36,
wherein the heat generation element has a holding metallic layer laminated on the substrate and facing a fuse element side in the up-and-down direction,
wherein the metallic layer extends in a direction intersecting the current-carrying direction on the substrate, and
wherein the holding metallic layer is connected to an end of the metallic layer in a direction intersecting the current-carrying direction and is capable of holding the molten material of the fuse element.

41. The protective element according to claim 40, wherein the insulation member facing the fuse element from a lower side has a housing recess capable of housing a molten material of the fuse element held by the holding metallic layer.

42. The protective element according to claim 40,
wherein a plurality of metallic layers are provided on the substrate at intervals from each other in the front-and-rear direction, and each of the plurality of metallic layers is the metallic layer,
wherein the plurality of metallic layers include
a first metallic layer arranged on one end of the substrate in the front-and-rear direction; and
a second metallic layer arranged on the other end of the substrate in the front-and-rear direction, and
wherein the holding metallic layer is connected to the first metallic layer or the second metallic layer.

43. The protective element according to claim 40,
wherein a plurality of metallic layers are provided on the substrate at intervals from each other in the front-and-rear direction, and each of the plurality of metallic layers is the metallic layer,
wherein the plurality of metallic layers include
a first metallic layer arranged on one end of the substrate in the front-and-rear direction;
a second metallic layer arranged on the other end of the substrate in the front-and-rear direction; and
an intermediate metallic layer arranged between the first metallic layer and the second metallic layer in the front-and-rear direction, and
wherein the holding metallic layer is connected to any one of the intermediate metallic layer, the first metallic layer, and the second metallic layer.

44. The protective element according to claim 43, wherein the intermediate metallic layer, the first metallic layer, and the second metallic layer are electrically isolated from the resistive layer.

45. A protective element comprising:
an insulation substrate having a resistive layer;
a fusible conductor mounted on the insulation substrate;
a first electrode and a second electrode connected to the resistive layer;
a third electrode arranged on the insulation substrate;
a fifth electrode connected between the first electrode and the third electrode; and
a first metal formed on the third electrode and the fifth electrode,
wherein a thickness of the fifth electrode is thinner than a thickness of the third electrode, and
wherein the fusible conductor is cut off due to heat generated by the resistive layer and a resistance value between the third electrode and the second electrode increases by 10 times or more due to dissolution of the fifth electrode caused by melting of the first metal.

46. A protective element comprising:
an insulation substrate having a resistive layer;
a fusible conductor mounted on the insulation substrate;
a first electrode and a second electrode connected to the resistive layer;
a third electrode and a fourth electrode arranged on the insulation substrate;
a fifth electrode connected between the first electrode and the third electrode;
a sixth electrode connected between the second electrode and the fourth electrode;
a first metal formed on the third electrode and the fifth electrode; and
a second metal formed on the fourth electrode and the sixth electrode,
wherein a thickness of the fifth electrode is thinner than a thickness of the third electrode,
wherein a thickness of the sixth electrode is thinner than a thickness of the fourth electrode, and
wherein the fusible conductor is cut off due to heat generated by the resistive layer and a resistance value between the third electrode and the fourth electrode increases by 10 times or more due to at least one of dissolution of the fifth electrode caused by melting of the first metal and dissolution of the sixth electrode caused by melting of the second metal.

47. The protective element according to claim 45 or 46,
wherein the first metal is tin or an alloy containing tin as a main component, and
wherein the fifth electrode is a metal made of silver or copper or an alloy containing silver or copper as a main component.

48. The protective element according to claim 46, wherein a current-carrying member for the resistive layer is connected to the third electrode and the fourth electrode.

49. A protective element comprising:
a first terminal and a second terminal arranged apart from each other in a first direction;
a fuse element arranged between the first terminal and the second terminal to electrically connect the first terminal and the second terminal and configured to fuse when a predetermined electric current or more flows;
an insulation member arranged to face the fuse element from both sides in a second direction perpendicular to the first direction;
an insulation case configured to house a part of the first terminal, a part of the second terminal, the fuse element, and the insulation member, wherein an internal pressure buffering space communicating with a space where the fuse element is arranged is formed inside the insulation case; and
a filler arranged in at least a part of the internal pressure buffering space and configured to be in contact with a surface of at least one insulation member opposite a surface facing the fuse element.

50. The protective element according to claim 49, further comprising a heat generation element arranged to overlap the fuse element in the second direction.

51. The protective element according to claim 50,
wherein the fuse element includes
a fusible conductor laminated with the heat generation element; and
a metallic conductor configured to connect the first terminal or the second terminal and the fusible conductor, and
wherein the fusible conductor has a lower melting temperature than the metallic conductor.

52. The protective element according to any one of claims 49 to 51, further comprising:
a heat generation element arranged to overlap the fuse element in the second direction; and
a power supply member configured to supply an electric current to the heat generation element,
wherein the insulation case houses a part of the power supply member and the heat generation element.

53. The protective element according to claim 52, wherein the heat generation element generates heat by receiving the electric current from the power supply member and melts and fuses at least a part of the fuse element.

54. The protective element according to any one of claims 49 to 51,
wherein a through hole penetrating the insulation member in the second direction is formed in the insulation member, and
wherein the filler penetrating the through hole is in contact with a part of the fuse element.

55. A protective element comprising:
a first terminal and a second terminal arranged apart from each other in a first direction;
a fuse element arranged between the first terminal and the second terminal to electrically connect the first terminal and the second terminal and configured to fuse when a predetermined electric current or more flows;
an insulation member arranged to face the fuse element from both sides in a second direction perpendicular to the first direction;
an insulation case configured to house a part of the first terminal, a part of the second terminal, the fuse element, and the insulation member, wherein an internal pressure buffering space communicating with a space where the fuse element is arranged is formed inside the insulation case; and
a filter arranged in at least a part of the internal pressure buffering space and configured to be in contact with a surface of at least one insulation member opposite a surface facing the fuse element.

56. The protective element according to claim 55, wherein the filter is made of a fiber material.

57. The protective element according to claim 55 or 56, wherein the filter is prevented from being in close contact with the fuse element.

58. The protective element according to claim 55 or 56, wherein the fuse element is a fusible conductor and has a lower melting point than the first terminal and the second terminal.

59. The protective element according to claim 58, wherein the fusible conductor is a laminate including a low-melting-point metallic layer and a high-melting-point metallic layer.

60. The protective element according to claim 59,
wherein the low-melting-point metallic layer is made of Sn or contains Sn as a main component, and
wherein the high-melting-point metallic layer is made of Ag or Cu or contains Ag or Cu as a main component.

61. The protective element according to claim 58, further comprising a metallic conductor configured to connect the first terminal or the second terminal and the fusible conductor,
wherein a melting point of the metallic conductor is higher than a melting point of the fuse element.

62. The protective element according to claim 58, wherein the fuse element has the fusible conductor laminated with a heat generation element.

63. The protective element according to claim 62, wherein the heat generation element generates heat by receiving the electric current from a power supply member, melts at least a part of the fuse element, and fuses the fuse element.

64. A protective element comprising:
a first terminal and a second terminal arranged apart from each other in a first direction;
a fuse element arranged between the first terminal and the second terminal to electrically connect the first terminal and the second terminal and configured to fuse when a predetermined electric current or more flows;
an insulation member arranged to face the fuse element from both sides in a second direction perpendicular to the first direction; and
an insulation case configured to house a part of the first terminal, a part of the second terminal, the fuse element, and the insulation member, wherein an internal pressure buffering space communicating with a space where the fuse element is arranged is formed inside the insulation case,
wherein at least one of the insulation member and the insulation case has a carbon material content of less than 0.1 wt%.

65. The protective element according to claim 64, wherein at least one of the insulation member and the insulation case has a glass fiber content of 10 wt% or more.

66. A fuse element comprising:
a first conductive material; and
a second conductive material formed of a material different from that of the first conductive material,
wherein the first conductive material and the second conductive material are connected in series to each other in a current-carrying direction,
wherein the first conductive material has a higher electrical resistance than the second conductive material in the current-carrying direction,
wherein, when viewed in a thickness direction perpendicular to the current-carrying direction, an overlapping part is provided in a part in which the first conductive material and the second conductive material are connected to each other,
wherein the first conductive material has a shorter length in a width direction perpendicular to the current-carrying direction and the thickness direction in the overlapping part than the second conductive material,
wherein the second conductive material has at least one corner on an outer side of the overlapping part in the width direction, and
wherein, when viewed in the thickness direction, at least the one corner has an angle of 100° or less.

67. The fuse element according to claim 66, wherein each of the first conductive material and the second conductive material has a plate shape.

68. The fuse element according to claim 66 or 67, wherein a plurality of first conductive materials are arranged side by side in a width direction.

69. The fuse element according to claim 66 or 67, further comprising a third conductive material,
wherein the third conductive material, the first conductive material, and the second conductive material are connected in series in the current-carrying direction in that order.

70. The fuse element according to claim 69, wherein the third conductive material is formed of the same material as the second conductive material.

71. The fuse element according to claim 66 or 67, wherein the first conductive material is a laminate including a low-melting-point metallic layer and a high-melting-point metallic layer.

72. A protective element comprising:
a first conductive material; and
a second conductive material formed of a material different from that of the first conductive material,
wherein the first conductive material and the second conductive material are connected in series to each other in a current-carrying direction,
wherein the first conductive material has a higher electrical resistance than the second conductive material in the current-carrying direction,
wherein, when viewed in a thickness direction perpendicular to the current-carrying direction, an overlapping part is provided in a part in which the first conductive material and the second conductive material are connected to each other,
wherein the first conductive material has a shorter length in a width direction perpendicular to the current-carrying direction and the thickness direction in the overlapping part than the second conductive material,
wherein the second conductive material has at least one corner on an outer side of the overlapping part in the width direction, and
wherein, when viewed in the thickness direction, at least the one corner has an angle of 100° or less.

73. A protective element according to claim 72, wherein each of the first conductive material and the second conductive material has a plate shape.

74. The protective element according to claim 72 or 73, wherein a plurality of first conductive materials are arranged in the width direction.

75. The protective element according to claim 72 or 73, further comprising a third conductive material,
wherein the third conductive material, the first conductive material, and the second conductive material are connected in series in the current-carrying direction in that order.

76. The protective element according to claim 75, wherein the third conductive material is formed of the same material as the second conductive material.

77. The protective element according to claim 72 or 73, wherein the first conductive material is a laminate including a low-melting-point metallic layer and a high-melting-point metallic layer.
